# DEMANDE DE BREVET EUROPEEN

(11) **EP 2 987 691 A1**
(43) Date de publication de la demande: **24.02.2016**
(21) Numéro de dépôt: 15177039.3
(22) Date de dépôt: 16.07.2015
(51) Int. Cl.: B60S 1/38

(54) **BALAI PLAT CARÉNÉ D'ESSUIE-GLACE**

(30) Priorité: 17.07.2014 FR 1456921; 16.09.2014 FR 1458713
(71) Demandeur: Valeo Systèmes d'Essuyage, 78321 Le Mesnil Saint Denis (FR)
(72) Inventeur: GAUCHER, Vincent, 63720 Ennezat (FR); HOUSSAT, Stéphane, 63112 Blanzat (FR); POTON, Eric, 63430 Pont du Château (FR)
(74) Mandataire: Callu Danseux, Violaine

(57) **Abrégé**

Balai plat caréné (1) d'essuie-glace, en particulier de véhicule, caractérisé en ce qu'il comprend : une lame longitudinale (8) d'essuyage, au moins une vertèbre longitudinale (6) de rigidification, un organe longitudinal (7) de maintien de ladite lame d'essuyage et de ladite vertèbre de rigidification, un carénage longitudinal (2, 3) comportant deux capots d'extrémité (3) et une monture centrale (2) s'étendant entre les capots d'extrémité et étant reliés à ces derniers, la monture comprenant des moyens de fixation à ladite vertèbre de rigidification ou audit organe de maintien de cette vertèbre, et chaque capot comprenant des moyens de guidage en translation de parties d'extrémité dudit organe.

## Description

### DOMAINE TECHNIQUE

La présente invention concerne notamment un balai plat caréné d'essuie-glace.

### ETAT DE L'ART

Typiquement, un balai d'essuie-glace d'une vitre telle que le pare-brise d'un véhicule automobile comprend notamment une lame d'essuyage, en général en caoutchouc, destinée à frotter contre la vitre du véhicule pour évacuer de l'eau en l'amenant en dehors du champ de vision du conducteur. Le balai est porté par un bras qui est entraîné par un moteur dans un mouvement de va-et-vient angulaire.

On connaît notamment deux technologies de balai d'essuie-glace, une technologie de balai à palonniers, sous la forme d'étriers articulés qui tiennent la lame d'essuyage en plusieurs endroits discrets, et une autre technologie de balai plat (de l'anglais *flat blade*), sous la forme d'un ensemble semi-rigide qui maintient la lame d'essuyage sur toute sa longueur.

Dans les deux solutions, le balai est rattaché au bras tournant de l'essuie-glace par un ensemble constitué d'un connecteur mécanique et d'un adaptateur. Le connecteur est une pièce qui est fixée directement sur la structure du balai ou directement sur le balai plat, l'adaptateur étant une pièce intermédiaire qui permet la fixation du connecteur sur le bras de l'essuie-glace. Ces deux pièces sont reliées l'une à l'autre par un axe transversal qui autorise leur rotation relative.

La technologie de balai à palonniers est bien connue de l'homme du métier. La demande FR-A1-2 681 028 de la Demanderesse décrit par exemple un balai d'essuie-glace à palonniers dissymétriques. Un balai à palonniers présente l'avantage d'appliquer la lame d'essuyage contre la vitre du véhicule avec une pression qui est relativement homogène sur toute la longueur du balai. Cependant, cette technologie présente des inconvénients tels, notamment, que son encombrement.

La technologie de balai plat est également bien connue de l'homme du métier. Dans ce cas, le balai est équipé d'au moins une vertèbre longitudinale qui rigidifie la lame d'essuyage, de manière à favoriser l'application de cette lame sur la vitre du véhicule. Cette vertèbre est cintrée et son cintrage permet de maintenir la lame plaquée contre la vitre, même aux extrémités longitudinales du balai.

On a déjà proposé de caréner un balai d'essuie-glace afin notamment d'optimiser son aérodynamisme. Il est ainsi connu d'équiper un balai à palonniers d'un carénage.

La Demanderesse a cherché à perfectionner un balai plat d'essuie-glace en l'équipant d'un carénage, et propose ainsi un balai plat caréné d'essuie-glace.

### EXPOSE DE L'INVENTION

Dans la présente demande, on entend par balai plat, un balai comportant notamment au moins une vertèbre de cintrage. Cette vertèbre de cintrage est un moyen de répartition d'un effort sur la longueur du balai, un tel effort étant généré par le bras d'entraînement du balai en vue de plaquer celui-ci sur la surface à essuyer.

On entend par balai plat caréné, un balai plat, par exemple tel qu'évoqué ci-dessus, équipé d'un carénage. On entend par carénage, un équipement extérieur en général profilé. Un tel carénage couvre dans la largeur et la longueur la structure du balai plat.

L'invention présente plusieurs aspects dont les caractéristiques peuvent naturellement être combinées les unes avec les autres.

Selon un premier aspect, l'invention propose un embout d'extrémité pour un balai plat caréné d'essuie-glace, en particulier de véhicule, comportant un premier logement configuré pour recevoir une extrémité d'une vertèbre de rigidification du balai, caractérisé en ce qu'il comprend, sur au moins une de ses faces externes, au moins une butée en saillie qui est configurée pour coopérer avec un capot d'extrémité du balai.

Ceci est particulièrement utile dans le cas où le capot d'extrémité est susceptible de se déplacer vis-à-vis du balai plat, et en particulier vis-à-vis de l'embout d'extrémité du balai plat. La course de déplacement du capot d'extrémité vis-à-vis de l'embout d'extrémité est ainsi limitée par les butées en saillie de l'embout.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- l'embout comprend deux faces externes latérales sensiblement parallèles reliées entre elles par une face externe supérieure,
- la face externe supérieure comprend une butée en saillie,
- au moins l'une des faces externes latérales comprend une butée en saillie,
- la ou chaque butée a une face d'appui orientée dans une direction sensiblement parallèle à un axe d'allongement de l'embout,
- la ou chaque butée comprend une partie inclinée formant une rampe configurée pour coopérer avec ledit capot d'extrémité,
- le premier logement a une forme allongée et comprend une extrémité longitudinale ouverte pour l'engagement de l'extrémité de la vertèbre dans ledit logement, et une extrémité longitudinale fermée,
- l'embout comporte un second logement configuré pour recevoir une extrémité d'une lame d'essuyage du balai et/ou un troisième logement configuré pour recevoir une extrémité d'un organe de maintien de cette lame.

L'invention propose également un capot d'extrémité pour un balai plat caréné d'essuie-glace, en particulier de véhicule, ce capot ayant une forme générale allongée et comportant à une extrémité longitudinale deux ailes latérales sensiblement parallèles définissant entre elles un espace configuré pour recevoir un embout d'extrémité du balai, caractérisé en ce qu'il comprend au moins une butée en saillie qui est configurée pour coopérer avec ledit embout d'extrémité.

On notera que le carénage, et en particulier la monture centrale et ses capots d'extrémité, est un élément rigide, c'est-à-dire dont la tenue ne fait pas appel à un autre élément de structure du balai pour en conserver la forme, comme c'est le cas par exemple de la lame d'essuyage.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- les ailes latérales comprennent des faces internes sensiblement parallèles, au moins l'une de ces faces internes comportant une butée en saillie,
- ladite extrémité longitudinale comprend une aile transversale de liaison desdites ailes latérales, ladite aile transversale définissant une butée en saillie,
- la ou chaque butée a une face d'appui orientée dans une direction sensiblement parallèle à un axe d'allongement du capot,
- la ou chaque butée comprend une partie inclinée formant une rampe configurée pour coopérer avec l'embout d'extrémité,

L'invention propose également un ensemble comportant un embout d'extrémité et un capot d'extrémité tels que décrits ci-dessus.

L'invention propose également un balai plat caréné d'essuie-glace, en particulier de véhicule, comprenant un embout d'extrémité et/ou un capot d'extrémité tels que décrits ci-dessus.

Selon un second aspect, l'invention concerne un ensemble comportant une monture centrale et un capot d'extrémité pour un balai plat caréné d'essuie-glace, en particulier de véhicule, la monture comportant des moyens de fixation à une vertèbre de rigidification du balai ou à un organe de maintien de cette vertèbre, la monture centrale formant un élément et le capot d'extrémité formant un autre élément, l'un desdits éléments portant des moyens d'articulation de l'autre desdits éléments autour d'au moins un axe, caractérisé en ce que lesdits éléments comportent des butées en saillie qui sont configurés pour coopérer ensemble et définir une position extrême de pivotement des éléments l'un vis-à-vis de l'autre autour dudit axe.

La monture centrale du carénage peut être assimilée à un connecteur de la technique antérieure du fait qu'elle comprend des moyens de fixation au balai plat, et en particulier à sa vertèbre ou à son organe de maintien. La monture et l'embout d'extrémité sont articulés et peuvent pivoter l'un par rapport à l'autre. Les butées en saillie permettent de limiter le débattement angulaire et définissent précisément une position extrême de pivotement.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- un premier des éléments comprend un doigt en saillie articulé vis-à-vis d'un second des éléments,
- le doigt porte un axe d'articulation ou comprend un orifice traversé par un axe d'articulation,
- l'axe d'articulation est défini par des tenons portés par le doigt et logés au moins en partie dans des évidements dudit second élément, ou portés par le second élément et logés au moins en partie dans des évidements ou un orifice traversant du doigt,
- le doigt comporte une extrémité libre formant l'une desdites butées,
- l'extrémité libre du doigt comprend au moins un chanfrein définissant une face de butée,
- le doigt a une forme sensiblement parallélépipédique allongée et comprend une face longitudinale supérieure sensiblement parallèle audit axe et sur laquelle est formée au moins l'une desdites butées,
- le second élément comprend au moins deux parois longitudinales latérales définissant entre elles un espace configuré pour recevoir ledit doigt, au moins l'une de ces parois comportant au moins l'une desdites butées qui s'étend dans ledit espace,
- la ou une butée du second élément est formé par une nervure longitudinale ou transversale,
- un bord longitudinal d'une première des parois longitudinales du second élément est relié à un bord longitudinal d'une seconde des parois longitudinales du second élément de façon à ce que le second élément ait une forme sensiblement de dièdre,
- la ou une butée s'étend dans ledit espace depuis une zone de liaison desdites parois longitudinales,
- la ou une butée du second élément comprend un bord libre ou une extrémité libre chanfreinée définissant une face d'appui,
- ledit premier élément est la monture centrale et ledit second élément est le capot d'extrémité,
- au moins un desdits éléments comprend ou forme un déflecteur d'air, c'est-à-dire aérodynamique.

L'invention propose également un balai plat caréné d'essuie-glace, en particulier de véhicule, comprenant un ensemble tel que décrit ci-dessus.

Selon un troisième aspect, l'invention concerne une monture centrale pour un balai plat caréné d'essuie-glace, en particulier de véhicule, comportant des moyens de fixation à une vertèbre de rigidification du balai ou à un organe de maintien de cette vertèbre, et une fenêtre configurée pour recevoir un adaptateur de liaison du balai à un bras d'entraînement dudit balai, ladite fenêtre ayant une forme allongée et s'étendant entre deux parois latérales longitudinales entre lesquelles s'étend un axe transversal d'encliquetage élastique et d'articulation de l'adaptateur, caractérisée en ce que la fenêtre est configurée pour autoriser le montage de l'adaptateur et son encliquetage sur ledit axe dans une première position dans laquelle une première extrémité longitudinale de l'adaptateur est orientée vers une première extrémité longitudinale de la fenêtre, ainsi que dans une seconde position dans laquelle ladite première extrémité longitudinale de l'adaptateur est orientée vers une seconde extrémité longitudinale opposée de la fenêtre.

Comme dans la technique antérieure, le balai est destiné à être équipé d'un adaptateur de liaison du bras au balai et en particulier à la monture du balai qui forme un connecteur, comme décrit dans ce qui précède. L'invention est ici particulièrement avantageuse car elle autorise le montage de l'adaptateur dans un sens ou dans l'autre dans la fenêtre de la monture. Il est ainsi envisageable de monter le même type de balai sur les deux bras d'essuyage d'un pare-brise de véhicule.

Dans la présente demande, on entend par encliquetage élastique, un emboîtage élastique, aussi appelé clipsage.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- la fenêtre présente une symétrie par rapport à un plan longitudinal médian,
- la fenêtre présente une symétrie par rapport à un plan transversal médian,
- lesdites parois latérales longitudinales comportent sur des faces internes des encoches ou évidements de réception et de déplacement de portions de l'adaptateur,
- la monture comprend un déflecteur aérodynamique,
- la monture a une forme allongée et comprend à chacune de ses extrémités longitudinales des moyens d'articulation à un capot d'extrémité du balai,
- les moyens de fixation comprennent au moins une paire de crochets latéraux s'étendant à distance l'un de l'autre et définissant chacun une encoche longitudinale configurée pour recevoir par coulissement longitudinal ladite vertèbre,
- les moyens de fixation comprennent deux paires de crochets qui sont à distance axiale l'un de l'autre,
- un plan transversal passant par ledit axe passe sensiblement entre les deux paires de crochets et à égale distance de ceux-ci.

L'invention propose également un ensemble comportant une monture centrale telle que décrite ci-dessus et un adaptateur de liaison à un bras d'entraînement du balai.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- l'adaptateur comprend deux ailes latérales sensiblement parallèles et reliées entre elles par une portion médiane définissant un logement cylindrique de réception de l'axe de la monture par encliquetage élastique,
- au moins l'une desdites ailes latérales de l'adaptateur comporte un ergot orienté du côté opposé à l'autre aile latérale et destiné à être logé dans une encoche ou évidement de la monture.

L'invention concerne encore un balai plat caréné d'essuie-glace, en particulier de véhicule, comprenant une monture centrale ou un ensemble tel que décrit ci-dessus.

Selon un quatrième aspect, l'invention concerne un ensemble comportant une monture centrale pour un balai plat caréné d'essuie-glace, en particulier de véhicule, et un adaptateur de liaison du balai à un bras d'entraînement dudit balai, la monture comprenant des moyens de fixation à une vertèbre de rigidification du balai ou à un organe de maintien de cette vertèbre, la monture comportant en outre une fenêtre de logement dudit adaptateur, cette fenêtre ayant une forme allongée et s'étendant entre deux parois latérales longitudinales de la monture, entre lesquelles s'étend un axe transversal d'articulation de l'adaptateur, l'adaptateur ayant une forme générale allongée et comportant deux ailes latérales longitudinales reliées entre elles par une portion médiane définissant un logement cylindrique de réception de l'axe par encliquetage élastique, caractérisé en ce que, en position de montage, une première circonférence centrée sur ledit axe et passant sensiblement par une première extrémité longitudinale de l'adaptateur a un rayon maximal qui est inférieur à un rayon minimal d'une seconde circonférence centrée sur ledit axe et passant sensiblement par les moyens de fixation de la monture.

Ceci permet d'augmenter le débattement angulaire de l'adaptateur autour de l'axe transversal. En effet, l'extrémité de l'adaptateur est conçue pour ne pas pouvoir buter contre les moyens de fixation de la monture lors de la rotation de l'adaptateur autour de la base.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- le rayon maximal est compris entre 10 et 20mm, de préférence entre 12 et 18mm, et plus préférentiellement entre 14 et 16mm,
- le rayon minimal est supérieur d'au moins 1 mm au rayon maximal,
- les moyens de fixation comprennent au moins une paire de crochets latéraux s'étendant à distance l'un de l'autre et comportant chacun une encoche longitudinale configurée pour recevoir par coulissement longitudinal ladite vertèbre,
- les moyens de fixation comprennent deux paires de crochets qui sont à distance axiale l'un de l'autre,
- un plan transversal passant par ledit axe passe sensiblement entre les deux paires de crochets et à égale distance de ceux-ci,
- l'adaptateur comporte, au niveau de sa seconde extrémité longitudinale un ergot latéral de butée configuré pour coopérer avec la monture et définir une position extrême de pivotement de l'adaptateur vis-à-vis de la monture autour dudit axe,
- ladite fenêtre présente une symétrie par rapport à un plan longitudinal médian,
- ladite fenêtre présente une symétrie par rapport à un plan transversal médian,
- lesdites parois latérales longitudinales comportent sur des faces internes des encoches ou évidements de réception et de déplacement d'au moins un ergot de l'adaptateur,
- la monture comprend un déflecteur aérodynamique,
- la monture a une forme allongée et comprend à chacune de ses extrémités longitudinales des moyens d'articulation à un capot d'extrémité du balai,

L'invention concerne également un balai plat caréné d'essuie-glace, en particulier de véhicule, comprenant un ensemble tel que décrit ci-dessus.

Selon un cinquième aspect, l'invention concerne un capot d'extrémité pour un balai plat caréné d'essuie-glace, en particulier de véhicule, comprenant des moyens de guidage en coulissement configurée pour coopérer avec un organe longitudinal de retenue d'une lame d'essuyage du balai, caractérisé en ce que ces moyens de guidage comportent deux crochets latéraux sensiblement en L configurés pour s'étendre de chaque côté dudit organe, chaque crochet comportant une partie sensiblement verticale dont l'extrémité inférieure est reliée à une partie sensiblement horizontale s'étendant du côté de l'autre crochet, la partie verticale d'au moins l'un desdits crochets comportant des moyens d'appui ponctuel sur ledit organe. Dans cet aspect de l'invention, l'organe longitudinal de retenue pourrait être une ou plusieurs vertèbres constitutives du balai.

Les appuis ponctuels des crochets sur l'organe permettent de limiter les frottements et d'optimiser le guidage de l'organe. Ils peuvent permettre en outre de contourner le problème de tolérance de fabrication des pièces.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- les parties verticales des deux crochets comprennent des moyens d'appui ponctuel sur ledit organe,
- la partie verticale du ou de chaque crochet comprend un ergot dont l'extrémité libre est configurée pour coopérer avec ledit organe,
- l'ergot ou chaque ergot a une forme générale arrondie,
- l'ergot est situé sensiblement au milieu de la partie verticale de la ou de chaque crochet,
- les extrémités supérieures des parties verticales des crochets sont reliées ensemble par une paroi supérieure comportant des moyens d'appui ponctuel sur ledit organe,
- les moyens d'appui ponctuel de la paroi supérieure comprennent au moins un ergot,
- l'ergot de la paroi supérieure a une forme générale arrondie,
- l'ergot est situé sensiblement au milieu de la paroi supérieure,
- les crochets, et éventuellement ladite paroi supérieure, sont définis par une paroi transversale du capot,
- le capot a en section une forme sensiblement de dièdre et comprend deux parois longitudinales reliées entre elles et définissant entre elles un logement de montage dudit organe,
- la paroi transversale relie les deux parois longitudinales du capot.
- la paroi transversale est une paroi de rigidification du capot.

L'invention concerne également un ensemble comportant un capot tel que décrit ci-dessus et un organe de retenue d'une lame d'essuyage qui est monté à coulissement entre les crochets du capot.

L'invention concerne également un balai plat caréné d'essuie-glace, en particulier de véhicule, comprenant un capot tel que décrit ci-dessus.

Selon un sixième aspect, l'invention concerne une monture centrale capotée pour un balai plat caréné d'essuie-glace, en particulier de véhicule, présentant une fenêtre configurée pour recevoir un adaptateur de liaison du balai à un bras d'entraînement dudit balai, la fenêtre ayant une forme allongée, caractérisée en ce qu'elle comprend au moins un capotage de fermeture partielle de ladite fenêtre, qui est fixé de manière détachable sur la monture.

Dans la présente demande, on entend par capotage un élément qui définit une face externe en général profilée et qui peut être utilisé pour obturer une fenêtre par exemple.

Dans le cas précité, le capotage permet de fermer la fenêtre de la monture et d'améliorer l'esthétique et l'aérodynamisme de cette dernière. Il est ainsi envisageable de prévoir une fenêtre de grandes dimensions dans la monture, par exemple pour faciliter le montage de l'adaptateur, sans pour autant que cela nuise à l'esthétique ou à l'aérodynamisme du balai.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- la monture comprend deux capotages de fermeture de la fenêtre,
- un premier capotage est configuré pour obturer une partie d'extrémité longitudinale de la fenêtre et un second capotage est configuré pour obturer une partie d'extrémité longitudinale opposée de la fenêtre,
- le ou chaque capotage est fixé sur la monture par encliquetage élastique ou emboîtement,
- le ou chaque capotage comprend au moins une patte configurée pour coopérer par emboîtement avec un évidement de forme sensiblement complémentaire de la monture,
- le ou chaque capotage comprend au moins un crochet élastiquement déformable configurée pour coopérer par encliquetage élastique avec un moyen complémentaire de la monture,
- le ou au moins un capotage est monté pivotant autour d'un axe porté par la monture,
- l'axe ou chaque axe est situé à proximité d'une extrémité longitudinale de la fenêtre,
- le ou chaque capotage comprend des moyens d'encliquetage élastique sur l'axe correspondant,
- le ou chaque capotage comprend des moyens de retenue par butée configurés pour coopérer avec ledit adaptateur,
- le ou chaque capotage comprend une face externe non plane,
- ladite fenêtre a une forme allongée et s'étend entre deux parois latérales longitudinales de la monture, entre lesquelles s'étend un axe transversal d'articulation de l'adaptateur,
- la monture a une forme allongée et comprend à chacune de ses extrémités longitudinales des moyens d'articulation à un capot d'extrémité du balai,
- la monture comprend des moyens de fixation à une vertèbre de rigidification du balai ou à un organe de maintien de cette vertèbre.

L'invention concerne également un balai plat caréné d'essuie-glace, en particulier de véhicule, comprenant une monture telle que décrite ci-dessus.

Selon un septième aspect, l'invention concerne une monture centrale pour un balai plat caréné d'essuie-glace, en particulier de véhicule, comprenant une fenêtre configurée pour recevoir un adaptateur de liaison du balai à un bras d'entraînement dudit balai, la fenêtre ayant une forme allongée et s'étendant entre deux parois latérales longitudinales de la monture, caractérisée en ce que les parois latérales sont reliées entre elles par des moyens de liaison et de rigidification amovibles.

Les moyens de liaison s'étendent entre les parois latérales de la monture et la rigidifient. Les moyens de liaison peuvent toutefois gêner le montage de l'adaptateur dans la fenêtre. Selon l'invention, ces moyens de liaison sont amovibles et peuvent être retirés de manière provisoire ou permanente, par exemple pour faciliter le montage de l'adaptateur.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- les moyens de liaison et de rigidification sont cassables ou découpables ou démontables,
- les moyens de liaison et de rigidification comprennent au moins une traverse,
- la ou chaque traverse a une forme de barreau allongée,
- la ou chaque traverse est formé par un pont de matière,
- le ou chaque traverse comprend au moins une portion de faiblesse,
- les moyens de liaison et de rigidification comprennent deux traverses disposées de manière symétrique par rapport à un plan transversal passant sensiblement par le milieu de la fente,
- la monture a une forme allongée et comprend à chacune de ses extrémités longitudinales des moyens d'articulation à un capot d'extrémité du balai,
- la monture comprend des moyens de fixation à une vertèbre de rigidification du balai ou à un organe de maintien de cette vertèbre,
- ladite fenêtre a une forme allongée et s'étend entre deux parois latérales longitudinales de la monture, entre lesquelles s'étend un axe transversal d'articulation de l'adaptateur,
- ladite fenêtre comprend à chacune de ses extrémités longitudinales un axe transversal de montage d'un capotage de fermeture partielle de la fenêtre,

L'invention concerne également un balai plat caréné d'essuie-glace, en particulier de véhicule, comprenant une monture telle que décrite ci-dessus.

L'invention concerne également un procédé de montage d'un balai tel que décrit ci-dessus, caractérisé en ce qu'il comprend une étape consistant à retirer au moins un des moyens de liaison et de rigidification de la monture avant de monter l'adaptateur dans sa fenêtre.

Selon un huitième aspect, l'invention concerne un carénage pour balai plat caréné d'essuie-glace, en particulier de véhicule, comprenant deux capots d'extrémité et une monture centrale qui est située entre les deux capots d'extrémité et qui comprend des moyens de fixation à une vertèbre de rigidification du balai ou à un organe de maintien de cette vertèbre, la monture comprenant en outre une fenêtre configurée pour recevoir un adaptateur de liaison du balai à un bras d'entraînement dudit balai, caractérisé en ce que les capots sont reliés à la monture par des moyens de liaison qui empêchent tout déplacement des capots vis-à-vis de la monture.

Pour certains balais, tels que des balais courts, il peut être pénalisant d'avoir des capots d'extrémité mobiles vis-à-vis de la monture centrale. L'invention permet de résoudre ce problème en empêchant tout déplacement des capots vis-à-vis de la monture.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- les moyens de liaison de la monture à chaque capot comprennent des moyens d'articulation,
- chaque capot est relié par un axe d'articulation à une extrémité longitudinale de la monture,
- chaque capot comprend au moins une butée configurée pour empêcher toute rotation du capot vis-à-vis de la monture autour dudit axe,
- ladite au moins une butée est configurée pour coopérer avec un doigt en saillie de la monture,
- ledit doigt porte ledit axe ou comprend un orifice traversé par ledit axe,
- la monture et/ou chaque capot d'extrémité comprend ou forme un déflecteur aérodynamique,
- la monture et/ou chaque capot d'extrémité a en section transversale une forme sensiblement de dièdre sur au moins une partie de sa dimension longitudinale,
- la monture comprend une fenêtre configurée pour recevoir un adaptateur de liaison du balai à un bras d'entraînement dudit balai,

L'invention concerne également un balai plat caréné d'essuie-glace, en particulier de véhicule, comprenant un carénage tel que décrit ci-dessus.

Selon un neuvième aspect, l'invention concerne un carénage pour balai plat caréné d'essuie-glace, en particulier de véhicule, comprenant deux capots d'extrémité et une monture centrale qui est située entre les deux capots d'extrémité et qui comprend des moyens de fixation à une vertèbre de rigidification du balai ou à un organe de maintien de cette vertèbre, la monture comprenant en outre une fenêtre configurée pour recevoir un adaptateur de liaison du balai à un bras d'entraînement dudit balai, caractérisé en ce que les capots sont réalisés d'une seule pièce avec la monture. Afin de rigidifier la monture centrale et les capots d'extrémité formés d'une seule pièce, cet exemple de réalisation comporte au moins une nervure de rigidification pouvant être sous forme de croisillon et/ou de bandeau d'extension perpendiculaire, ou sensiblement perpendiculaire aux parois latérales longitudinales concernées.

Ceci permet notamment de simplifier la fabrication du carénage. Selon un exemple réalisation, le carénage ainsi réalisé a une longueur comprise entre 250 mm et 350 mm, et préférentiellement de 300 mm.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- le carénage comprend au moins une marque de délimitation s'étendant entre la monture et chaque capot,
- ladite au moins une marque de délimitation comprend une rainure,
- la monture et/ou chaque capot d'extrémité comprend ou forme un déflecteur aérodynamique,
- la monture et/ou chaque capot d'extrémité a en section transversale une forme sensiblement de dièdre sur au moins une partie de sa dimension longitudinale,
- la monture comprend une fenêtre configurée pour recevoir un adaptateur de liaison du balai à un bras d'entraînement dudit balai,
- le carénage comprend des moyens de guidage en translation d'un organe de maintien d'une lame d'essuyage et/ou d'une vertèbre de rigidification.

L'invention concerne également un balai plat caréné d'essuie-glace, en particulier de véhicule, comprenant un carénage tel que décrit ci-dessus.

Selon un dixième aspect, l'invention concerne une monture centrale pour un balai plat caréné d'essuie-glace, en particulier de véhicule, la monture ayant une forme allongée et comprenant à chacune de ses extrémités longitudinales des moyens de liaison à un capot d'extrémité du balai, la monture comprenant en outre des moyens de fixation à une vertèbre de rigidification du balai ou à un organe de maintien de cette vertèbre, caractérisée en ce qu'elle comprend ou forme en outre un déflecteur aérodynamique.

Le déflecteur aérodynamique forme une prise d'air et permet en utilisation de maintenir le balai en appui contre le pare-brise.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- les moyens de fixation sont ménagés sur la monture centrale entre les deux moyens de liaison,
- dans un tel cas, les moyens de fixation sont ménagés à équidistance des deux moyens de liaison,
- les moyens de fixation sont ménagés au droit d'une fenêtre réalisée dans une face supérieure de la monture centrale, une telle fenêtre étant destinée notamment à recevoir au moins un adaptateur de connexion à un bras. « Au droit de la fenêtre » signifie que les moyens de fixation sont ménagés sur la monture centrale entre un premier plan passant par une première extrémité longitudinale de la fenêtre et un deuxième plan passant par une deuxième extrémité longitudinale de la fenêtre,
- les moyens de liaison à la monture centrale sont disposés à l'intérieur d'un dièdre formé par des parois longitudinales du capot d'extrémité,
- les moyens de liaison sont des moyens d'articulation,
- la monture comprend à chacun de ses extrémités longitudinales un doigt en saillie portant un axe d'articulation ou comportant un orifice configuré pour être traversé par un axe d'articulation,
- le doigt en saillie de l'extrémité longitudinale de la monture centrale forme un exemple de réalisation d'un moyen de liaison évoqué dans ce texte,
- la monture comprend deux parois latérales longitudinales, un bord longitudinal d'une première de ces parois étant relié à un bord longitudinal d'une seconde de ces parois de façon à former sensiblement un dièdre au moins au niveau des extrémités longitudinales de la monture,
- chaque doigt s'étend depuis une paroi transversale de liaison desdites parois latérales longitudinales,
- chaque doigt a un axe d'allongement s'étendant dans un plan longitudinal qui est sensiblement perpendiculaire audit axe d'articulation correspondant et qui passe sensiblement par lesdits bords longitudinaux,
- chaque doigt a une forme générale sensiblement parallélépipédique,
- la monture comprend en outre une fenêtre configurée pour recevoir un adaptateur de liaison du balai à un bras d'entraînement dudit balai, ledit axe d'allongement de chaque doigt étant sensiblement parallèle et à distance d'un plan longitudinal médian de la fenêtre,

L'invention concerne également un capot d'extrémité pour un balai plat caréné d'essuie-glace, en particulier de véhicule, le capot ayant une forme allongée et comprenant à une de ses extrémités longitudinales des moyens de liaison à une monture centrale du balai, caractérisé en ce qu'il comprend ou forme en outre un déflecteur aérodynamique.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- les moyens de liaison sont des moyens d'articulation,
- ladite extrémité longitudinale porte un axe d'articulation ou comporte au moins un orifice configuré pour recevoir un axe d'articulation,
- le capot comprend deux parois latérales longitudinales, un bord longitudinal d'une première de ces parois étant relié à un bord longitudinal d'une seconde de ces parois de façon à former sensiblement un dièdre,
- ledit axe ou ledit orifice est porté par ou formé sur au moins un renfort d'au moins une desdites parois latérales longitudinales.

L'invention concerne également un ensemble comportant une monture et un capot tels que décrits ci-dessus.

L'invention concerne également un balai plat caréné d'essuie-glace, en particulier de véhicule, comprenant une monture et/ou un capot tels que décrits ci-dessus.

Selon un onzième aspect, l'invention concerne une monture centrale pour un balai plat caréné d'essuie-glace, en particulier de véhicule, la monture ayant une forme allongée et comprenant à chacune de ses extrémités longitudinales des moyens de liaison à un capot d'extrémité du balai, la monture comprenant en outre des moyens de fixation à une vertèbre de rigidification du balai ou à un organe de maintien de cette vertèbre, caractérisée en ce qu'elle comprend à chacune de ses extrémités longitudinales un premier rebord périphérique configuré pour être au moins en partie engagé dans une extrémité longitudinale du capot correspondant et pour être au moins en partie recouvert par un second rebord périphérique de ladite extrémité longitudinale du capot.

Ceci permet de limiter voire d'empêcher le passage d'air entre la monture et le capot, en particulier en utilisation, et donc d'améliorer l'aérodynamisme du balai. Cela permet également d'améliorer son esthétique. Une telle structure permet encore de minimiser le risque de pincement lors de sa manipulation du fait que le rebord périphérique réduit l'angle d'ouverture. Par ailleurs, cette structure des rebords périphériques est parfaitement compatible avec le procédé d'assemblage du balai plat caréné.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- les moyens de liaison sont des moyens d'articulation,
- la monture comprend deux parois latérales longitudinales, un bord longitudinal d'une première de ces parois étant relié à un bord longitudinal d'une seconde de ces parois de façon à former sensiblement un dièdre au moins au niveau des extrémités longitudinales de la monture,
- les moyens de liaison s'étendent depuis des parois transversales de liaison desdites parois latérales longitudinales,
- chaque premier rebord est défini par la périphérie externe d'une desdites parois transversales,
- chaque premier rebord s'étend sur toute l'étendue transversale desdites parois longitudinales,
- chaque premier rebord s'étend sur toute la hauteur desdites parois longitudinales,
- chaque premier rebord est formé par une rainure de la périphérie externe de la monture,
- chaque premier rebord a une dimension axiale comprise entre 1 et 5mm environ, et de préférence entre 1 et 3mm.

L'invention concerne également un ensemble comportant une monture telle que décrite ci-dessus et un capot d'extrémité.

L'invention concerne également un capot d'extrémité pour un balai plat caréné d'essuie-glace, en particulier de véhicule, le capot ayant une forme allongée et comprenant à une de ses extrémités longitudinales des moyens de liaison à une monture centrale du balai, caractérisé en ce qu'il comprend à cette extrémité longitudinale un second rebord périphérique configuré pour être au moins en partie engagé dans ou sur une extrémité longitudinale de la monture et pour recouvrir au moins en partie par un premier rebord périphérique de ladite extrémité longitudinale de la monture.

Les moyens de liaison peuvent être des moyens d'articulation.

L'invention concerne également un ensemble comportant un capot d'extrémité tel que décrit ci-dessus et une monture centrale.

L'invention concerne également un balai plat caréné d'essuie-glace, en particulier de véhicule, comprenant une monture ou un capot tel que décrit ci-dessus.

Selon un douzième aspect, l'invention concerne une monture centrale pour un balai plat caréné d'essuie-glace, en particulier de véhicule, la monture ayant une forme allongée et comprenant des moyens de fixation à une vertèbre de rigidification du balai ou à un organe de maintien de cette vertèbre, la monture comprenant en outre une fenêtre configurée pour recevoir un adaptateur de liaison du balai à un bras d'entraînement dudit balai, caractérisée en ce qu'elle comporte un déflecteur dont une arête longitudinale supérieure s'étend sensiblement parallèlement et à distance d'un plan longitudinal médian sensiblement vertical de la fenêtre et/ou d'un plan longitudinal médian sensiblement vertical des moyens de fixation.

L'arête du déflecteur est ainsi décalée en direction transversale du milieu du balai. L'arête longitudinale du déflecteur est sensiblement ou strictement parallèle au plan longitudinal médian P1, sur toute la longueur de l'arête. Cette caractéristique avantageuse permet au déflecteur d'air d'avoir la même performance aérodynamique répartie sur toute la longueur du déflecteur.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- la monture comprend deux parois latérales longitudinales, un bord longitudinal d'une première de ces parois latérales étant relié à un bord longitudinal d'une seconde de ces parois latérales de façon à former ladite arête du déflecteur,
- lesdites parois latérales forment sensiblement un dièdre au moins au niveau des extrémités longitudinales de la monture,
- la monture comprend à chacune de ses extrémités longitudinales des moyens de liaison à un capot d'extrémité du balai,
- les moyens de liaison s'étendent depuis des parois transversales de liaison desdites parois latérales longitudinales,
- les moyens de liaison sont des moyens d'articulation,
- la monture comprend à chacune de ses extrémités longitudinales un doigt en saillie portant un axe d'articulation ou comportant un orifice configuré pour être traversé par un axe d'articulation,
- chaque doigt a un axe d'allongement s'étendant dans un plan longitudinal qui est sensiblement perpendiculaire audit axe d'articulation correspondant et qui passe sensiblement par ladite arête,
- chaque doigt a une forme générale sensiblement parallélépipédique.

L'invention concerne également un ensemble comportant une monture telle que décrite ci-dessus et un capot d'extrémité.

L'invention concerne également un balai plat caréné d'essuie-glace, en particulier de véhicule, comprenant une monture ou un ensemble tel que décrit ci-dessus.

Selon un treizième aspect, l'invention concerne une monture centrale pour un balai plat caréné d'essuie-glace, en particulier de véhicule, la monture ayant une forme allongée et comprenant des moyens de fixation à une vertèbre de rigidification du balai ou à un organe de maintien de cette vertèbre, la monture comprenant en outre une fenêtre configurée pour recevoir un adaptateur de liaison du balai à un bras d'entraînement dudit balai, la fenêtre ayant une forme allongée et s'étendant entre deux parois latérales longitudinales entre lesquelles s'étend un axe d'articulation dudit adaptateur, caractérisée en ce que ledit axe est situé au dessus d'un plan longitudinal sensiblement parallèle audit axe et passant sensiblement par les extrémités supérieures des parties d'extrémité longitudinales de la monture.

L'axe d'articulation de l'adaptateur est ainsi surélevé, ce qui permet notamment d'autoriser un débattement angulaire plus grand du bras vis-à-vis du balai.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- au moins au niveau des parties d'extrémité longitudinales de la monture, un bord longitudinal supérieur d'une première desdites parois latérales est relié à un bord longitudinal supérieur de la seconde desdites parois latérales de façon à former une arête supérieure d'un déflecteur aérodynamique, ledit plan longitudinal passant sensiblement par ladite arête supérieure des parties d'extrémité longitudinales de la monture,
- lesdites parois latérales forment sensiblement un dièdre au niveau des parties d'extrémité longitudinales de la monture,
- au niveau de ladite fenêtre de la monture, les bords longitudinaux supérieurs desdites parois latérales sont écartés l'un de l'autre pour définir des bords périphériques de cette fenêtre,
- lesdits bords périphériques de la fenêtre ont des extrémités supérieures situées au-dessus dudit plan,
- lesdits bords périphériques de la fenêtre ont une forme générale arrondie,
- la monture comprend à chacune de ses extrémités longitudinales des moyens de liaison à un capot d'extrémité du balai,
- les moyens de liaison s'étendent depuis des parois transversales de liaison desdites parois latérales longitudinales,
- les moyens de liaison sont des moyens d'articulation,
- la monture comprend à chacune de ses extrémités longitudinales un doigt en saillie portant un axe d'articulation ou comportant un orifice configuré pour être traversé par un axe d'articulation,
- chaque doigt a un axe d'allongement s'étendant dans un plan longitudinal qui est sensiblement perpendiculaire audit axe d'articulation correspondant et qui passe sensiblement par ladite arête,
- chaque doigt a une forme générale sensiblement parallélépipédique.

L'invention concerne également un ensemble comportant une monture telle que décrite ci-dessus et un capot d'extrémité.

L'invention concerne également un balai plat caréné d'essuie-glace, en particulier de véhicule, comprenant une monture ou un ensemble tel que décrit ci-dessus.

Selon un quatorzième aspect, l'invention concerne un ensemble de deux carénages pour balais plats carénés d'essuie-glaces, en particulier de véhicule, comportant un carénage court et un carénage long, chaque carénage ayant une forme allongée et comportant deux capots d'extrémité et une monture centrale qui s'étend entre les capots d'extrémité et qui comporte à ses extrémités longitudinales des moyens de liaison aux capots d'extrémité, caractérisé en ce que les montures centrales des deux carénages sont identiques et donc interchangeables.

Ceci est particulièrement avantageux car cela permet de limiter le nombre de références pour la monture centrale, une unique référence pouvant servir par exemple à réaliser des carénages de plusieurs longueurs différentes.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- chaque monture comprend des moyens de fixation à une vertèbre de rigidification ou à un organe de maintien de cette vertèbre,
- chaque monture comprend une fenêtre configurée pour recevoir un adaptateur de liaison du balai à un bras d'entraînement dudit balai,
- la fenêtre a une forme allongée et s'étend entre deux parois latérales longitudinales entre lesquelles s'étend un axe d'articulation dudit adaptateur,
- les moyens de liaison sont des moyens d'articulation,
- chaque monture forme ou comprend un déflecteur aérodynamique,
- chaque monture comprend deux parois latérales longitudinales dont des premiers bords longitudinaux sont reliés entre eux de façon à ce que lesdites parois forment sensiblement un dièdre au moins au niveau des extrémités longitudinales de la monture,
- le dièdre définit une arête longitudinale supérieure de la monture,
- ladite arête s'étend sensiblement parallèlement et à distance d'un plan longitudinal médian des moyens de fixation de la monture,
- lesdites parois latérales longitudinales comportent, à l'opposé desdits premiers bords longitudinaux, des seconds bords longitudinaux libres ou reliés à des ailes latérales longitudinales,
- le second bord longitudinal de l'une desdites parois latérales longitudinales est situé sensiblement dans un premier plan longitudinal sensiblement horizontal qui est à distance d'un second plan longitudinal sensiblement horizontal passant sensiblement par le second bord longitudinal de l'autre desdites parois latérales longitudinales,
- lesdites ailes latérales sont reliées à des moyens configurés pour guider en translation un organe de maintien d'une lame d'essuyage du balai,
- lesdites ailes latérales sont reliées entre elles par une paroi transversale dans laquelle est formé un passage pour le guidage dudit organe,
- les montures ont une longueur comprise entre 15 et 30 cm.

L'invention concerne également un procédé de montage de carénages pour balais plats carénés d'essuie-glaces, en particulier de véhicule, comportant une étape de montage d'un carénage court et une étape de montage d'un carénage long, chaque carénage ayant une forme allongée et comportant deux capots d'extrémité et une monture centrale qui comporte à ses extrémités longitudinales des moyens de liaison aux capots d'extrémité, caractérisé en ce que l'étape de montage d'un carénage court comprend l'assemblage d'une première référence de monture centrale avec une première référence de capots d'extrémité pour carénage court, et en ce que l'étape de montage d'un carénage long comprend l'assemblage de ladite première référence de monture centrale avec une seconde référence de capots d'extrémité pour carénage long.

Selon un quinzième aspect, l'invention concerne un carénage pour balai plat caréné d'essuie-glace, en particulier de véhicule, le carénage ayant une forme allongée et comportant deux capots d'extrémité et une monture centrale qui s'étend entre les capots d'extrémité et qui comporte à ses extrémités longitudinales des moyens de liaison aux capots d'extrémité, la monture comportant une fenêtre configurée pour recevoir un adaptateur de liaison du balai à un bras d'entraînement dudit balai, la fenêtre ayant une forme allongée et s'étendant entre deux parois latérales longitudinales entre lesquelles s'étend un axe transversal d'articulation de l'adaptateur, caractérisé en ce que le rapport entre la distance longitudinale entre un premier plan transversal passant sensiblement par ledit axe et un second plan transversal passant sensiblement par les moyens de liaison de la monture à chaque capot, et la demi longueur du carénage, est compris entre 20 et 70%.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- le rapport est compris entre 25 et 65%, et de préférence entre 27 et 59 %,
- chaque monture comprend des moyens de fixation à une vertèbre de rigidification ou à un organe de maintien de cette vertèbre,
- les moyens de liaison sont des moyens d'articulation,
- au moins un des éléments parmi la monture et les capots forme ou comprend un déflecteur aérodynamique,
- au moins un des éléments parmi la monture et les capots comprend deux parois latérales longitudinales dont des premiers bords longitudinaux sont reliés entre eux de façon à ce que lesdites parois forment sensiblement un dièdre sur au moins une partie de la dimension longitudinale de l'élément,
- le dièdre définit une arête longitudinale supérieure de la monture ou du capot,
- ladite arête s'étend sensiblement parallèlement et à distance d'un plan longitudinal médian de la fenêtre,
- lesdites parois latérales longitudinales comportent, à l'opposé desdits premiers bords longitudinaux, des seconds bords longitudinaux libres ou reliés à des ailes latérales longitudinales,
- le second bord longitudinal de l'une desdites parois latérales longitudinales est situé sensiblement dans un premier plan longitudinal sensiblement horizontal qui est à distance d'un second plan longitudinal sensiblement horizontal passant sensiblement par le second bord longitudinal de l'autre desdites parois latérales longitudinales,
- lesdites ailes latérales sont reliées à des moyens configurés pour guider en translation un organe de maintien d'une lame d'essuyage du balai,
- lesdites ailes latérales sont reliées entre elles par une paroi transversale dans laquelle est formé un passage pour le guidage dudit organe,
- la monture a une longueur comprise entre 15 et 30cm.

L'invention concerne également un balai plat caréné d'essuie-glace, en particulier de véhicule, comportant un carénage tel que décrit ci-dessus.

Selon un seizième aspect, l'invention concerne une monture centrale pour un balai plat caréné d'essuie-glace, en particulier de véhicule, la monture ayant une forme allongée et comprenant des moyens de fixation à une vertèbre de rigidification du balai ou à un organe de maintien de cette vertèbre, la monture comprenant en outre une fenêtre configurée pour recevoir un adaptateur de liaison du balai à un bras d'entraînement dudit balai, caractérisée en ce qu'elle comporte au moins une nervure de rigidification comportant au moins une marque d'un point d'appui pour l'éjection de la monture d'un moule de fabrication.

Ceci est particulièrement avantageux car la marque laissée par un point d'appui pour l'éjection de la monture n'est pas esthétique. Lorsque cette marque est située sur une face de grandes dimensions, elle est visible et disgracieuse. Le fait de prévoir le point d'appui sur une nervure de rigidification permet de limiter la visibilité de la marque du point d'appui. Par ailleurs, la marque est générée par un enfoncement de matière qui peut affecter la santé de la pièce. La nervure étant une partie relativement rigide et résistante, la marque n'affecte pas ici la santé de la pièce.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- la monture comprend au moins deux nervures de rigidification comportant chacune au moins une marque,
- lesdites nervures sont sensiblement transversales,
- la monture comprend au moins deux nervures de rigidification entrecroisées, au moins une marque étant située sur une zone de jonction des nervures,
- la ou chaque marque est formée sur un bord d'extrémité libre d'une nervure,
- la monture comprend deux parois latérales longitudinales qui sont reliées entre elles de façon à former sensiblement un dièdre au moins au niveau des extrémités longitudinales de la monture, ladite au moins une nervure s'étendant entre des faces internes desdites parois latérales longitudinales,
- la monture comprend à chacune de ses extrémités longitudinales des moyens de liaison à un capot d'extrémité du balai,

L'invention concerne également un capot d'extrémité pour un balai plat caréné d'essuie-glace, en particulier de véhicule, le capot ayant une forme allongée et comprenant à une de ses extrémités longitudinales des moyens de liaison à une monture centrale du balai, caractérisé en ce qu'il comporte au moins une nervure de rigidification comportant au moins une marque d'un point d'appui pour l'éjection du capot d'un moule de fabrication.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- le capot comprend au moins deux nervures de rigidification comportant chacune au moins une marque,
- lesdites nervures sont sensiblement transversales,
- le capot comprend au moins deux nervures de rigidification entrecroisées, au moins une marque étant située sur une zone de jonction des nervures,
- la ou chaque marque est formée sur un bord d'extrémité libre d'une nervure,
- le capot comprend deux parois latérales longitudinales qui sont reliées entre elles de façon à former sensiblement un dièdre, ladite au moins une nervure s'étendant entre des faces internes desdites parois latérales longitudinales,

L'invention concerne également un ensemble comportant une monture et un capot tels que décrits ci-dessus.

L'invention concerne également un balai plat caréné d'essuie-glace, en particulier de véhicule, comprenant une monture ou un capot tel que décrit ci-dessus.

Selon un dix-septième aspect, l'invention concerne un balai plat caréné d'essuie-glace, en particulier de véhicule, caractérisé en ce qu'il comprend :
- une lame longitudinale d'essuyage,
- au moins une vertèbre longitudinale de rigidification,
- un organe longitudinal de maintien de ladite lame d'essuyage et de ladite vertèbre de rigidification,
- un carénage longitudinal comportant deux capots d'extrémité et une monture centrale s'étendant entre les capots d'extrémité et étant reliés à ces derniers, la monture comprenant des moyens de fixation à ladite vertèbre de rigidification ou audit organe de maintien de cette vertèbre, et chaque capot comprenant des moyens de guidage en translation de parties d'extrémité dudit organe.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- la monture comprend à chacune de ses extrémités longitudinales des moyens d'articulation du capot d'extrémité correspondant,
- la monture comprend une fenêtre configurée pour recevoir un adaptateur de liaison du balai à un bras d'entraînement dudit balai,
- la fenêtre a une forme allongée et s'étend entre deux parois latérales longitudinales de la monture entre lesquelles s'étend un axe d'articulation dudit adaptateur,
- l'organe comprend un premier logement longitudinal de réception d'un talon de la lame d'essuyage et un second logement longitudinal de réception de la vertèbre,
- la vertèbre est en appui sur le talon de la lame ou est séparée de ce talon par une paroi longitudinale dudit organe,
- le balai comprend une unique vertèbre,
- au moins l'un des éléments parmi la monture et les capots forme ou comprend un déflecteur aérodynamique,
- au moins l'un des éléments parmi la monture et les capots comprend deux parois latérales longitudinales dont des premiers bords longitudinaux sont reliés entre eux de façon à ce que lesdites parois forment sensiblement un dièdre sur au moins une partie longitudinale dudit élément,
- le dièdre définit une arête longitudinale supérieure de la monture ou du capot,
- ladite arête s'étend sensiblement parallèlement et à distance d'un plan longitudinal médian des moyens de fixation de la monture,
- lesdites parois latérales longitudinales comportent, à l'opposé desdits premiers bords longitudinaux, des seconds bords longitudinaux libres ou reliés à des ailes latérales longitudinales,
- le second bord longitudinal de l'une desdites parois latérales longitudinales est situé sensiblement dans un premier plan longitudinal sensiblement horizontal qui est à distance d'un second plan longitudinal sensiblement horizontal passant sensiblement par le second bord longitudinal de l'autre desdites parois latérales longitudinales,
- lesdits moyens de guidage s'étendent entre lesdites ailes latérales,
- lesdites ailes latérales sont reliées entre elles par une paroi transversale dans laquelle est formé un passage pour le guidage dudit organe.

Selon un dix-huitième aspect, l'invention concerne une monture centrale pour un balai plat caréné d'essuie-glace, en particulier de véhicule, la monture ayant une forme allongée et comprenant à chacune de ses extrémités longitudinales des moyens d'articulation à un capot d'extrémité du balai autour d'au moins un axe, la monture comprenant en outre des moyens de fixation à une vertèbre de rigidification du balai ou à un organe de maintien de cette vertèbre, caractérisée en ce qu'un premier plan longitudinal médian des moyens d'articulation, sensiblement perpendiculaire audit axe, est sensiblement parallèle et à distance d'un second plan longitudinal médian desdits moyens de fixation.

Les moyens d'articulation sont ainsi décalés en direction transversale des moyens de fixation.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- la monture comprend à chacun de ses extrémités longitudinales un doigt en saillie portant un axe d'articulation ou comportant un orifice configuré pour être traversé par un axe d'articulation,
- la monture comprend deux parois latérales longitudinales, un bord longitudinal d'une première de ces parois étant relié à un bord longitudinal d'une seconde de ces parois de façon à former sensiblement un dièdre au moins au niveau des extrémités longitudinales de la monture,
- chaque doigt s'étend depuis une paroi transversale de liaison desdites parois latérales longitudinales,
- chaque doigt a un axe d'allongement s'étendant dans un plan longitudinal qui est sensiblement perpendiculaire audit axe d'articulation correspondant et qui passe sensiblement par lesdits bords longitudinaux,
- chaque doigt a une forme générale sensiblement parallélépipédique,
- la monture comprend en outre une fenêtre configurée pour recevoir un adaptateur de liaison du balai à un bras d'entraînement dudit balai, ledit premier plan longitudinal médian est sensiblement parallèle et à distance d'un troisième plan longitudinal médian de la fenêtre.

L'invention concerne également un capot d'extrémité pour un balai plat caréné d'essuie-glace, en particulier de véhicule, le capot ayant une forme allongée et comprenant à une de ses extrémités longitudinales des moyens d'articulation à une monture centrale du balai, le capot comprenant en outre des moyens de guidage en translation d'un organe de maintien d'une lame d'essuyage du balai, caractérisé en ce qu'un premier plan longitudinal médian des moyens d'articulation, sensiblement perpendiculaire audit axe, est sensiblement parallèle et à distance d'un second plan longitudinal médian desdits moyens de guidage.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- ladite extrémité longitudinale porte un axe d'articulation ou comporte au moins un orifice configuré pour recevoir un axe d'articulation,
- le capot comprend deux parois latérales longitudinales, un bord longitudinal d'une première de ces parois étant relié à un bord longitudinal d'une seconde de ces parois de façon à former sensiblement un dièdre,
- ledit axe ou ledit orifice est formé sur une paroi longitudinale interne d'au moins une desdites parois latérales longitudinales.

L'invention concerne également un ensemble comportant une monture et un capot tels que décrits ci-dessus.

L'invention concerne également un balai plat caréné d'essuie-glace, en particulier de véhicule, comprenant une monture et/ou un capot tels que décrits ci-dessus.

Selon un dix-neuvième aspect, l'invention concerne un capot d'extrémité pour un balai plat caréné d'essuie-glace, en particulier de véhicule, ce capot ayant une forme allongé et comprenant des moyens définissant un passage longitudinal de coulissement d'un organe longitudinal de maintien d'une lame d'essuyage du balai, caractérisé en ce qu'il comprend en outre au moins une rampe de guidage configurée pour faciliter l'insertion dudit organe dans ledit passage.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- lesdits moyens comportent au moins une paroi transversale en saillie sur une face interne du capot et définissant ledit passage longitudinal,
- ladite paroi transversale comprend deux crochets latéraux sensiblement en L configurés pour s'étendre de chaque côté dudit organe, chaque crochet comportant une partie sensiblement verticale dont l'extrémité inférieure est reliée à une partie sensiblement horizontale s'étendant du côté de l'autre crochet,
- les extrémités supérieures desdites parties verticales des crochets sont reliées ensemble par une partie horizontale supérieure de ladite paroi transversale,
- ladite partie horizontale de chaque crochet a une surépaisseur en direction longitudinale, dans laquelle est formée une rampe de guidage,
- le capot comprend deux parois latérales longitudinales dont des premiers bords longitudinaux sont reliés entre eux de façon à ce que lesdites parois latérales longitudinales forment sensiblement un dièdre,
- lesdites parois latérales longitudinales comportent, à l'opposé desdits premiers bords longitudinaux, des seconds bords longitudinaux libres ou reliés à des ailes latérales longitudinales,
- le second bord longitudinal de l'une desdites parois latérales longitudinales est situé sensiblement dans un premier plan longitudinal sensiblement horizontal qui est à distance d'un second plan longitudinal sensiblement horizontal passant sensiblement par le second bord longitudinal de l'autre desdites parois latérales longitudinales,
- lesdits moyens s'étendent entre lesdites ailes latérales,
- le capot comprend deux rampes qui sont symétriques par rapport à un plan longitudinal médian sensiblement vertical desdits moyens,
- lesdites rampes comprennent des faces inclinées de guidage sensiblement coplanaires.

L'invention concerne également un ensemble comportant un capot tel que décrit ci-dessus et un organe de retenue d'une lame d'essuyage qui est monté à coulissement dans le passage desdits moyens.

L'invention concerne également un balai plat caréné d'essuie-glace, en particulier de véhicule, comprenant un capot tel que décrit ci-dessus.

Selon un vingtième aspect, l'invention concerne une monture centrale pour un balai plat caréné d'essuie-glace, en particulier de véhicule, la monture ayant une forme allongée et comprenant des moyens de fixation à une vertèbre de rigidification du balai ou à un organe de maintien de cette vertèbre, la monture comprenant en outre une fenêtre configurée pour recevoir un adaptateur de liaison du balai à un bras d'entraînement dudit balai, ladite fenêtre comportant un axe d'articulation dudit adaptateur, la monture comportant deux parois latérales longitudinales qui définissent entre elles un espace de logement dudit organe, caractérisée en ce que lesdites parois latérales longitudinales comprennent des bords longitudinaux inférieurs libres qui sont situés respectivement dans deux plans longitudinaux sensiblement parallèles audit axe, qui sont distincts.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- lesdites parois latérales longitudinales comprennent des bords longitudinaux supérieurs qui sont reliés ensemble de façon à ce que la monture ait une forme sensiblement de dièdre sur au moins une partie de sa longueur,
- la monture comprend à chacune de ses extrémités longitudinales des moyens de liaison à un capot d'extrémité du balai,
- les moyens de liaison s'étendent depuis des parois transversales de liaison desdites parois latérales longitudinales,
- les moyens de liaison sont des moyens d'articulation,
- la monture comprend à chacune de ses extrémités longitudinales un doigt en saillie portant un axe d'articulation ou comportant un orifice configuré pour être traversé par un axe d'articulation,
- chaque doigt a un axe d'allongement s'étendant dans un plan longitudinal qui est sensiblement perpendiculaire audit axe d'articulation correspondant et qui passe sensiblement par ladite arête,
- chaque doigt a une forme générale sensiblement parallélépipédique,

L'invention concerne également un ensemble comportant une monture telle que décrite ci-dessus et un capot d'extrémité.

L'invention concerne également un balai plat caréné d'essuie-glace, en particulier de véhicule, comprenant une monture ou un ensemble tel que décrit ci-dessus.

Selon un vingt-et-unième aspect, l'invention concerne un adaptateur de liaison d'un bras tige d'entraînement à un balai plat caréné d'essuie-glace, en particulier de véhicule, cet adaptateur ayant une forme allongée et comportant deux ailes latérales longitudinales reliées entre elles par une portion médiane définissant un logement cylindrique configuré pour recevoir un axe d'articulation, caractérisé en ce qu'il comprend un logement longitudinal configuré pour recevoir une extrémité dudit bras tige, et des moyens de verrouillage configurés pour coopérer avec le bras et assurer sa retenue dans ledit logement longitudinal.

Dans la présente demande, on distingue un bras d'entraînement du type à extrémité coudée ou en U (« bras en U »), d'un bras d'entraînement du type à extrémité droite (« bras tige »). L'invention s'applique à un bras en U ou à un bras tige, voire à n'importe quel autre type de bras d'entraînement.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- le logement cylindrique est configuré pour recevoir ledit axe d'articulation par encliquetage élastique,
- lesdits moyens de verrouillage comprennent une patte longitudinale dont une extrémité longitudinale libre comporte au moins un doigt de retenue dudit bras,
- ladite patte délimite au moins une partie dudit logement longitudinal,
- ladite patte a une forme générale plane et allongée et s'étend sensiblement dans un plan passant par une extrémité supérieure de l'adaptateur,
- ledit doigt et lesdites ailes de l'adaptateur s'étendent sensiblement d'un même côté depuis ledit plan,
- ledit logement longitudinal est débouchant à ses deux extrémités longitudinales,

L'invention concerne également un ensemble comportant un adaptateur tel que décrit ci-dessus et une monture centrale d'un balai plat caréné d'essuie-glace.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- la monture comprend des moyens de fixation à une vertèbre de rigidification du balai ou à un organe de maintien de cette vertèbre,
- la monture a une forme allongée et comprend à chacune de ses extrémités longitudinales des moyens d'articulation à un capot d'extrémité du balai.
- la monture comprend à chacune de ses extrémités longitudinales un doigt en saillie portant un axe d'articulation ou comportant un orifice configuré pour être traversé par un axe d'articulation,
- la monture comprend deux parois latérales longitudinales, un bord longitudinal d'une première de ces parois étant relié à un bord longitudinal d'une seconde de ces parois de façon à former sensiblement un dièdre au moins au niveau des extrémités longitudinales de la monture,
- la monture comprend en outre une fenêtre configurée pour recevoir ledit adaptateur, cette fenêtre comportant un axe d'articulation dudit adaptateur,
- la monture comprend ou forme un déflecteur aérodynamique.

L'invention concerne également un balai plat caréné d'essuie-glace, en particulier de véhicule, comprenant un adaptateur ou un ensemble tels que décrits ci-dessus.

Selon un vingt-deuxième aspect, l'invention concerne un organe de connexion déportée d'un balai plat caréné d'essuie-glace, en particulier de véhicule, à un adaptateur de liaison dudit balai à un bras d'entraînement, l'organe comprenant des moyens de liaison audit balai et un axe d'articulation dudit adaptateur, un premier plan transversal médian dudit axe étant parallèle et à distance d'un second plan médian parallèle audit premier plan et passant par lesdits moyens de liaison, caractérisé en ce que lesdits moyens de liaison définissent au moins en partie un capotage.

Comme expliqué dans ce qui précède, un capotage est un élément qui définit une face externe en général profilée et qui peut être utilisé pour obturer une fenêtre par exemple.

L'organe selon l'invention a ainsi une double fonction de connexion du balai à un adaptateur et de capotage.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- l'organe est formé d'une seule pièce avec une monture centrale dudit balai,
- lesdits moyens de liaison comprennent des moyens de fixation configurés pour coopérer par emboîtement ou encliquetage élastique avec au moins un axe dudit balai,
- lesdits moyens de fixation sont configurés pour coopérer par emboîtement ou encliquetage élastique avec deux ou trois axes distincts dudit balai,
- lesdits moyens de liaison ont une forme allongée et comprennent sensiblement en leur milieu des moyens d'encliquetage élastique sur un axe dudit balai, et à chacun de leurs extrémités longitudinales des moyens d'emboîtement sur un autre axe dudit balai,
- ledit capotage est configuré pour obturer au moins partiellement une fenêtre dudit balai,
- le capotage prolonge une surface supérieure de la monture centrale,
- l'organe a une forme générale en U et comporte deux parois latérales dont des bords inférieurs sont reliés entre eux par une paroi médiane, ledit axe s'étendant entre lesdites parois latérales et un rebord supérieur de l'une desdites parois latérales étant reliée à un rebord définissant ledit capotage,

L'invention concerne également un ensemble comportant un organe de connexion tel que décrit ci-dessus et une monture centrale d'un balai plat caréné d'essuie-glace.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- la monture comprend des moyens de fixation à une vertèbre de rigidification du balai ou à un organe de maintien de cette vertèbre,
- la monture a une forme allongée et comprend à chacune de ses extrémités longitudinales des moyens d'articulation à un capot d'extrémité du balai,
- la monture comprend à chacune de ses extrémités longitudinales un doigt en saillie portant un axe d'articulation ou comportant un orifice configuré pour être traversé par un axe d'articulation,
- la monture comprend deux parois latérales longitudinales, un bord longitudinal d'une première de ces parois étant relié à un bord longitudinal d'une seconde de ces parois de façon à former sensiblement un dièdre au moins au niveau des extrémités longitudinales de la monture,
- la monture comprend une fenêtre comportant au moins un axe d'emboîtement ou d'encliquetage élastique desdits moyens de liaison de l'organe,
- ledit capotage de l'organe obture au moins en partie ladite fenêtre de la monture.

L'invention concerne également un balai plat caréné d'essuie-glace, en particulier de véhicule, comprenant un organe ou un ensemble tels que décrits ci-dessus.

Selon un vingt-troisième aspect, l'invention concerne un organe de connexion d'un balai plat caréné d'essuie-glace, en particulier de véhicule, à un adaptateur de liaison dudit balai à un bras d'entraînement, l'organe comprenant des moyens de liaison audit balai et des moyens d'articulation dudit adaptateur autour d'un axe, caractérisé en ce que lesdits moyens de liaison définissent au moins en partie un capotage.

Cet organe a également une double fonction de connexion du balai à un adaptateur et de capotage.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- l'organe est formé d'une seule pièce avec une monture centrale dudit balai,
- lesdits moyens de liaison comprennent des moyens de fixation configurés pour coopérer par emboîtement, engagement et/ou encliquetage élastique avec une monture centrale dudit balai,
- lesdits moyens de liaison ont une forme allongée et comprennent à une première extrémité longitudinale des moyens d'engagement ou d'emboîtement configurés pour coopérer avec ladite monture et à l'extrémité longitudinale opposée des moyens d'encliquetage élastique configurés pour coopérer avec ladite monture,
- lesdits moyens de liaison comprennent en outre sensiblement en leur milieu des moyens d'engagement ou d'emboîtement supplémentaires configurés pour coopérer avec ladite monture,
- ledit capotage est configuré pour obturer au moins partiellement une fenêtre de ladite monture,
- ledit logement est défini par une partie en saillie sur ledit capotage,
- les moyens d'articulation comprennent un orifice de logement d'un axe d'articulation ou des tourillons définissant un axe d'articulation.

L'invention concerne également un ensemble comportant un organe de connexion tel que décrit ci-dessus et une monture centrale d'un balai plat caréné d'essuie-glace.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- la monture comprend des moyens de fixation à une vertèbre de rigidification du balai ou à un organe de maintien de cette vertèbre,
- la monture a une forme allongée et comprend à chacune de ses extrémités longitudinales des moyens d'articulation à un capot d'extrémité du balai,
- la monture comprend à chacune de ses extrémités longitudinales un doigt en saillie portant un axe d'articulation ou comportant un orifice configuré pour être traversé par un axe d'articulation,
- la monture comprend deux parois latérales longitudinales, un bord longitudinal d'une première de ces parois étant relié à un bord longitudinal d'une seconde de ces parois de façon à former sensiblement un dièdre au moins au niveau des extrémités longitudinales de la monture,
- la monture comprend une fenêtre de montage dudit organe,
- ledit capotage de l'organe obture au moins en partie ladite fenêtre de la monture,

L'invention concerne également un balai plat caréné d'essuie-glace, en particulier de véhicule, comprenant un adaptateur ou un ensemble tel que décrit ci-dessus.

Selon un vingt-quatrième aspect, l'invention concerne un carénage pour balai plat caréné d'essuie-glace, en particulier de véhicule, le carénage comprenant deux capots d'extrémité et une monture centrale qui est située entre les deux capots d'extrémité et qui comprend des moyens de fixation à une vertèbre de rigidification du balai ou à un organe de maintien de cette vertèbre, la monture centrale comportant à chacune de ses extrémités longitudinales des moyens de liaison à un des capots d'extrémité, caractérisé en ce que les moyens de liaison sont configurés pour coopérer par emboîtement avec des moyens complémentaires du capot d'extrémité correspondant, et en ce que le carénage est configuré pour que la force nécessaire pour désolidariser lesdits moyens de liaison desdits moyens complémentaires, en les désemboîtant les uns des autres, soit supérieure à la résistance à la rupture d'au moins une partie du carénage.

L'invention permet ainsi de rendre indémontable le carénage et d'empêcher ainsi une désolidarisation involontaire de la monture centrale des capots d'extrémité. La seule façon de désolidariser la monture centrale des capots d'extrémité est de la/les casser, ce qui rend le carénage inutilisable.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- les moyens de liaison sont des moyens d'articulation,
- lesdits moyens de liaison comprennent un premier doigt et lesdits moyens complémentaires comprennent un second doigt,
- l'un des premier et second doigts comprend un évidement d'engagement de l'autre des premier et second doigts,
- le premier doigt comprend deux parois latérales définissant entre elles ledit évidement,
- lesdites parois latérales comprennent des faces latérales internes en regard comportant chacun un trou borgne de réception d'un pion sensiblement cylindrique du second doigt,
- le trou borgne a une forme générale trapézoïdale dont la petite base a une forme incurvée concave et forme une portion de guidage en rotation dudit pion,
- l'évidement traverse ledit doigt et en ce que la grande base dudit trou borgne de chaque face interne est situé à une extrémité débouchant dudit évidement,
- le second doigt comprend deux faces latérales externes comportant lesdits pions sensiblement cylindriques,
- le second doigt a une forme générale trapézoïdale,
- le second doigt s'étend entre deux renforts,
- chaque pion comprend une partie chanfreiné configurée pour faciliter l'insertion du pion dans l'évidement du premier doigt, et une partie non chanfreiné pour rendre plus difficile le retrait du pion de l'évidement,
- le second doigt est relié par sa base à au moins une nervure de renfort sensiblement transversale,
- lesdits premier et second doigts ont des orientations sensiblement perpendiculaires,
- le carénage comprend deux parois latérales longitudinales, un bord longitudinal d'une première de ces parois étant relié à un bord longitudinal d'une seconde de ces parois de façon à former sensiblement un dièdre sur au moins une partie de la dimension longitudinale du carénage, au moins une desdites parois latérales longitudinales comportant au moins une zone amincie au voisinage desdits moyens de liaison et desdits moyens complémentaires, de façon à former au moins une zone de faiblesse.

La présente invention concerne également un balai plat caréné d'essuie-glace, en particulier de véhicule, comprenant un carénage tel que décrit ci-dessus.

Selon un vingt-cinquième aspect, l'invention concerne un embout d'extrémité pour un balai plat caréné d'essuie-glace, en particulier de véhicule, comportant un premier logement configuré pour recevoir une extrémité d'une vertèbre de rigidification du balai, caractérisé en ce qu'il comprend des moyens d'encliquetage élastique configurés pour coopérer avec un carénage dudit balai.

L'encliquetage élastique de l'embout permet notamment d'améliorer son maintien et sa position vis-à-vis du carénage. Il peut permettre de rendre prisonnier et imperdable l'embout, ce qui facilite son montage.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- lesdits moyens d'encliquetage élastique sont situés sur au moins une face externe dudit embout,
- lesdits moyens d'encliquetage élastique sont situés sur au moins un côté dudit embout,
- l'embout comprend deux faces latérales sensiblement parallèles et en ce que lesdits moyens d'encliquetage élastique sont en saillie sur ces faces latérales,
- lesdits moyens d'encliquetage élastique comprennent au moins une rampe présentant une paroi inclinée configurée pour coopérer par glissement avec un moyen correspondant du carénage et une face de butée configurée pour coopérer avec ledit moyen correspondant du carénage,
- lesdits moyens d'encliquetage élastique sont situés sur une partie médiane de l'embout,
- lesdits moyens d'encliquetage élastique sont sensiblement coplanaires,
- l'embout comprend un plan longitudinal médian de symétrie,
- l'embout comprend à une extrémité longitudinale des moyens de butée configurés pour coopérer avec un moyen correspondant dudit carénage après l'encliquetage élastique desdits moyens,

La présente invention concerne également un carénage pour un balai plat caréné d'essuie-glace, en particulier de véhicule, comprenant des moyens de guidage en coulissement configurés pour coopérer avec un embout tel que décrit ci-dessus.

Les moyens de guidage peuvent comporter deux crochets latéraux sensiblement en L configurés pour s'étendre de chaque côté dudit embout, chaque crochet comportant une partie sensiblement verticale dont l'extrémité inférieure est reliée à une partie sensiblement horizontale s'étendant du côté de l'autre crochet,

La présente invention concerne également un ensemble comportant un embout et un carénage tels que décrits ci-dessus.

Les moyens d'encliquetage peuvent être configurés pour coopérer avec lesdites parties verticales des crochets.

Lesdits moyens de butée peuvent être configurés pour coopérer avec lesdits crochets.

La présente invention concerne en outre un balai plat caréné d'essuie-glace, en particulier de véhicule, comprenant au moins un embout d'extrémité, un carénage, ou un ensemble tel que décrit ci-dessus.

Selon un vingt-sixième aspect, l'invention concerne une monture centrale pour un balai plat caréné d'essuie-glace, en particulier de véhicule, la monture ayant une forme allongée et comprenant à chacune de ses extrémités longitudinales des moyens de liaison à un capot d'extrémité du balai, la monture comprenant des moyens de fixation à une vertèbre de rigidification du balai ou à un organe de maintien de cette vertèbre, caractérisée en ce qu'il comprend en outre des moyens de verrouillage longitudinal de ladite vertèbre.

L'invention propose ainsi de bloquer longitudinalement la vertèbre au moyen de la monture centrale, ce qui peut permettre de simplifier d'autres pièces du balai telles que par exemple ses embouts d'extrémité.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- les moyens de liaison sont des moyens d'articulation,
- les moyens de verrouillage sont situés sur une extrémité inférieure de la monture,
- les moyens de verrouillage sont situés sensiblement au milieu de la monture,
- les moyens de verrouillage sont configurés pour s'étendre de part et d'autre de la vertèbre,
- les moyens de verrouillage sont sensiblement coplanaires,
- les moyens de verrouillage comprennent au moins un élément en saillie,
- les moyens de verrouillage comprennent au moins un élément en saillie sur une face latérale interne de la monture centrale et au moins un élément en saillie sur une face latérale interne en regard de la monture centrale,
- chaque élément en saillie a une forme générale trapézoïdale dont la grande base est reliée à la monture centrale,
- lesdits moyens de fixation comprennent au moins une paire de crochets latéraux s'étendant à distance l'un de l'autre et comportant chacun une encoche longitudinale configurée pour recevoir par coulissement longitudinal ladite vertèbre,
- la monture comprend deux paires de crochets qui sont à distance axiale l'une de l'autre, lesdits moyens de verrouillage étant situés entre lesdites paires de crochets,

La présente invention concerne également un ensemble comportant une monture centrale du type décrit ci-dessus et une vertèbre de rigidification, ladite vertèbre comportant sur au moins l'un de ses bords longitudinaux au moins ne échancrure configurée pour recevoir par emboîtement lesdits moyens de verrouillage.

La ou chaque échancrure peut avoir une forme générale en U ou en C. La vertèbre peut comprendre une échancrure sur chacun de ses bords longitudinaux.

La présente invention concerne également un balai plat caréné d'essuie-glace, en particulier de véhicule, comprenant une monture ou un ensemble tel que décrit ci-dessus.

Selon un vingt-septième aspect, l'invention concerne un organe de maintien d'une vertèbre de rigidification, pour un balai plat caréné d'essuie-glace, en particulier de véhicule, l'organe ayant une forme allongée et comportant un premier logement longitudinal de réception de la vertèbre de rigidification et un second logement longitudinal de réception d'un talon d'une lame d'essuyage, caractérisé en ce qu'il comprend en outre des premiers moyens de guidage en direction longitudinale, qui sont configurés pour coopérer avec un carénage dudit balai en vue de guider un coulissement longitudinal dudit organe vis-à-vis dudit carénage.

L'invention propose ainsi de guider l'organe par l'intermédiaire du carénage.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- l'organe comprend un tube longitudinal supérieur définissant intérieurement ledit premier logement et deux crochets longitudinaux inférieurs définissant entre eux ledit second logement, lesdits moyens de guidage s'étendant le long de bords longitudinaux dudit tube,
- les moyens de guidage comprennent deux nervures s'étendant respectivement le long de deux bords longitudinaux opposés dudit tube,
- ledit tube comprend deux parois latérales qui sont reliées entre elles par au moins une paroi transversale, lesdites nervures s'étendant vers le bas, du côté desdits crochets, dans le prolongement desdites parois latérales,
- les crochets ont en section une forme sensiblement en L et comprennent chacun une portion sensiblement verticale dont une extrémité supérieure est reliée audit tube et dont une extrémité inférieure est reliée à une portion sensiblement horizontale du crochet, lesdites nervures s'étendant sensiblement parallèlement et à distance des portions verticales desdits crochets,

La présente invention concerne également un carénage pour un balai plat caréné d'essuie-glace, en particulier de véhicule, comprenant des seconds moyens de guidage en coulissement configurés pour coopérer avec lesdits premiers moyens de guidage d'un organe tel que décrit ci-dessus.

Les seconds moyens de guidage peuvent comporter deux crochets latéraux sensiblement en L configurés pour s'étendre de chaque côté dudit organe, chaque crochet comportant une partie sensiblement verticale dont l'extrémité inférieure est reliée à une partie sensiblement horizontale s'étendant du côté de l'autre crochet.

La partie sensiblement horizontale de chaque crochet peut comprendre une rainure longitudinale configurée pour recevoir une desdites nervures de l'organe. Les parties verticales des crochets peuvent comprendre des moyens d'appui ponctuel sur ledit organe. Les parties verticales des crochets peuvent comprendre chacune un ergot dont l'extrémité libre est configurée pour coopérer avec ledit organe. L'ergot ou chaque ergot peut avoir une forme générale arrondie. L'ergot peut être situé sensiblement au milieu de la partie verticale de la ou de chaque crochet.

La présente invention concerne également un ensemble comportant un organe et un carénage tels que décrit ci-dessus.

La présente invention concerne encore un balai plat caréné d'essuie-glace, en particulier de véhicule, comprenant un organe et/ou un carénage tels que décrits ci-dessus.

Selon un vingt-huitième aspect, l'invention concerne un embout d'extrémité pour un balai plat caréné d'essuie-glace, en particulier de véhicule, comportant un premier logement configuré pour recevoir une extrémité d'une vertèbre de rigidification du balai, caractérisé en ce qu'il comprend des moyens de guidage et de coulissement longitudinal configurés pour coopérer avec un carénage dudit balai.

L'invention propose ainsi de guider le coulissement de l'embout par l'intermédiaire du carénage. Dans ce cas, ainsi que dans les autres aspects de l'invention dans lesquels le carénage est destiné à coopérer avec l'embout, le carénage peut comprend les moyens précités à ses extrémités libres, ce qui rigidifie le carénage et donc le balai et est donc avantageux.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- lesdits moyens de guidage et de coulissement comprennent deux pistes longitudinales latérales et parallèles définissant chacune au moins une surface de glissement d'un moyen correspondant dudit carénage,
- chacune desdites pistes comprend une première surface de glissement dont un bord longitudinal est relié à un bord longitudinal d'une seconde surface de glissement,
- lesdites première et seconde surfaces sont sensiblement perpendiculaires,
- chacune desdites pistes est reliée par une de ses extrémités longitudinales à une face transversale de butée,
- lesdits moyens de guidage sont situés sur une face inférieure dudit embout,
- l'embout comprend un autre logement de réception d'une extrémité d'une lame d'essuyage et une gorge longitudinale qui est formée sur une face inférieure de l'embout et qui débouche dans cet autre logement, lesdits moyens de guidage s'étendant le long et de part et d'autre de ladite gorge,
- l'embout comprend des moyens d'encliquetage élastique configurés pour coopérer avec le carénage dudit balai.

La présente invention concerne en outre un carénage pour un balai plat caréné d'essuie-glace, en particulier de véhicule, caractérisé en ce qu'il comprend des moyens de guidage en coulissement configurés pour coopérer avec un embout tel que décrit ci-dessus.

Les moyens de guidage peuvent comporter deux crochets latéraux sensiblement en L configurés pour s'étendre de chaque côté dudit embout, chaque crochet comportant une partie sensiblement verticale dont l'extrémité inférieure est reliée à une partie sensiblement horizontale s'étendant du côté de l'autre crochet.

La présente invention concerne encore un ensemble comportant un embout et un carénage tels que décrits ci-dessus

Lesdits moyens de guidage du carénage peuvent coopérer par glissement avec lesdites pistes de l'embout. Lesdits moyens d'encliquetage peuvent coopérer avec les parties verticales desdits crochets. L'embout peut comprendre en outre des moyens de butée configurés pour coopérer avec lesdits crochets après l'encliquetage élastique.

La présente invention concerne encore un balai plat caréné d'essuie-glace, en particulier de véhicule, comprenant un embout d'extrémité, un carénage, ou un ensemble tel que décrit ci-dessus.

Selon un vingt-neuvième aspect, l'invention concerne un carénage pour balai plat caréné d'essuie-glace, en particulier de véhicule, le carénage ayant une forme allongée, caractérisé en ce qu'il comporte à chacune de ses extrémités longitudinales un logement de montage et de coulissement longitudinal d'un embout d'extrémité dudit balai, chaque extrémité longitudinale du carénage comportant des premiers moyens de butée configurés pour coopérer avec ledit embout et le bloquer dans une direction longitudinale, et des seconds moyens de butée configurés pour coopérer avec ledit embout et le bloquer dans la direction longitudinale opposée, lesdits premiers et seconds moyens étant à distance longitudinale les uns des autres de façon à former une cage de retenue dudit embout.

L'invention propose ainsi de bloquer longitudinalement l'embout au moyen d'une cage de retenue de l'embout, cette cage étant formée par des moyens du carénage.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- le carénage comprend deux parois latérales longitudinales, un bord longitudinal d'une première de ces parois étant relié à un bord longitudinal d'une seconde de ces parois de façon à former sensiblement un dièdre sur au moins une partie de la dimension longitudinale du carénage, lesdits logements étant situés à l'intérieur du dièdre,
- lesdits premier et second moyens de blocage sont en saillie à l'intérieur dudit dièdre,
- lesdits premier et second moyens de blocage comprennent au moins une nervure transversale, ladite nervure étant de préférence une nervure de liaison desdites parois latérales longitudinales,
- une première nervure transversale forme des moyens de butée de l'embout dans une première direction longitudinale,
- ladite première nervure transversale comprend une partie médiane s'étendant entre lesdites parois latérales longitudinales, et deux parties latérales situées respectivement au moins en partie sur lesdites parois latérales longitudinales, au moins une partie desdites parties latérales comportant une face de butée configurée pour coopérer avec ledit embout,
- lesdits premier et second moyens de blocage comprennent au moins une paire de crochets latéraux sensiblement en L configurés pour s'étendre de chaque côté dudit embout,
- chaque crochet comporte une partie sensiblement verticale dont l'extrémité inférieure est reliée à une partie sensiblement horizontale s'étendant du côté de l'autre crochet, les parties horizontales des crochets comportant des faces de butée configurées pour coopérer avec ledit embout,
- le carénage comprend, sensiblement au droit desdits crochets, une seconde nervure transversale de liaison desdites parois latérales longitudinales,
- ladite seconde nervure comprend un bord inférieur comprenant des moyens d'appui ponctuel sur ledit embout,
- le carénage comprend deux capots d'extrémité et une monture centrale qui est située entre les deux capots d'extrémité et qui comprend des moyens de fixation à une vertèbre de rigidification du balai ou à un organe de maintien de cette vertèbre, chaque capot d'extrémité comportant un desdits logements à son extrémité longitudinale libre.

La présente invention concerne encore un ensemble comportant un carénage tel que décrit ci-dessus et au moins un embout d'extrémité pour un balai plat caréné d'essuie-glace, en particulier de véhicule, le ou chaque embout comportant un premier logement configuré pour recevoir une extrémité d'une vertèbre de rigidification du balai.

Le ou chaque embout peut comprendre au moins une première face transversale de butée configurée pour coopérer avec lesdits premiers moyens de butée, et au moins une seconde face transversale de butée configurée pour coopérer avec lesdits seconds moyens de butée.

Ladite au moins une première face de butée peut être située sensiblement au milieu dudit embout et ladite au moins une seconde face de butée est située à une extrémité longitudinale dudit embout.

La présente invention concerne encore un balai plat caréné d'essuie-glace, en particulier de véhicule, comprenant un carénage ou un ensemble tel que décrit ci-dessus.

Selon un trentième aspect, l'invention concerne un carénage pour balai plat caréné d'essuie-glace, en particulier de véhicule, comprenant deux parois latérales longitudinales, un bord longitudinal d'une première de ces parois étant relié à un bord longitudinal d'une seconde de ces parois de façon à former sensiblement un dièdre sur au moins une partie de la dimension longitudinale du carénage, caractérisé en ce que des faces inférieures ou internes desdites parois sont reliées entre elles par des nervures de renfort dont au moins certaines présentent des hauteurs différentes.

La présente invention a notamment pour objet de conférer à des nervures de renfort du carénage des fonctions additionnelles qui sont notamment fonction de leurs hauteurs. Dans la présente demande, on entend par hauteur d'une nervure sa dimension transversale sensiblement verticale. Les autres dimensions d'une nervure de renfort sont son épaisseur, mesurée sensiblement le long de l'axe longitudinal du carénage, et sa largeur ou longueur, mesurée sensiblement dans une direction transversale sensiblement horizontale.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- le carénage comprend deux capots d'extrémité et une monture centrale qui est située entre les deux capots d'extrémité et qui comprend des moyens de fixation à une vertèbre de rigidification du balai ou à un organe de maintien de cette vertèbre, lesdites nervures de hauteurs différentes étant situées sur la monture centrale et/ou lesdits capots d'extrémité,
- chaque capot d'extrémité comprend des nervures de renfort de plus petite hauteur et des nervures de renfort de plus grande hauteur, lesdites nervures de plus grande hauteur étant situées au voisinage des extrémités longitudinales libres des capots d'extrémité,

- les nervures de renfort de plus grande hauteur comprennent des moyens de butée et/ou de guidage en direction longitudinale, qui sont configurés pour coopérer avec au moins un embout d'extrémité dudit balai, lesdites nervures de renfort de plus grande hauteur étant de préférence au nombre de deux,
- une première des nervures de renfort de plus grande hauteur comprend une partie médiane s'étendant entre lesdites parois latérales longitudinales, et deux parties latérales situées respectivement au moins en partie sur lesdites parois latérales longitudinales, au moins l'une desdites parties latérales comportant une face de butée configurée pour coopérer avec un embout d'extrémité,
- une seconde des nervures de renfort de plus grande hauteur comprend un bord inférieur comprenant des moyens d'appui ponctuel sur un embout d'extrémité,
- les moyens d'appui ponctuel comprennent au moins un ergot dont l'extrémité libre est configurée pour coopérer avec ledit embout,
- l'ergot ou chaque ergot a une forme générale arrondie,
- l'ergot est situé sensiblement au milieu dudit bord inférieur,
- ladite seconde des nervures de renfort de plus grande hauteur est située entre ladite première des nervures de renfort de plus grande hauteur et l'extrémité libre la plus proche dudit capot d'extrémité,
- le carénage comprend ou forme au moins un déflecteur.

La présente invention concerne également un capot d'extrémité pour un balai plat caréné d'essuie-glace, en particulier de véhicule, le capot ayant une forme allongée et comprenant à une de ses extrémités longitudinales des moyens de liaison à une monture centrale du balai, caractérisé en ce qu'il comprend deux parois latérales longitudinales, un bord longitudinal d'une première de ces parois étant relié à un bord longitudinal d'une seconde de ces parois de façon à former sensiblement un dièdre sur au moins une partie de sa dimension longitudinale, et en ce que des faces inférieures ou internes desdites parois sont reliées entre elles par des nervures de renfort dont au moins certaines présentent des hauteurs différentes.

La présente invention concerne encore un balai plat caréné d'essuie-glace, en particulier de véhicule, comprenant un carénage ou au moins un capot d'extrémité tel que décrit ci-dessus.

Selon un trentième-et-unième aspect, l'invention concerne un carénage pour balai plat caréné d'essuie-glace, en particulier de véhicule, le carénage comprenant deux capots d'extrémité et une monture centrale qui est située entre les deux capots d'extrémité et qui comprend des moyens de fixation à une vertèbre de rigidification du balai ou à un organe de maintien de cette vertèbre, la monture centrale comportant à chacune de ses extrémités longitudinales des moyens d'articulation configurés pour coopérer avec des moyens complémentaires d'un des capots d'extrémité, caractérisé en ce que les moyens d'articulation comprennent un premier doigt comportant au moins une première et une seconde surfaces de guidage en pivotement dudit capot d'extrémité autour d'un axe d'articulation, ladite au moins une seconde surface de guidage étant à distance radiale de ladite de au moins une première surface de guidage, par rapport audit axe, et les extrémités circonférentielles de ladite au moins une seconde surface de guidage étant reliées à des surfaces de butée.

La présente invention propose ainsi un perfectionnement aux moyens d'articulation de la technique antérieure, l'une des surfaces de guidage étant ici associée à des surfaces de butée.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- ladite au moins une seconde surface de guidage est située radialement à l'extérieur de ladite au moins une première surface de guidage,
- lesdites première et seconde surfaces de guidage ont des étendues angulaires proches et par exemple comprise entre 20 et 50° environ,
- les surfaces de butée ont chacune une orientation sensiblement radiale par rapport audit axe d'articulation,
- lesdits moyens d'articulation comprennent un premier doigt et lesdits moyens complémentaires comprennent un second doigt, l'un des premier et second doigts comprenant un évidement d'engagement de l'autre des premier et second doigts,
- le premier doigt comprend deux parois latérales définissant entre elles ledit évidement,
- lesdites parois latérales comprennent des faces latérales internes en regard comportant chacune un trou borgne de réception d'un pion sensiblement cylindrique du second doigt,
- le trou borgne a une forme générale trapézoïdale dont la petite base a une forme incurvée concave et définit ladite première surface de guidage,
- les parois latérales comprennent des bords longitudinaux supérieurs qui comportent chacun une encoche définissant ladite au moins une seconde surface de guidage,
- l'évidement traverse ledit doigt et en ce que la grande base dudit trou borgne de chaque face interne est située à une extrémité débouchante dudit évidement,
- le second doigt comprend deux faces latérales externes comportant des pions sensiblement cylindriques,
- le second doigt a une forme générale trapézoïdale,
- le second doigt s'étend entre deux renforts,
- chaque pion comprend une partie chanfreinée configurée pour faciliter l'insertion du pion dans l'évidement du premier doigt, et une partie non chanfreinée pour rendre plus difficile le retrait du pion de l'évidement,
- le second doigt est relié par sa base à au moins une nervure de renfort sensiblement transversale dont le ou les bords inférieurs libres sont configurés pour coopérer avec ladite seconde surface de guidage ainsi qu'avec lesdites surfaces de butée.

La présente invention concerne également un balai plat caréné d'essuie-glace, en particulier de véhicule, comprenant un carénage tel que décrit ci-dessus.

Selon un trentième-deuxième aspect, l'invention concerne un procédé de montage d'un balai plat caréné d'essuie-glace, en particulier de véhicule, ledit balai comportant un carénage comprenant deux capots d'extrémité et une monture centrale qui est située entre les deux capots d'extrémité, ladite monture centrale comprenant des moyens de liaison des capots et des moyens de fixation à une vertèbre de rigidification du balai ou à un organe de maintien de cette vertèbre, ledit balai comportant en outre deux embouts d'extrémité qui sont chacun configurés pour recevoir une extrémité de ladite vertèbre ou une extrémité de l'organe de maintien de la vertèbre, le procédé étant caractérisé en ce qu'il comprend les étapes consistant à :
a) monter les embouts d'extrémité sur la vertèbre ou sur l'organe de maintien de la vertèbre,
b) puis monter les capots d'extrémité sur les embouts d'extrémité et la monture centrale.

Par opposition à la technique antérieure, les capots d'extrémité sont ici montés après le montage des embouts d'extrémité. Le montage des capots d'extrémité peut permettre de verrouiller l'ensemble des pièces du balai.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- le procédé comprend l'étape consistant à :
   c) avant l'étape a), monter la monture centrale sur la vertèbre ou sur l'organe de maintien de cette vertèbre ;
- le procédé comprend l'étape consistant à :
   d) avant l'étape c), monter un talon d'une lame d'essuyage dans un premier logement longitudinal dudit organe de maintien ;
- l'étape c) comprend les sous-étapes consistant à :
   c1) monter la monture centrale sur ledit organe de maintien, puis
   c2) insérer la vertèbre dans un second logement longitudinal dudit organe de maintien ;
- les moyens de fixation de la monture centrale comprenant au moins une paire de crochets latéraux s'étendant à distance l'un de l'autre et comportant chacun une encoche longitudinale configurée pour recevoir par coulissement longitudinal ladite vertèbre, la sous-étape c1) consiste à engager lesdits crochets dans des découpes dudit organe de maintien de façon à ce que lesdites encoches des crochets soient alignées avec ledit second logement dudit organe de maintien ;
- l'étape a) consiste à monter les embouts d'extrémité sur la vertèbre et la lame d'essuyage, chaque embout d'extrémité comportant un logement de réception d'une extrémité de la vertèbre et un logement de réception d'une extrémité de la lame d'essuyage ;
- l'étape b) comprend les sous-étapes consistant à :
   b1) engager un des embouts d'extrémité dans une extrémité longitudinale d'un des capots d'extrémité, puis
   b2) relier l'extrémité longitudinale opposée de ce capot à la monture centrale de façon à assembler leurs moyens de liaison,
   les sous-étapes b1) et b2) étant réalisées pour chaque embout d'extrémité ;
- lors de la sous-étape b1), ledit capot d'extrémité est présenté de façon inclinée par rapport à ladite vertèbre ;
- lors de la sous-étape b2), ladite extrémité longitudinale opposée du capot d'extrémité est rabattue sur la monture centrale ;
- le rabattement est réalisé jusqu'à ce que les moyens de liaison soient formés par emboîtement d'un moyen dudit capot d'extrémité dans un moyen complémentaire de ladite monture centrale ;
- les moyens de liaison sont du type indémontable, la force nécessaire pour désassembler ces moyens de liaison étant supérieure à la résistance à la rupture d'au moins une partie du carénage de façon à ce qu'il se casse en cas de tentative de démontage de la liaison ;
- la vertèbre ayant une forme cintrée au repos, il comprend une étape consistant à contraindre la vertèbre pour qu'elle ait une forme sensiblement rectiligne pendant au moins une partie des étapes précitées ;
- lors de l'étape a), les embouts d'extrémité sont montés simultanément sur les extrémités de la vertèbre.

Selon un trentième-troisième aspect, l'invention concerne un balai plat d'essuie-glace, en particulier de véhicule, ledit balai ayant une forme allongée et comportant au moins un premier déflecteur s'étendant le long dudit balai sur au moins une partie de sa dimension longitudinale, caractérisé en ce qu'il comprend à chacune de ses extrémités longitudinales un second déflecteur qui s'étend sensiblement entre une extrémité longitudinale du premier déflecteur et un bord longitudinal du balai.

L'invention permet notamment d'améliorer l'aérodynamisme du balai. Le second déflecteur a ici une fonction comparable à celle des ailettes situées aux extrémités des ailes d'un avion. Le second déflecteur permet notamment d'améliorer le plaquage du balai sur la vitre du véhicule à nettoyer, au niveau de l'extrémité du balai au niveau de laquelle ce second déflecteur est situé.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- ledit second déflecteur s'étend sensiblement entre l'extrémité longitudinale du premier déflecteur et une extrémité longitudinale dudit bord longitudinal du balai,
- le premier déflecteur comprend une première arête qui s'étend le long du balai, et dans lequel le second déflecteur comprend une seconde arête dont une extrémité est reliée à une extrémité de la première arête,
- la seconde arête a une orientation sensiblement transversale par rapport à un axe longitudinal du balai,
- la seconde arête est à l'interface de deux faces qui forment entre elles un angle inférieur à 90°,
- la seconde arête est à l'interface de deux faces dont une est incurvée concave et reliée à ladite première arête,
- ladite face incurvée concave présente un rayon de courbure qui varie le long de ladite seconde nervure,
- ladite face incurvée concave comprend un creux au voisinage du second déflecteur,
- en section longitudinale, ladite face incurvée concave a un angle α par rapport à un axe longitudinal du balai, qui est inférieur ou égal à 20°,
- ladite seconde arête comprend une portion médiane rectiligne et deux portions d'extrémité incurvées de liaison respectivement à ladite première arête et audit bord longitudinal,
- le balai est un balai plat caréné et comprend un carénage comportant deux capots d'extrémité et une monture centrale qui est située entre les deux capots d'extrémité, le premier déflecteur s'étendant le long des capots d'extrémité et au moins une partie de la monture centrale et chaque capot d'extrémité comportant un second déflecteur à son extrémité longitudinale libre,
- les seconds déflecteurs sont portés par des embouts d'extrémité.

La présente invention concerne également un carénage pour balai plat caréné d'essuie-glace, en particulier de véhicule, comprenant deux parois latérales longitudinales, un bord longitudinal d'une première de ces parois étant relié à un bord longitudinal d'une seconde de ces parois de façon à former sensiblement un dièdre sur au moins une partie de la dimension longitudinale du carénage, caractérisé en ce qu'il comprend en outre au moins un premier déflecteur s'étendant sur au moins une partie de sa dimension longitudinale et, à chacune de ses extrémités longitudinales, un second déflecteur qui s'étend sensiblement entre une extrémité longitudinale du premier déflecteur et un bord longitudinal du carénage.

Le carénage peut comprendre deux capots d'extrémité et une monture centrale qui est située entre les deux capots d'extrémité et qui comprend des moyens de fixation à une vertèbre de rigidification du balai ou à un organe de maintien de cette vertèbre, les seconds déflecteurs étant situés respectivement aux extrémités libres des capots d'extrémité ou étant portés par des éléments de carénage indépendants desdits capots et situés aux extrémités libres des capots.

La présente invention concerne encore un capot d'extrémité pour un balai plat caréné d'essuie-glace, en particulier de véhicule, le capot ayant une forme allongée et comportant à une de ses extrémités longitudinales des moyens de liaison à une monture centrale, caractérisé en ce qu'il comprend en outre un premier déflecteur s'étendant sur au moins une partie de sa dimension longitudinale et, à son extrémité longitudinale opposée auxdits moyens de liaison, un second déflecteur qui s'étend sensiblement entre une extrémité longitudinale du premier déflecteur et un bord longitudinal du capot d'extrémité.

La présente invention concerne encore un embout d'extrémité pour un balai plat caréné d'essuie-glace, en particulier de véhicule, comportant un premier logement configuré pour recevoir une extrémité d'une vertèbre de rigidification du balai, et un second logement configuré pour recevoir une extrémité d'une lame d'essuyage du balai, caractérisé en ce qu'il comprend en outre un élément de carénage formant un déflecteur qui s'étend sensiblement dans une direction transversale par rapport à un axe longitudinal de l'embout.

Selon un trentième-quatrième aspect, l'invention concerne un embout d'extrémité pour un balai plat caréné d'essuie-glace, en particulier de véhicule, comportant :
- un premier logement configuré pour recevoir une extrémité d'une vertèbre de rigidification du balai,
- un second logement configuré pour recevoir une extrémité d'une lame d'essuyage du balai,
- une gorge de montage de ladite extrémité de la lame d'essuyage, ladite gorge débouchant dans ledit second logement et étant située sur une face inférieure de l'embout,
caractérisé en ce que ledit premier logement est fermé du côté de ladite face inférieure de l'embout.

L'invention permet notamment d'améliorer l'esthétique de l'embout car c'est sa face inférieure qui peut être visible par l'utilisateur, sa face supérieure étant en général caché par le carénage du balai.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- ledit premier logement est ouvert du côté d'une face supérieure de l'embout, opposée à ladite face inférieure,
- l'embout comprend sur ladite face supérieure deux lumières allongées et parallèles qui communiquent avec ledit premier logement,
- l'embout comprend, dans une ou chacune desdites lumières, une patte en saillie de verrouillage de ladite vertèbre,
- ladite patte de verrouillage est élastiquement déformable et est configurée pour coopérer par encliquetage élastique avec ladite vertèbre,
- l'embout comprend, dans une ou chacune desdites lumières, au moins un élément en saillie de centrage et de guidage de ladite vertèbre,
- lesdites lumières s'étendent de part et d'autre d'une bande de matière qui définit ladite face supérieure et qui comprend sur cette face au moins un élément en saillie de guidage de l'embout,
- ladite gorge s'étend sensiblement au milieu de l'embout et s'étend entre deux pistes longitudinales de l'embout qui comprennent chacune au moins une surface longitudinale de guidage de l'embout,
- chacune desdites pistes longitudinales de l'embout comprend au moins une surface transversale de butée, qui est reliée à ladite au moins une surface de guidage.

La présente invention concerne encore un capot d'extrémité pour un balai plat caréné d'essuie-glace, en particulier de véhicule, ce capot ayant une forme générale allongée et comportant à une extrémité longitudinale deux ailes latérales sensiblement parallèles définissant entre elles un espace configuré pour recevoir ledit embout d'extrémité, le capot comprenant en outre des moyens de guidage en coulissement configurés pour coopérer avec ledit embout d'extrémité.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- les moyens de guidage comportent deux crochets latéraux sensiblement en L configurés pour s'étendre de chaque côté dudit embout, chaque crochet comportant une partie sensiblement verticale dont l'extrémité inférieure est reliée à une partie sensiblement horizontale s'étendant du côté de l'autre crochet et configurée pour s'étendre au niveau de ladite face inférieure de l'embout,
- les extrémités supérieures des parties verticales des crochets sont sensiblement reliées ensemble par une paroi supérieure comportant des moyens d'appui ponctuel sur ledit embout,
- les moyens d'appui ponctuel de la paroi supérieure comprennent au moins un ergot,
- l'ergot de la paroi supérieure a une forme générale arrondie et est par exemple situé au milieu de la paroi supérieure,
- les crochets, et éventuellement ladite paroi supérieure, sont définis par une paroi transversale du capot,
- le capot a en section une forme sensiblement de dièdre et comprend deux parois longitudinales reliées entre elles et définissant entre elles un logement de montage dudit embout,
- la paroi transversale relie les deux parois longitudinales du capot,
- la paroi transversale est une paroi de rigidification du capot.

La présente invention concerne encore un ensemble comportant un embout d'extrémité et un capot d'extrémité tels que décrits ci-dessus.

La présente invention concerne encore un balai plat caréné d'essuie-glace, en particulier de véhicule, comprenant un embout d'extrémité et/ou un capot d'extrémité tels que décrits ci-dessus.

Selon un trentième-cinquième aspect, l'invention concerne un carénage pour balai plat caréné d'essuie-glace, en particulier de véhicule, comprenant deux parois latérales longitudinales, un bord longitudinal d'une première de ces parois étant relié à un bord longitudinal d'une seconde de ces parois de façon à former sensiblement un dièdre sur au moins une partie de la dimension longitudinale du carénage, caractérisé en ce qu'au moins une des faces desdites parois, situées à l'intérieur du dièdre, comporte une gorge configurée pour autoriser le montage et/ou le coulissement d'un élément du balai ou d'un élément de support du balai.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- le carénage comprend deux capots d'extrémité et une monture centrale qui est située entre les deux capots d'extrémité et qui comprend des moyens de fixation à une vertèbre de rigidification du balai ou à un organe de maintien de cette vertèbre, au moins une des faces inférieures ou internes des parois latérales longitudinales de la monture et/ou des capots d'extrémité comportant une gorge configurée pour autoriser le montage d'un élément du balai ou d'un élément de support du balai,
- la monture comprend deux premières gorges configurées pour autoriser le montage dudit élément de support du balai, qui sont situées respectivement au voisinage des extrémités longitudinales de la monture,
- les premières gorges sont situées sur la face inférieure d'une seule desdites parois de la monture,
- les premières gorges sont des moyens de coulissement et/ou de dégagement aménagés dans la monture centrale. Ces moyens sont ménagés pour laisser coulisser l'organe de maintien de la vertèbre de rigidification vis-à-vis de la monture centrale,
- les premières gorges sont sensiblement alignées,
- la monture comprend à chacune de ses extrémités longitudinales une paroi transversale de liaison desdites parois latérales longitudinales,
- les premières gorges s'étendent sensiblement dans un plan passant par des bords inférieurs libres desdites parois transversales,
- ledit plan passe sensiblement par un bord inférieur libre de l'une des parois latérales longitudinales,
- chaque capot d'extrémité comprend une autre gorge, appelée deuxième gorge, configurée pour autoriser le montage et le coulissement d'un embout d'extrémité du balai, ledit capot d'extrémité est articulé sur la monture centrale,
- ladite deuxième gorge est située au voisinage d'une extrémité longitudinale de chaque capot d'extrémité,
- chaque capot d'extrémité comprend à son extrémité longitudinale libre une paroi transversale de liaison desdites parois latérales longitudinales,
- ladite deuxième gorge s'étend sensiblement dans un plan passant par un bord inférieur libre de ladite paroi transversale,
- ladite deuxième gorge s'étend au voisinage d'un moyen de guidage et/ou de butée configuré pour coopérer avec un embout d'extrémité du balai,
- ledit moyen de guidage et/ou de butée comprend au moins une nervure en saillie de liaison desdites parois latérales longitudinales,
- la ou chaque gorge a une forme allongée qui s'étend sensiblement parallèlement à un axe longitudinal du carénage.

On notera que l'invention couvre soit la monture centrale comprenant au moins une première gorge telle que détaillée ci-dessus, soit au moins un capot d'extrémité comprenant au moins une gorge, autrement appelée deuxième gorge, telle que détaillée ci-dessus, soit un carénage comprenant une monture centrale et deux capots d'extrémité, ces deux éléments comprenant leur gorge respectives selon l'un quelconque des aspects détaillés ci-dessus.

La présente invention concerne également un balai plat caréné d'essuie-glace, en particulier de véhicule, comprenant un carénage tel que décrit ci-dessus.

Selon un trentième-sixième aspect, l'invention concerne un élément de balai plat caréné d'essuie-glace, en particulier de véhicule, cet élément comportant un logement longitudinal configuré pour recevoir un talon d'une lame d'essuyage dudit balai, et une gorge longitudinale inférieure qui débouche dans ledit premier logement et dans laquelle une partie de la lame est apte à coulisser longitudinalement, caractérisé en ce que ladite gorge est reliée à une lumière qui est configurée pour autoriser le passage dudit talon et le démontage de la lame.

Il est ainsi envisageable de retirer la lame de l'élément du balai, par exemple en vue de son remplacement en cas d'usure. Ainsi, même si le balai est du type indémontable comme décrit dans ce qui précède, la lame pourrait être remplacée en cas d'usure.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- la lumière a une forme générale rectangulaire,
- la lumière a une largeur ou dimension transversale configurée pour être au moins égale à celle dudit talon,
- la lumière a une largeur ou dimension transversale sensiblement égale à celle dudit premier logement,
- la lumière s'étend depuis une extrémité longitudinale de ladite gorge,
- la lumière et la gorge sont sensiblement coplanaires,
- l'élément comprend un second logement de réception d'une vertèbre de rigidification dudit balai,
- l'élément est un embout d'extrémité du balai ou un organe de maintien d'une lame d'essuyage.

La présente invention concerne encore un balai plat caréné d'essuie-glace, en particulier de véhicule, comprenant un élément tel que décrit ci-dessus

La lumière peut être située à distance longitudinale de l'extrémité longitudinale libre la plus proche dudit balai.

La présente invention concerne encore un procédé de démontage d'une lame d'essuyage d'un balai plat caréné d'essuie-glace, en particulier de véhicule, caractérisé en ce qu'il comprend les étapes consistant à :
a) faire coulisser une extrémité longitudinale du talon de la lame d'essuyage dans le premier logement dudit élément jusqu'à ce qu'il soit situé au niveau de ladite lumière,
b) retirer cette extrémité du talon dudit premier logement, à travers ladite lumière, puis
c) sortir complètement la lame dudit logement à travers ladite lumière.

Au moins une partie de la lame d'essuyage peut être comprimée en direction longitudinale lors de l'étape a).

Selon un trentième-septième aspect, l'invention concerne un carénage pour balai plat caréné d'essuie-glace, en particulier de véhicule, comprenant des faces externes configurées pour être visibles en position d'utilisation dudit balai, caractérisé en ce qu'au moins certaines desdites faces externes comprennent des états de surface différents.

L'invention peut permettre d'améliorer l'esthétique du carénage. Elle peut également permettre d'adapter l'état de surface d'une face externe en fonction de l'usage prévue pour cette face.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- au moins certaines desdites faces externes présentent des rugosités différentes,
- le carénage comprend deux capots d'extrémité et une monture centrale qui est située entre les deux capots d'extrémité et qui comprend des moyens de fixation à une vertèbre de rigidification du balai ou à un organe de maintien de cette vertèbre, lesdites faces externes présentant des états de surface différents étant situées sur la monture centrale,
- la monture centrale comprend deux faces latérales inférieures sensiblement parallèles et deux faces latérales supérieures, lesdites faces inférieures étant plus lisses que lesdites faces supérieures,
- au moins une desdites faces inférieures est configurée pour recevoir une marque apposée ou gravée,
- au moins une desdites faces inférieures est configurée pour recevoir un moyen collé tel qu'une étiquette, par exemple une pastille de vieillissement,
- les faces inférieures ont un état de surface du type VDI15,
- les faces supérieures ont un état de surface du type VD130.

La présente invention concerne encore une monture centrale pour un balai plat caréné d'essuie-glace, en particulier de véhicule, la monture centrale ayant une forme allongée et comprenant à chacune de ses extrémités longitudinales des moyens de liaison à un capot d'extrémité, la monture centrale comprenant en outre des faces externes configurées pour être visibles en position d'utilisation dudit balai, caractérisé en ce qu'au moins certaines desdites faces externes comprennent des états de surface différents.

La présente invention concerne également un balai plat caréné d'essuie-glace, en particulier de véhicule, comprenant un carénage ou une monture centrale du type décrit ci-dessus.

La présente invention concerne en outre un procédé de réalisation d'un carénage ou d'une monture centrale du type précité, le carénage ou la monture étant réalisé par injection moulage, procédé dans lequel, avant l'injection dans un moule, seulement certaines faces internes de moulage dudit moule sont grainées.

Selon un trentième-huitième aspect, l'invention concerne un embout d'extrémité pour un balai plat caréné d'essuie-glace, en particulier de véhicule, comportant un premier logement configuré pour recevoir une extrémité d'une vertèbre de rigidification du balai, caractérisé en ce qu'il est élastiquement déformable de façon à autoriser le montage de la vertèbre dans ledit premier logement par déformation élastique de l'embout.

L'invention propose ainsi un perfectionnement aux technologies antérieures dans lequel l'embout est élastiquement déformable.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- l'embout comprend un second logement configuré pour recevoir une extrémité d'une lame d'essuyage, et une première gorge longitudinale qui est située sur une paroi inférieure dudit embout et qui débouche dans ledit second logement,
- lesdits premier et second logements sont séparés l'un de l'autre par une paroi transversale qui comporte une seconde gorge longitudinale débouchant dans lesdits logements,
- l'embout est configuré pour être déformable par écartement et rapprochement de parties d'extrémité longitudinales s'étendant de part et d'autre de ladite première ou seconde gorge,
- l'embout comprend des moyens de guidage et de coulissement longitudinal configurés pour coopérer avec un carénage dudit balai,
- lesdits moyens de guidage et de coulissement comprennent deux pistes longitudinales latérales et parallèles définissant chacune au moins une surface de glissement d'un moyen correspondant dudit carénage,
- chacune desdites pistes comprend une première surface de glissement dont un bord longitudinal est relié à un bord longitudinal d'une seconde surface de glissement,
- lesdites première et seconde surfaces sont sensiblement perpendiculaires,
- chacune desdites pistes est reliée par une de ses extrémités longitudinales à une face transversale de butée,
- lesdits moyens de guidage sont situés sur une face inférieure dudit embout.

La présente invention concerne également un crénage pour un balai plat caréné d'essuie-glace, en particulier de véhicule, caractérisé en ce qu'il comprend des moyens de verrouillage et de blocage d'un embout tel que décrit ci-dessus, pour limiter voire empêcher une déformation de ce dernier.

Lesdits moyens de verrouillage peuvent comporter des moyens de guidage en coulissement dudit embout.

Lesdits moyens de guidage peuvent comporter deux crochets latéraux sensiblement en L configurés pour s'étendre de chaque côté dudit embout, chaque crochet comportant une partie sensiblement verticale dont l'extrémité inférieure est reliée à une partie sensiblement horizontale s'étendant du côté de l'autre crochet.

La présente invention concerne également un ensemble comportant un embout et un carénage tels que décrits ci-dessus.

La présente invention concerne également un balai plat caréné d'essuie-glace, en particulier de véhicule, comprenant un embout d'extrémité, un carénage, ou un ensemble tel que décrit ci-dessus.

Selon un trentième-neuvième aspect, l'invention concerne un balai plat caréné d'essuie-glace, en particulier de véhicule, comprenant un carénage et un balai plat, ledit balai plat comprend au moins deux vertèbres de rigidification qui sont sensiblement coplanaires et sont configurées pour enserrer entre elles une partie d'une lame d'essuyage du balai, caractérisé en ce que ledit carénage comprend des moyens configurés pour coopérer avec les vertèbres afin de guider en coulissement longitudinal le balai plat vis-à-vis du carénage.

Un exemple de réalisation consiste en ce que les moyens de guidage coopérant avec les vertèbres, sont positionnés sur une portion du capot d'extrémité, ledit capot d'extrémité étant configuré pour recevoir un embout d'extrémité. Une fois le balai d'essuie-glace assemblé, les moyens de guidage sont ménagés au voisinage immédiat de l'extrémité terminale de l'embout d'extrémité. Plus précisément, les moyens de guidage sont situés à la limite entre le capot d'extrémité et la portion du capot d'extrémité recouvrant l'embout d'extrémité sur le dessus et latéralement au niveau des moyens de guidage.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- les moyens de guidage comportent deux crochets latéraux sensiblement en L configurés pour s'étendre de chaque côté dudit carénage, chaque crochet comportant une partie sensiblement verticale dont l'extrémité inférieure est reliée à une partie sensiblement horizontale s'étendant du côté de l'autre crochet,
- la partie sensiblement horizontale de chaque crochet s'étend sous la vertèbre correspondante.
- partie sensiblement verticale de chaque crochet s'étend à côté de la vertèbre correspondante.
- la lame est configurée pour solliciter transversalement les vertèbres de façon à ce qu'elles prennent appui sur les crochets
- les crochets comprennent des moyens d'appui ponctuel sur les vertèbres ou sur le talon de la lame d'essuyage.

La présente invention concerne aussi un carénage pour un balai plat caréné d'essuie-glace, en particulier de véhicule, comprenant des moyens de guidage en coulissement configurés pour coopérer avec des vertèbres de rigidification dudit balai.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- les moyens de guidage comportent deux crochets latéraux sensiblement en L configurés pour s'étendre de chaque côté dudit carénage, chaque crochet comportant une partie sensiblement verticale dont l'extrémité inférieure est reliée à une partie sensiblement horizontale s'étendant du côté de l'autre crochet,
- la partie sensiblement horizontale de chaque crochet est configurée pour s'étendre sous la vertèbre correspondante.
- partie sensiblement verticale de chaque crochet est configurée pour s'étendre à côté de la vertèbre correspondante.
- la lame est configurée pour solliciter transversalement les vertèbres de façon à ce qu'elles prennent appui sur les crochets
- les crochets comprennent des moyens d'appui ponctuel sur les vertèbres ou sur le talon de la lame d'essuyage.

Selon un quarantième aspect, l'invention concerne un balai plat caréné d'essuie-glace, en particulier de véhicule, caractérisé en ce qu'il comprend des moyens de chauffage et/ou de distribution fluidique.

L'invention peut comprendre une ou plusieurs des caractéristiques suivantes, ces caractéristiques pouvant en outre être combinées à une autre ou plusieurs autres caractéristiques d'un autre ou de plusieurs autres aspects de l'invention :
- le balai comprend un carénage et un balai plat, lesdits moyens de chauffage et/ou de distribution fluidique étant portés par le carénage et/ou le balai plat,
- le balai plat comprend au moins une vertèbre de rigidification ayant une forme allongée, cette vertèbre comportant des moyens de chauffage sur au moins une de ses faces longitudinales,
- le balai comprend des moyens de chauffage sur la face longitudinale supérieure de la vertèbre,
- les moyens de chauffage comprennent au moins un élément résistif chauffant destiné à être relié à une source d'alimentation électrique,
- le balai comprend un carénage et un balai plat, le balai plat comprenant au moins une rampe longitudinale de distribution fluidique et d'alimentation fluidique d'orifices de pulvérisation,
- le balai comprend une rampe de chaque côté du balai plat,
- la ou chaque rampe est reliée à un tuyau ou canule d'alimentation en fluide au niveau d'une partie médiane du balai ou au niveau d'une partie d'extrémité du balai,
- la ou chaque rampe est solidaire d'un organe longitudinal de retenue d'une vertèbre de rigidification et/ou d'une lame d'essuyage dudit balai.

Les différentes caractéristiques et variantes décrites dans ce qui précède et présentées par exemple sous la forme de liste (avec des tirets) peuvent naturellement être combinées les unes avec les autres, même dans le cas où ces caractéristiques concernent deux ou plusieurs aspects de l'invention. Autrement dit, l'invention concerne un grand nombre d'aspects dont les différentes caractéristiques peuvent être combinées entre elles sans limite.

Dans les aspects de l'invention décrite ci-dessus, le moyen de liaison formé sur la monture centrale s'étend longitudinalement à une extrémité longitudinale de la monture centrale. A titre d'exemple, il s'agit du doigt ménagé en bout de monture. Côté capot d'extrémité, le moyen de liaison est ménagé dans le volume délimité par le dièdre et ne déborde donc pas longitudinalement du capot. Une telle organisation présente un avantage apparent pendant le procédé d'assemblage. En effet, il suffit de solidariser la monture centrale, puis descendre le ou les capots d'extrémité sur le moyen de liaison pour réaliser l'assemblage. Il est ainsi plus facile de générer une force descendante pour opérer la fixation, plutôt que de tirer sur une pièce. Par ailleurs, un tel mode d'assemblage permet de solidariser la monture et l'embout d'extrémité avant son assemblage sur la monture centrale.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue schématique en perspective d'un balai plat caréné d'essuie-glace selon l'invention, à l'état libre sans contrainte,
- la figure 2 est une vue schématique en perspective du balai de la figure 1 lorsqu'il est en appui sur une vitre en particulier d'un véhicule,
- la figure 3 est une vue schématique en perspective éclatée du balai de la figure 1,
- les figures 4 et 5 sont des vues à plus grande échelle des détails 14 et 15 de la figure 3, respectivement,
- la figure 6 est une vue en coupe transversale du balai de la figure 1,
- la figure 7 est une vue schématique à plus grande échelle de moyens de fixation de la monture du balai de la figure 1,
- les figures 8a à 8c représentent de manière schématique des variantes de réalisation d'une partie d'un balai selon l'invention,
- les figures 9, 11 et 12 sont des vues schématiques en perspective de moyens de liaison d'une monture à des capots d'extrémité d'un balai selon l'invention, et la figure 10 est une vue en coupe longitudinale de ces moyens de liaison,
- la figure 13 est une vue schématique en perspective d'un balai plat caréné d'essuie-glace selon l'invention, à l'état libre sans contrainte, et représente des capots d'extrémité de ce balai dans une de leurs positions extrêmes,
- la figure 14 est une vue en coupe longitudinale d'un mode de réalisation de moyens de liaison d'une monture à des capots d'extrémité d'un balai selon l'invention,
- les figures 15 et 16 sont des vues schématiques en coupe longitudinale et en perspective, respectivement, d'un autre mode de réalisation des moyens de liaison d'une monture à des capots d'extrémité d'un balai selon l'invention,
- les figures 17 et 18 sont des vues schématiques en perspective de parties d'une monture et d'un capot d'extrémité d'un balai selon l'invention,
- la figure 19 est une vue en perspective d'une monture d'un balai selon l'invention, vue de côté,
- les figures 20 et 21 sont des vues schématiques partielles en perspective d'un balai selon l'invention, qui est partiellement démonté en figure 20,
- les figures 22 et 23 sont des vues schématiques partielles en perspective d'un balai selon l'invention, qui est partiellement démonté en figure 22,
- les figures 24 à 27 sont des vues schématiques partielles en perspective d'une partie d'extrémité d'un balai selon l'invention,
- la figure 28 est une vue en perspective de l'embout d'extrémité du balai des figures 24 à 27,
- la figure 29 est une vue en perspective partielle du capot d'extrémité du balai des figures 24 à 27,
- les figures 30a et 30b sont des vues schématiques partielles d'une monture centrale d'un balai selon l'invention, vue de dessus, cette partie comportant une fenêtre de logement d'un adaptateur,
- la figure 31 est une vue schématique en coupe longitudinale de la monture centrale et de l'adaptateur des figures 30a et 30b,
- la figure 32 est une vue schématique en perspective de l'adaptateur des figures 30a, 30b et 31,
- la figure 33 est une vue schématique en perspective d'une monture d'un balai selon l'invention,
- la figure 34 est une vue à plus grande échelle d'une partie de la monture de la figure 33 et montre des moyens de liaison et de rigidification amovibles,
- la figure 35 correspondant à la figure 34 et montre une étape de préparation de la monture dans laquelle un des moyens de liaison et de rigidification a été retiré,
- la figure 36 est une vue schématique en perspective d'une monture capotée d'un balai selon l'invention,
- les figures 37 à 39, 41 et 42 sont des vues schématiques partielles en perspective de la monture capotée de la figure 36, les figures 40 et 43 sont des vues schématiques en perspective de capotages de cette monture capotée,
- la figure 44 est une vue schématique en perspective d'une monture d'un balai selon l'invention, ce balai étant relié à un bras d'entraînement,
- la figure 45 est une vue schématique en perspective d'un capot d'extrémité d'un balai selon l'invention, vu de dessous,
- les figures 46 et 47 sont des vues schématiques en perspective de deux balais selon l'invention, respectivement long et court, ces deux balais comportant des montures identiques et interchangeables,
- les figures 48 et 49 sont des vues schématiques partielles d'un balai plat caréné et d'un adaptateur de liaison de ce balai à un bras tige d'entraînement, en perspective éclatée en figure 48 et en perspective non éclatée en figure 49,
- la figure 50 est une vue schématique en perspective de l'adaptateur et du bras tige des figures 48 et 49,
- la figure 51 est une vue schématique en perspective de l'adaptateur des figures 48 et 49,
- la figure 52 est une vue schématique en perspective du bras tige des figures 48 et 49,
- les figures 53 et 54 sont des vues schématiques en perspective et en coupe longitudinale de l'adaptateur et du bras tige des figures 48 et 49,
- les figures 55 à 57 sont des vues schématiques partielles d'un balai plat caréné et d'un organe de connexion déportée à un adaptateur de liaison du balai à un bras d'entraînement, en perspective aux figures 55 et 56 et en perspective éclatée en figure 57,
- les figures 58 et 59 sont des vues schématiques en perspective de l'organe de connexion des figures 55 à 57,
- la figure 60 est une vue schématique en perspective de l'adaptateur et du bras des figures 55 à 57,
- la figure 61 est une vue schématique d'un balai plat caréné et d'adaptateurs de liaison de ce balai à un bras d'entraînement, en perspective partiellement éclatée,
- la figure 62 est une vue schématique partielle d'un balai plat caréné et d'un adaptateur de liaison de ce balai à un bras d'entraînement, en perspective éclatée,
- la figure 63 est une vue schématique partielle en perspective d'une monture centrale du balai plat caréné de la figure 62,
- les figures 64 et 65 sont des vues schématiques en perspective de l'adaptateur de la figure 62,
- les figures 66 à 68 sont des vues schématiques en perspective de moyens de liaison d'un carénage selon l'invention,
- les figures 69 à 78 sont des vues schématiques en perspective de moyens de liaison d'un carénage selon l'invention, la figure 73 étant une vue en coupe selon la ligne A-A de la figure 72, la figure 75 étant une vue en coupe selon la ligne B-B de la figure 74, la figure 77 étant une vue en coupe selon la ligne C-C de la figure 76 et la figure 78 étant une vue en coupe selon la ligne D-D de la figure 71,
- les figures 79 à 81d sont des vues schématiques en perspective d'une extrémité libre d'un carénage ou capot d'extrémité de carénage selon l'invention, la figure 80 étant une vue en coupe selon la ligne E-E de la figure 79, les figures 81 a à 81 d étant des vues en coupe selon les ligne F1-F1, F2-F2, F3-F3 et F4-F4 de la figure 79,
- les figures 82 et 83 sont des vues schématiques en perspective d'un carénage ou d'une monture centrale selon l'invention, la vue de la figure 83 étant en outre en coupe transversale,
- les figures 84 et 85 sont des vues schématiques en perspective d'un carénage ou d'une monture centrale selon l'invention, la vue de la figure 85 représentant une partie à plus grande échelle de la vue de la figure 84,
- la figure 86 est une vue schématique en perspective d'une extrémité d'un balai selon l'invention,
- la figure 87 est une vue schématique en perspective d'un organe du balai de la figure 86,
- les figures 88a et 88b sont des vues schématiques en perspective d'une extrémité libre d'un balai selon l'invention,
- les figures 89 à 93 sont des vues schématiques en perspective d'une extrémité libre d'un balai selon l'invention, les figures 92 et 93 étant en outre des vues en coupe longitudinale partielle,
- la figure 94 est une vue schématique en perspective d'une extrémité libre d'un balai selon l'invention,
- les figures 95a et 95b sont des vues schématiques en perspective d'un embout d'extrémité du balai de la figure 94,
- les figures 96 à 98 sont d'autres vues schématiques de l'extrémité libre du balai de la figure 94, en coupe longitudinale dans la figure 98,
- les figures 99a et 99b sont des vues schématiques en perspective d'une extrémité libre d'un balai selon l'invention, et représentent des étapes de démontage d'une lame d'essuyage de ce balai,
- la figure 100a est une vue schématique en perspective d'une extrémité libre d'un balai selon l'invention, et représente une étape de démontage d'une lame d'essuyage de ce balai,
- la figure 100b est une vue schématique en perspective de l'embout d'extrémité visible à la figure 100a,
- les figures 101 à 103 sont des vues schématiques en perspective de moyens de liaison d'un carénage selon l'invention,
- les figures 104 et 105 sont des vues schématiques en perspective d'une extrémité libre d'un balai selon l'invention,
- la figure 106 est une vue schématique en perspective d'une extrémité libre d'un carénage ou d'un capot d'extrémité selon l'invention,
- la figure 107 est une vue schématique en perspective d'une monture centrale selon l'invention,
- la figure 108 est une vue schématique en perspective d'une extrémité d'un carénage ou d'un capot d'extrémité selon l'invention,
- les figures 109a à 109i sont des vues schématiques en perspective d'un balai selon l'invention, et représentent des étapes de montage de ce balai,
- la figure 110 est une vue schématique en perspective d'un balai selon l'invention,
- la figure 111 est une vue schématique en perspective d'une extrémité d'un balai selon l'invention,
- la figure 112 est une vue schématique en perspective de moyens de chauffage d'un balai selon l'invention,
- les figures 113 et 114 sont des vues schématiques en perspective d'un balai selon l'invention, équipé de moyens de distribution fluidique, et
- les figures 115 et 116 sont des vues schématiques en perspective respectivement d'une extrémité d'un balai selon l'invention et d'un embout d'extrémité de ce balai.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations extérieure ou intérieure s'apprécient par rapport au point de fixation du balai sur un bras porte-balai, la dénomination intérieure correspondant à la partie où le bras et un demi-balai s'étendent. Enfin, les directions référencées comme supérieures ou inférieures correspondent à des orientations perpendiculaires au plan de rotation du balai d'essuie-glace, la dénomination inférieure contenant le plan du pare-brise.

Lorsque cela est opportun, le terme intérieur ou interne peut se référer à l'intérieur d'une pièce ou à un côté intérieur/interne d'une pièce, par opposition à l'extérieur d'une pièce (qui permet par exemple de qualifier des aspects visibles ou externes de la pièce) ou du côté extérieur/externe de la pièce.

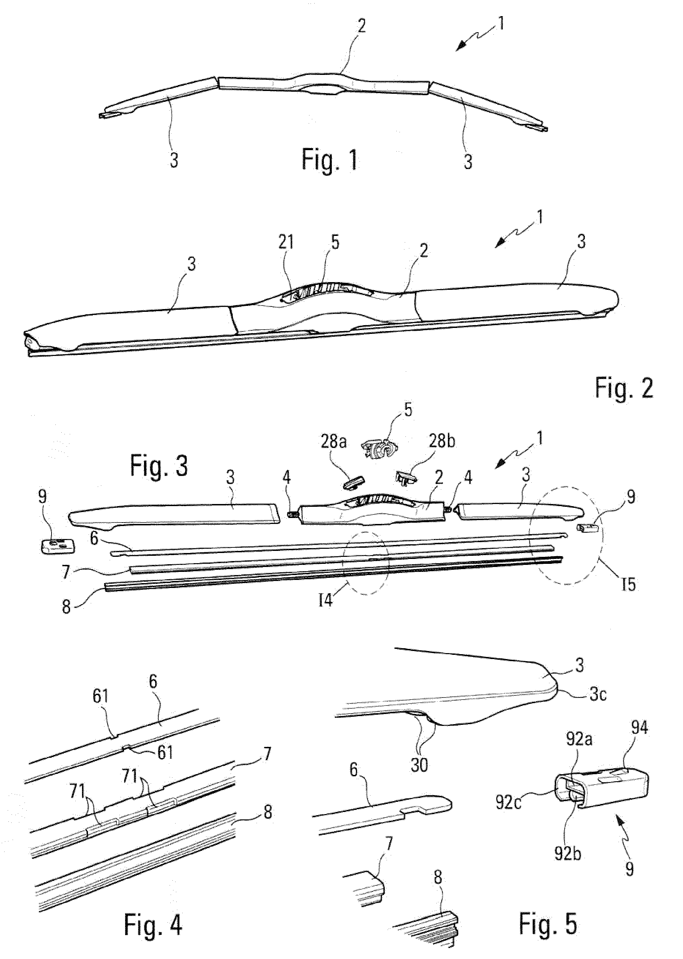

La figure 1 montre un balai plat caréné 1 selon l'invention, c'est-à-dire un balai plat équipé d'un carénage, le balai plat caréné 1 étant ici en position libre dans l'espace, sans contrainte.

La partie supérieure du balai 1 est formée par le carénage qui comporte une forme aérodynamique qui défléchit, vers le haut, l'air qui arrive sur le pare-brise. Le carénage forme ainsi un déflecteur aérodynamique. La déviation de l'air précitée génère une force d'appui du balai 1 sur le pare-brise qui garantit, en association avec une seconde force d'appui générée par une pression du bras, un contact permanent sur le pare-brise et, donc un essuyage fiable.

Ce carénage a sensiblement la forme d'un dièdre formé de deux parois longitudinales qui se rejoignent en partie supérieure au niveau d'une arête sommitale, la paroi avant ayant une forme aérodynamique creuse alors que la paroi arrière est sensiblement plane dans l'exemple représenté. L'intérieur du dièdre est creux de façon à laisser de l'espace pour y loger des éléments qui forment un bloc d'essuyage d'un balai plat, qui sera décrit en détail plus loin.

Le carénage est réalisé en trois parties, qui sont articulées les unes avec les autres. La partie centrale, dénommée ci-après monture centrale 2, remplit les fonctions de connecteur d'un balai plat non caréné, c'est-à-dire que c'est sur elle que s'accroche les divers éléments qui s'étendent tout le long du balai 1. A l'exception de son centre qui présente des parois verticales sensiblement parallèles pour pouvoir loger entre elles un adaptateur, cette monture centrale 2 présente la forme carénée en déflecteur aérodynamique décrite ci-dessus. Elle comprend ainsi deux parois latérales longitudinales 2a, 2b dont les bords longitudinaux supérieurs sont reliés entre eux de façon à ce que lesdites parois forment sensiblement un dièdre. A cette monture centrale sont rattachées deux parties dans des positions longitudinales excentrées, dénommées ci-après capots d'extrémité 3. Ces deux capots ont, eux aussi et sur toute leur longueur, la forme carénée en déflecteur aérodynamique. Chaque capot 3 comprend ainsi deux parois latérales longitudinales 3a, 3b dont les bords longitudinaux supérieurs sont reliés entre eux de façon à ce que lesdites parois forment sensiblement un dièdre.

Un premier capot d'extrémité 3 s'étend vers l'intérieur alors que le second s'étend vers l'extérieur. La liaison entre la monture centrale 2 et chacun des capots d'extrémité 3 est une articulation qui pivote autour d'un axe orienté selon une direction latérale ou transversale, de sorte que les deux capots d'extrémité 3 se déplacent dans un plan perpendiculaire au plan de rotation du balai. La cassure ainsi créée entre la monture centrale 2 et les capots d'extrémité 3 évite que les extrémités extérieure et intérieure du balai ne soient appliquées contre le pare-brise avec une pression plus faible que celle qui s'exerce au niveau de la monture centrale, du fait d'une distance plus grande de leur point d'appui par rapport au bras d'entraînement du balai.

La partie centrale de la monture centrale 2 présente une hauteur supérieure au reste du balai, du fait de sa fonction de connecteur, ce qui permet d'y loger les moyens de rattachement du balai au bras d'entraînement et en particulier un adaptateur.

La figure 2 montre le même balai 1 dans une position en appui contre une vitre, présentée ici par simplification sous la forme d'une surface plane. Les articulations entre la monture centrale 2 et les deux capots d'extrémité 3 sont refermées, c'est-à-dire que ces capots sont positionnés dans l'axe de la monture centrale, les surfaces supérieures de ces trois pièces formant une surface carénée continue. La partie centrale de la monture centrale 2 est découpée par une fenêtre 21 par laquelle passe l'extrémité d'un bras d'entraînement et comporte un axe transversal sur lequel vient se fixer l'adaptateur (non représenté) qui assure le rattachement du balai au bras.

La figure 3 montre le balai 1 en vue éclatée. La monture centrale 2 comporte longitudinalement, de part et d'autre, deux moyens de liaison ou d'articulation qui comportent des doigts 4 qui s'étendent longitudinalement à partir du corps de la monture. Ces doigts 4 comportent un orifice, orienté latéralement ou transversalement, destiné à recevoir un axe d'articulation porté par le capot d'extrémité 3 correspondant. La coopération de cet axe d'articulation avec l'orifice du doigt 4 permet la rotation du capot 3 par rapport à la monture centrale 2, dans un plan perpendiculaire au plan de rotation du balai 1.

En dessous de ces éléments sont représentés, respectivement, une vertèbre de rigidification 6, un organe de maintien ou de retenue 7 et une lame d'essuyage 8, l'ensemble de ces trois éléments formant ce qui sera appelé par la suite un bloc d'essuyage. La vertèbre de rigidification 6 a pour objet de servir de structure au balai en lui donnant une forme cintrée qui correspond au galbe moyen du pare-brise sur lequel le balai se déplace. Sa rigidité longitudinale permet, comme pour un balai plat classique, de maintenir une pression suffisante aux deux extrémités du balai, de sorte que l'essuyage s'effectue de façon uniforme sur toute la surface à balayer.

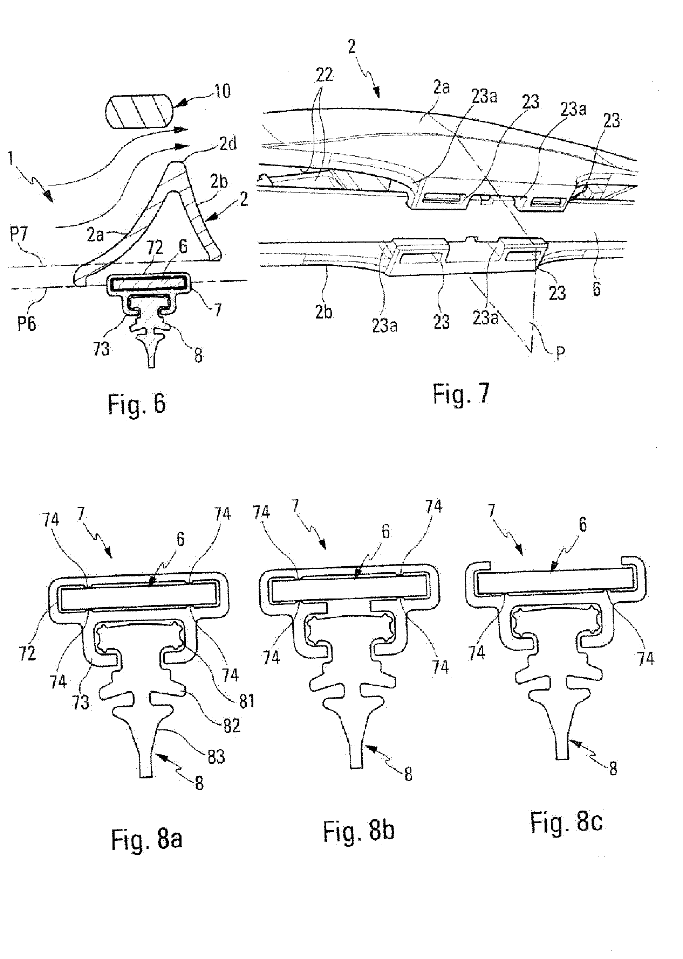

L'organe de maintien 7 constitue l'élément porteur, à la fois, de la vertèbre de rigidification 6 et de la lame d'essuyage 8. Il sera décrit plus en détail, de même que son dispositif de fixation sur la monture centrale 2, en référence aux figures 6 à 8.

La lame d'essuyage 8 est une lame classique en matériau élastomère, qui est portée par l'organe de maintien 7 et qui a pour objet de rester en contact permanent avec le pare-brise.

La figure 3 montre, en outre, deux embouts d'extrémité 9, qui ont pour fonction de réunir les trois éléments précédents à leur extrémité et de les bloquer longitudinalement. Chaque embout d'extrémité 9 possède par ailleurs une butée longitudinale 94 contre laquelle vient s'appuyer une face d'appui portée par le capot d'extrémité 3 correspondant. Cette coopération de la butée longitudinale et de la face d'appui du capot empêchent les trois éléments du bloc d'essuyage de s'étendre longitudinalement lorsque le capot pivote par rapport à la monture centrale 2 et elle les oblige ainsi à se cintrer pour qu'ils suivent la courbure du pare-brise. Le dispositif I₄ de fixation de ces trois éléments est illustré de façon détaillée sur la figure 4, alors que le dispositif I₅ de coopération de l'extrémité de ces éléments avec l'embout d'extrémité 9 est illustré sur la figure 5.

Sur la figure 4 on voit tout d'abord la vertèbre de rigidification 6 qui a la forme d'une lame métallique mince, de forme parallélépipédique, et qui présente une échancrure 61 au milieu de chacun de ses bords longitudinaux.

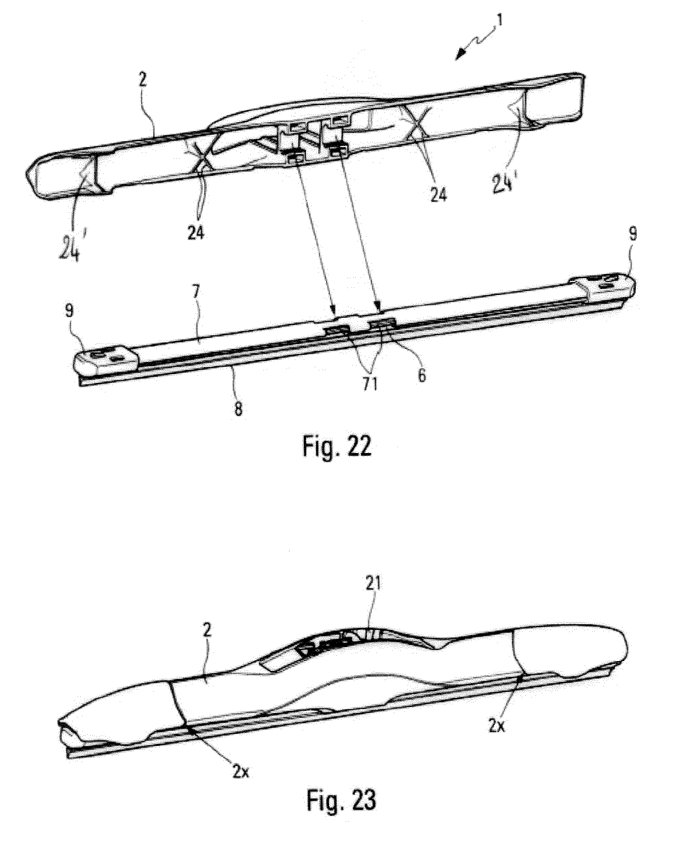

L'organe de maintien 7 est par exemple monobloc et unitaire, et il comporte, quant à lui, quatre découpes 71 qui sont positionnées longitudinalement côte à côte au niveau de son milieu, et qui sont pratiquées, deux par deux, sur des bords longitudinaux supérieurs de l'organe 7. Elles ont vocation à laisser passer des crochets s'étendant latéralement en partie basse de la monture centrale 2, pour assurer, par l'intermédiaire de la vertèbre de rigidification 6, la fixation sur la monture centrale du bloc d'essuyage, comme cela sera expliqué plus en détail en référence aux figures 7 et 23.

Sur la figure 5, on voit l'extrémité longitudinale d'un des capots d'extrémité 3 et l'embout d'extrémité 9 associé. On voit également l'une des extrémités de la vertèbre de rigidification 6, de l'organe de maintien 7 et de la lame d'essuyage 8. L'embout d'extrémité 9 a extérieurement une forme sensiblement parallélépipédique creuse et il comporte intérieurement deux logements ou cavités 92a, 92b (respectivement supérieur et inférieur) orientés longitudinalement et destinés à recevoir l'extrémité d'une part de la vertèbre de rigidification 6 et d'autre part, de la lame d'essuyage 8. Un troisième logement 92c peut, en outre, être prévu pour l'introduction de l'extrémité longitudinale de l'organe de maintien 7. Chaque logement 92a, 92b comprend une extrémité longitudinale ouverte et une extrémité longitudinale fermée. Les logements 92a, 92b sont formés par des parois internes à l'embout d'extrémité 9 qui reproduisent, en la prolongeant, la forme de la vertèbre de rigidification 6 et de la lame d'essuyage 8. Il y a ainsi une continuité dans le maintien de la vertèbre de rigidification 6 et de la lame d'essuyage 8 quand celles-ci passent de l'organe de maintien 7 à l'embout d'extrémité 9. Des nervures verticales (non visibles sur la figure) sont par ailleurs positionnées longitudinalement dans la cavité supérieure 92a de l'embout 9, c'est-à-dire celle qui reçoit la vertèbre de rigidification 6, pour réduire la hauteur de cette cavité et venir appuyer sur la vertèbre une fois qu'elle y est insérée. Enfin, les parois latérales de cette cavité 92a sont flexibles pour pouvoir s'écarter lors de l'introduction de la vertèbre 6 tout en résistant à cette flexion pour comprimer latéralement la vertèbre et provoquer son coincement dans l'embout. Ceci permet d'éviter la désolidarisation de l'embout 9 une fois qu'il est installé en bout du balai.

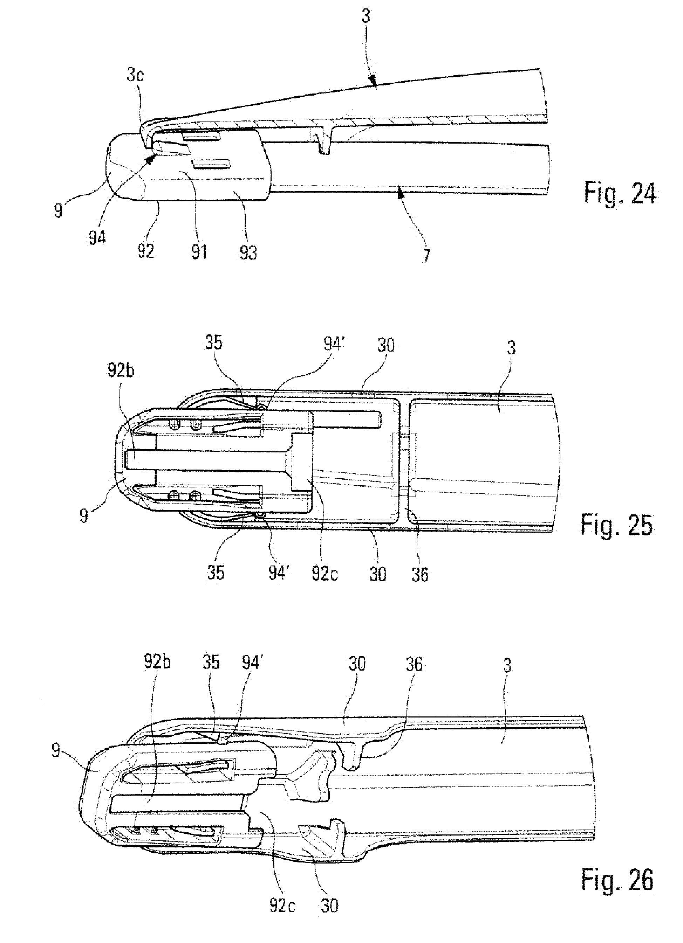

Le capot d'extrémité 3 comprend à son extrémité libre visible en figure 5 deux ailes latérales 30 sensiblement parallèles et définissant entre elles un espace configuré pour recevoir l'embout d'extrémité 9. Les extrémités longitudinales de ces ailes 30, situées du côté de l'extrémité libre du capot 3, sont reliées ensemble par une aile transversale 3c qui est destinée à coopérer avec la butée 94 précitée de l'embout 9, comme cela sera décrit plus en détail dans ce qui suit en référence à la figure 24.

La figure 6 illustre la circulation de l'air au voisinage d'un balai 1 selon l'invention. Le balai 1 est représenté en coupe selon un plan transversal à sa direction longitudinale, au niveau du demi-balai situé du côté intérieur. L'air arrivant sur le pare-brise est dévié vers le haut par le carénage de la monture centrale 2 (ou de celui du capot d'extrémité 3) et passe entre ce carénage et le bras 10 (puisque la coupe est pratiquée du côté intérieur).

On constate ici que les bords longitudinaux inférieurs des parois latérales longitudinales 2a, 2b de la monture 2 ne sont pas situés à la même position en hauteur ou direction verticale (la direction horizontale étant sensiblement parallèle au pare-brise et donc la direction verticale sensiblement perpendiculaire au pare-brise), le bord inférieur de la paroi 2a étant situé plus bas que celui de la paroi 2b. Autrement dit, le bord inférieur de la paroi 2a est situé sensiblement dans un premier plan longitudinal P6 sensiblement horizontal qui est à distance et ici en dessous d'un second plan longitudinal P7 sensiblement horizontal passant sensiblement par le bord inférieur de la paroi 2b. C'est la même chose pour les bords inférieurs de chacun des capots d'extrémité 3.

Le bloc d'essuyage, c'est-à-dire l'ensemble des trois éléments, vertèbre de rigidification 6, organe de maintien 7 et lame d'essuyage 8, apparait sous le carénage de la monture centrale 2, en position décalée par rapport à l'arête sommitale 2d de ce carénage, du côté de la paroi avant du déflecteur d'air. Ce positionnement correspond en fait au milieu des extrémités inférieures des parois du carénage puisque celles-ci sont dans le prolongement des faces latérales de la monture centrale au niveau de sa fenêtre 21, donc à son endroit le plus large. On voit par ailleurs sur cette figure l'agencement des trois éléments du bloc d'essuyage : l'organe de maintien 7 a, en coupe transversale, la forme d'un tube parallélépipédique fermé 72 duquel s'étendent, vers le bas, deux crochets 73 orientés l'un vers l'autre, formant ainsi une cavité parallélépipédique ouverte vers le bas. La vertèbre de rigidification 7 est glissée dans le tube supérieur 72 qu'elle remplit en conservant la faculté de glisser longitudinalement à l'intérieur, alors que la lame d'essuyage 8, mieux visible en figure 8a, est portée par sa partie supérieure, ou talon 81, qui a une forme sensiblement rectangulaire, par les deux crochets 73. La partie inférieure 82 de la lame d'essuyage 8 s'étend de la cavité inférieure de l'organe de maintien 7 en direction du pare-brise et se termine par une partie terminale 83 qui a classiquement une forme de sapin renversé.

La figure 7 montre en perspective, en vue de dessous, la monture centrale 2, avec les moyens de fixation du bloc d'essuyage, qui fait office de connecteur. Les parties des parois latérales 2a, 2b, situées de part et d'autre de la fenêtre 21, se prolongent vers le bas jusqu'à dépasser l'espace dévolu à l'adaptateur 5 et comportent, chacune, à leur extrémité inférieure deux crochets 23. Chaque crochet 23 d'une paroi latérale 2a est sensiblement en regard d'un crochet 23 de l'autre paroi latérale 2b, et s'étend vers celui-ci. Les moyens de fixation comprennent ainsi deux paires de crochets latéraux, les crochets d'une paire étant à distance longitudinale des crochets de l'autre paire. Chaque crochet 23 définit une encoche longitudinale 23a configurée pour recevoir par coulissement longitudinal la vertèbre 6. Dans l'exemple représenté, le plan transversal P passant par l'axe 25 passe sensiblement entre les deux paires de crochets 23 et à égale distance de ceux-ci.

L'extension longitudinale de ces crochets est légèrement inférieure à celle des découpes 71 qui sont pratiquées dans l'organe de maintien 7. Quant à leur extension latérale elle est telle que l'écartement entre eux est supérieur à la profondeur des découpes 71, de sorte que ces moyens peuvent être entrés dans la cavité interne de la monture centrale en les rentrant par le bas. Enfin, cet écartement est inférieur à la largeur de l'organe de maintien 7, de sorte que ce dernier peut reposer sur les crochets 23 après l'implantation du bloc d'essuyage.

On voit donc comment s'effectue le montage du bloc d'essuyage sur la monture centrale 2, qui agit ici comme un connecteur : l'organe de maintien 7, éventuellement équipé de sa lame d'essuyage 8 mais sans la vertèbre de rigidification 6 est introduit, depuis le bas, dans la cavité interne de la monture centrale 2, en faisant passer les crochets 23 dans ses découpes 71. Au moins une plaque longitudinale sensiblement horizontale formant butée verticale (non représentée sur la figure 7) s'étend généralement au dessus des crochets 23 pour servir de limite à l'introduction de l'organe de maintien 7 dans la cavité interne en partie basse de la monture centrale 2. Dans cette position, le tube supérieur 72 de l'organe de retenue se trouve aligné avec la face supérieure des crochets 23, ce qui crée une continuité de rainure pour le passage de la vertèbre de rigidification 6. L'opérateur glisse alors cette vertèbre dans le tube supérieur 72, à partir d'une des extrémités longitudinales de l'organe de retenue, le fait traverser la monture centrale 2 en glissant sur les crochets 23 au niveau des découpes 71 de l'organe de retenue, puis en le poussant jusqu'à l'autre extrémité de l'organe de retenue. Le bloc d'essuyage est alors immobilisé verticalement par l'organe de retenue qui repose sur les crochets 23 et longitudinalement par l'imbrication de ces mêmes crochets 23 dans les découpes 71 de l'organe de maintien 7.

La figure 8 illustre trois variantes de réalisation de l'organe de maintien 7, dans lesquels le tube supérieur 72 est constitué par un parallélépipède dont le rectangle en coupe transversale est soit entièrement fermé (figure 8a), soit ouvert sur sa face inférieure (figure 8b), soit ouvert sur sa face supérieure (figure 8c). Dans les trois cas, le tube reste suffisamment refermé pour que la vertèbre de rigidification 6 soit correctement maintenue dans le tube 72. Les trois variantes conservent toutefois une même forme pour les crochets inférieurs 73 qui servent au maintien de la lame d'essuyage 8.

On note, sur ces variantes de réalisation, des petites nervures 74 qui s'étendent longitudinalement sur la surface interne du tube 72 pour effectuer une compression sur la vertèbre 6 et la maintenir longitudinalement une fois qu'elle a été introduite en force dans ce tube. De même, le talon 81 de la lame d'essuyage 8, qui s'insère par glissement longitudinal entre les crochets 73 de l'organe de maintien 7, comporte des excroissances longitudinales qui frottent contre ces crochets lors de l'introduction de la lame de façon à assurer un certain maintien longitudinal et latéral à cette lame.

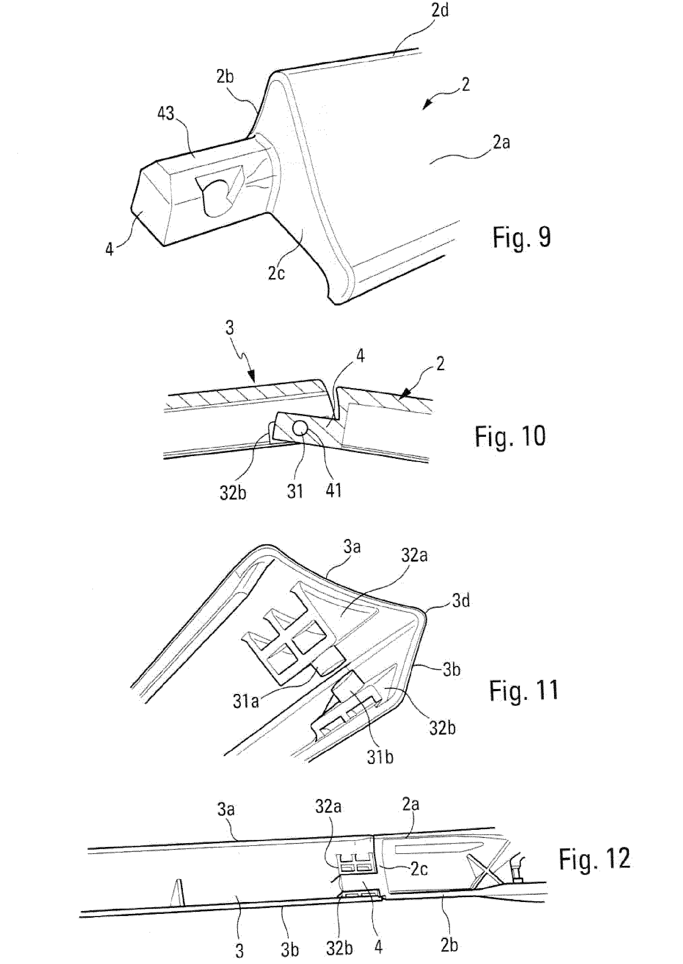

Les figures 9 et suivantes décrivent plus en détail l'articulation entre la monture centrale 2 et les capots d'extrémité 3.

Sur la figure 9, on voit les parois longitudinales, 2a à l'avant et 2b à l'arrière, qui forme le dièdre du déflecteur aérodynamique de la monture centrale 2 en se rejoignant sur une arête sommitale 2d, ce dièdre se terminant longitudinalement par une paroi transversale 2c qui referme le dièdre. De cette paroi transversale 2c s'étend un doigt 4, On comprend donc que le doigt 4 est en saillie de la paroi transversale 2c vers l'extérieur de la monture. Ce doigt 4 est de forme sensiblement parallélépipédique, qui est traversé par un orifice 41 destiné à servir de support à l'axe 31 qui permet le pivotement du capot 3 correspondant.

La figure 10 montre, en coupe, ledit capot d'extrémité 3 monté sur la monture centrale 2 avec un axe d'articulation de capot 31 qui s'étend à partir d'une des parois latérales du capot et vient traverser l'orifice 41 du doigt 4.

En référence à la figure 11 on voit l'intérieur de la partie du capot 2 qui coopère avec la monture centrale 2. A l'intérieur du dièdre formé par les parois longitudinales 3a et 3b du capot s'étendent deux renforts 32a et 32b qui s'appuient sur ces parois longitudinales et qui s'étendent pour former deux faces planes, orientées toutes deux selon un plan vertical et se faisant face. De ces deux faces planes s'étendent deux tenons 31 a et 31 b qui sont alignés et forment ensemble l'axe 31 sur lequel tourne le capot 3. L'écart laissé entre les deux tenons 31 a et 31 b est suffisamment faible et, en tout état de cause inférieur à la longueur de l'orifice 41, pour que ces tenons retiennent le doigt 4 une fois monté, et suffisamment large pour que le doigt puisse y être inséré en écartant les deux parois longitudinales 3a et 3b l'une de l'autre grâce à la souplesse élastique du capot. La face supérieure 43 du doigt 4 peut être chanfreinée pour faciliter cette insertion. L'insertion a ici lieu dans une direction sensiblement perpendiculaire à l'axe d'allongement du doigt 4. Le doigt 4 comprend sur ses faces latérales deux fenêtres 41a sensiblement verticales qui s'étendent sensiblement entre la face supérieure 43 et l'orifice 41. Ces fenêtres 41a sont destinées à recevoir et à guider les tenons 31 a, 31 b lors du montage du doigt dans la direction précitée.

On constate également sur la figure 11 que les bords longitudinaux supérieures des parois 3a, 3b sont reliés entre eux pour former une arête longitudinale supérieure 3d du capot.

La figure 12 montre, en vue de dessous, la monture centrale 2 et un capot d'extrémité 3 assemblés, le doigt 4 étant positionné entre les deux renforts 32a et 32b et, de façon non visible, les deux tenons 31 a et 31 b étant entrés dans l'orifice 41 de ce doigt.

De façon alternative, non représentée, le doigt 4 peut être porteur de deux tenons s'étendant de part et d'autre de ses faces latérales et les renforts du capot 3 comportent dans ce cas, des perçages dans lesquels s'insèrent lesdits tenons.

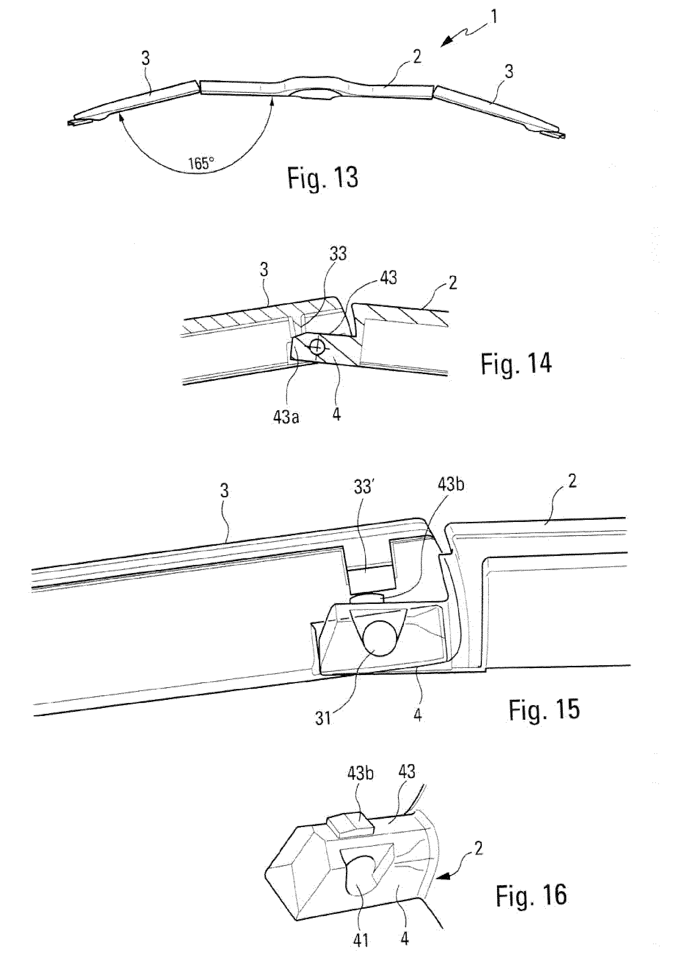

En se référant maintenant aux figures 13 à 16, on voit un dispositif permettant de limiter l'amplitude angulaire de l'articulation entre la monture centrale 2 et les capots d'extrémité 3. En effet, un angle trop grand serait défavorable à un bon essuyage du pare-brise en ce que la pression du balai sur le pare-brise ne serait pas uniformément répartie. L'angle maximum acceptable pour la cassure entre la monture centrale 2 et chacun des capots d'extrémité 3 est, comme on le voit sur la figure 13, de 165° par exemple. Il convient donc de positionner des butées sur les deux éléments pour empêcher un dépassement de cette valeur. Le positionnement le plus favorable de ces butées pour obtenir cette limitation angulaire, consiste à les positionner le plus près possible de l'axe 31 de pivotement du capot 3.

La figure 14 montre une première réalisation pour le positionnement de ces butées, dans laquelle le capot 3 comporte, dans l'espace interne définit par ses parois longitudinales 3a, 3b, une butée en saillie 33 qui s'étend au-dessus du doigt 4. Cette butée 33 est configurée pour coopérer avec le doigt 4 afin de définir une position extrême de pivotement du capot 3 vis-à-vis de la monture 2. La butée est formée par une nervure 33 qui s'étend transversalement entre les faces internes des parois longitudinales 3a, 3b du capot 3. L'extrémité inférieure libre de la nervure 33 est chanfreinée pour définir une face d'appui. Pour une meilleure coopération avec cette butée, le doigt 4 comporte à son extrémité libre 43a formant butée un chanfrein, dont le plan est aligné avec le plan inférieur de la nervure 33 quand celle-ci est en butée contre le doigt 4, c'est-à-dire quand le capot 3 est dans son extension angulaire maximale.

Les figures 15 et 16 décrivent, respectivement en coupe et en perspective, un autre mode de réalisation pour le positionnement de ces butées. Le capot 3 comprend ici une butée en saillie 33' formée par une nervure sensiblement longitudinale. Cette nervure 33' est orientée du haut vers le bas et s'étend à partir de l'arête sommitale du capot d'extrémité 3. Elle s'étend donc ici depuis la zone de liaison des bords longitudinaux supérieurs des parois longitudinales 3a, 3b du capot. L'extrémité inférieure libre de la nervure 33' est chanfreinée pour définir une face d'appui. Le doigt 4 porte ici une surépaisseur 43b sur sa face supérieure 43 qui vient en vis-à-vis de la nervure 33'. Cette surépaisseur 43b, de forme sensiblement parallélépipédique alignée avec la direction longitudinale et avec la direction d'élongation du doigt, comporte, comme précédemment, vers l'extérieur, une partie chanfreinée dont le plan est aligné avec le plan inférieur de la nervure 33' quand celle-ci est en butée contre le doigt 4.

Dans les deux cas représentés aux figures 14 à 16, la nervure 33, 33' forme une butée en saillie. L'extrémité libre 43a du doigt 4, portant le chanfrein, forme une butée en saillie et la surépaisseur 43b forme également une butée en saillie. La monture 2 et les capots 3 coopèrent ainsi ensemble par des butées en saillie.

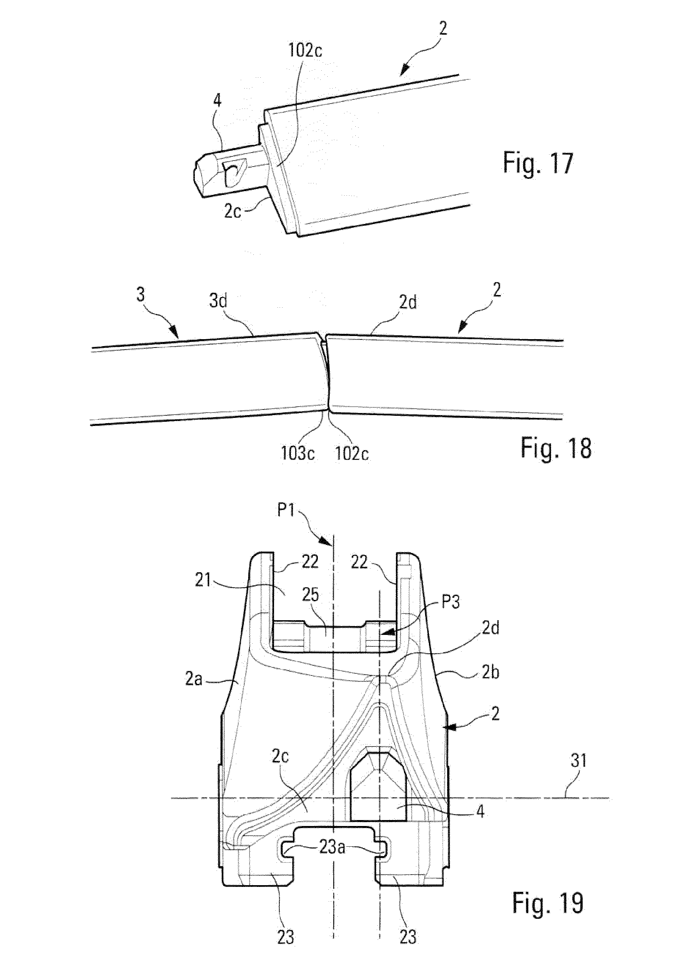

Les figures 17 et 18 décrivent la façon dont les deux extrémités de la monture centrale 2 et du capot 3 correspondant coopèrent. Sur la figure 17, on voit la paroi transversale 2c qui ferme le dièdre de la monture 2 et à partir de laquelle s'étend le doigt 4. Dans cette forme de réalisation d'un balai d'essuie-glace, cette paroi 2c définit un rebord périphérique 102c qui reprend la forme des parois longitudinales 2a, 2b de la monture centrale 2 en la réduisant dans une homothétie de rapport légèrement inférieur à 1. Ce rebord 102c s'apparente à une rainure de la périphérie externe de la monture 2. Il s'étend longitudinalement à partir de l'extrémité des parois longitudinales 2a, 2b sur une longueur relativement courte, comprise entre 1 et 5 mm. Le rebord 102c s'étend sur toute l'étendue transversale et la verticale des parois longitudinales 2a, 2b.

Egalement, l'extrémité longitudinale du capot d'extrémité 3 présente une forme en creux et définit lui-même un rebord périphérique 103c qui peut accueillir le rebord périphérique 102c de la monture centrale 2. Le rebord 102c forme ainsi un rebord mâle engagé dans le rebord 103c qui est un rebord femelle. Le rebord 103c reprend la forme des parois longitudinales 3a, 3b du capot 3.

De la sorte, et compte tenu de la longueur choisie pour le rebord périphérique 102c, celui-ci, en s'engageant dans l'extrémité longitudinale du capot d'extrémité 3, est recouvert par cette dernière, que l'articulation soit dans la position où les carénages sont alignés ou bien qu'elle soit dans la position d'ouverture angulaire maximale. Cette configuration apporte une continuité aérodynamique aux carénages de la monture centrale 2 et des capots d'extrémité 3, en interdisant à l'air circulant sur le pare-brise de s'échapper entre eux. De ce fait elle permet d'améliorer le rendement aérodynamique du balai en évitant de dégrader le niveau de pression qui lui est appliqué par l'air.

La figure 19 montre la monture centrale 2 selon une direction longitudinale. Sur cette figure on voit, en amont de la fenêtre 21 de la monture, le dièdre qui est formé par les parois longitudinales 2a et 2b et l'arête sommitale 2d où elles se rejoignent.

On constate en figure 19 que le doigt 4 a un axe d'allongement s'étendant dans un plan longitudinal P3 qui est sensiblement perpendiculaire audit axe d'articulation 31 correspondant et qui passe sensiblement par l'arête sommitale 2d du dièdre. On constate également que le plan P3 est parallèle et à distance du plan longitudinal médian P1 de la fenêtre 21. Ce plan P1 passe par le milieu des moyens de fixation à crochets 23. On peut noter que l'arête 2d s'étend sensiblement parallèlement et à distance du plan P1. Elle est située dans le plan P3.

On voit par ailleurs en figure 19 les moyens de fixation du bloc d'essuyage. On retrouve notamment les crochets 23 de support de l'organe de maintien 7 qui font, ici, partie d'un ensemble parallélépipédique qui s'étend longitudinalement sur toute la longueur des crochets 23 et dans lequel sont creusées les deux encoches 23a, positionnées symétriquement de part et d'autre des arêtes inférieures du dièdre formé par les parois latérales 2a et 2b. Ces encoches 23a forment un guide pour le passage de la vertèbre de rigidification 6 lors de la fixation de l'organe de maintien 7 sur la monture centrale 2. La paroi supérieure de ce parallélépipède forme, quant à elle, la plaque longitudinale formant butée verticale à l'introduction de l'organe de maintien 7 dans la cavité interne de la monture centrale 2.

Pour des raisons d'optimisation de la performance aérodynamique des carénages de la monture centrale 2 ou des capots d'extrémité 3, l'arête sommitale 2d est décalée latéralement vers l'aval (en relation avec la direction de circulation du flux d'air) par rapport au plan médian P1 du bloc d'essuyage ou du centre de la monture centrale 2. Pour des raisons de meilleure tenue mécanique, le doigt 4 est positionné sensiblement en dessous du dièdre formé par les parois longitudinales 2a et 2b, c'est-à-dire à un endroit où la densité de matière pour ce dièdre est la plus forte.

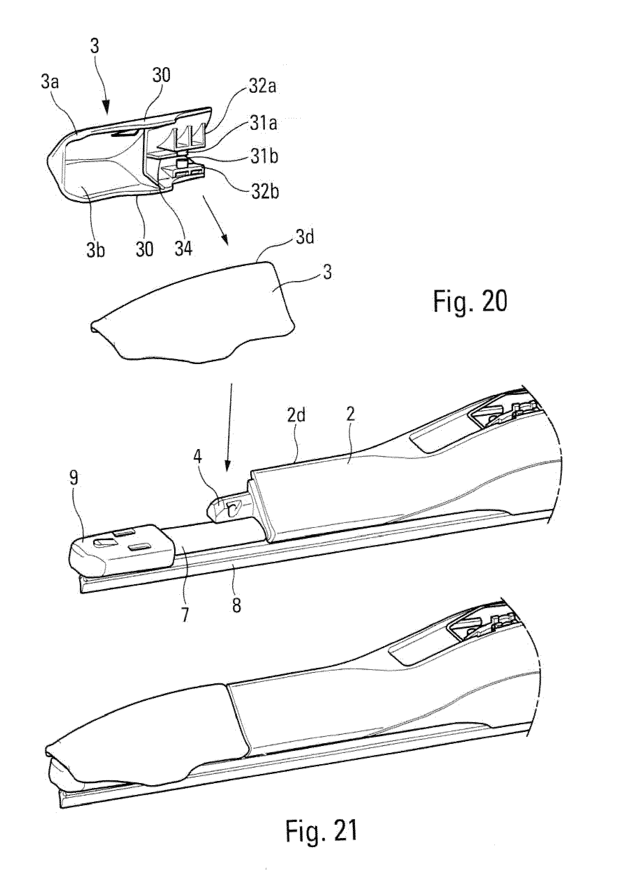

En référence aux figures 20 et 21, on voit un mode particulier de réalisation d'un balai adapté à des essuie-glaces de petite taille. Dans ce mode, la longueur des capots d'extrémité 3 est faible par rapport à celle de la monture centrale 2. Ce type d'essuie-glace est adapté à des vitres de petites dimensions, et par conséquent de faible courbure, comme, par exemple une vitre arrière de véhicule automobile. De ce fait, il n'est pas nécessaire de mettre en oeuvre une articulation qui décale l'axe des capots d'extrémité 3 de celui de la monture centrale 2. En revanche, pour des raisons d'économie sur la logistique, il est intéressant pour le fabricant de réduire le nombre de références de pièces. Pour cela l'invention préconise de conserver un modèle unique pour la monture centrale 2, et, par conséquent, un même adaptateur 5 pour plusieurs modèles. De ce fait, il devient possible de proposer un capot d'extrémité 3 qui, tout en conservant les mêmes moyens de fixation sur la monture centrale 2, comporte un dispositif de blocage de sa rotation par rapport à cette monture centrale.

Sur la figure 20, on voit, entre les deux renforts 32a et 32b des parois latérales 3a et 3b et les tenons 31 a et 31 b qui servent normalement d'axe d'articulation de capot, une nervure de capot 34 qui s'étend longitudinalement de part et d'autre de l'axe formé par les deux tenons. Elle est positionnée et s'étend verticalement de sorte que, dans la position du capot assemblé, elle soit en contact contre la face supérieure 43 du doigt 4 et forme une butée en saillie empêchant la rotation du capot 3 autour dudit doigt 4.

La figure 21 montre un capot court 3 monté sur la monture centrale 2. Son extrémité intérieure est en appui contre l'extrémité extérieure de la monture centrale et, de façon non visible sur la figure, la nervure de capot 34 bloque toute rotation du capot dans un sens ou dans l'autre. On peut toutefois remarquer que la nervure 34 peut ne s'étendre que d'un côté par rapport aux tenons 31 a et 31 b en empêchant la rotation du capot dans le sens d'une fermeture, le blocage en ouverture étant fourni par la coopération des extrémités longitudinales jointives du capot 3 et de la monture centrale 2.

Les figures 22 et 23 montrent, respectivement en version désassemblée et en version assemblée, une variante de réalisation pour le carénage d'un balai destiné à un essuie-glace de petite taille. A la différence des figures 20 et 21 le carénage des deux capots d'extrémité 3 est, ici, réalisé de façon monobloc avec celui de la monture centrale 2. Les dispositifs servant à une articulation, comme le doigt 4 ou les tenons 31 a et 31 b sont alors supprimés. On gagne ainsi en facilité de production des capots. Et pour des raisons d'homogénéité d'aspect de la gamme des balais d'essuie-glace produits, des rainures 2x sont dessinées sur le capot commun, au niveau où se situeraient les articulations entre la monture centrale 2 et les capots d'extrémité 3.

La figure 22 montre par ailleurs la partie interne de la monture centrale 2, que celle-ci soit monobloc avec des capots d'extrémité 3 ou pas. Compte tenu de l'élongation de cette monture centrale 2, il peut être nécessaire de placer des nervures de renfort ou de rigidification 24 ou bandeau 24', à l'intérieur du dièdre formé par les deux parois longitudinales 2a et 2b. L'invention préconise de leur donner une forme en croisillon, dont l'axe commun est orienté verticalement, c'est-à-dire qu'il s'étend à partir de l'arête, en direction de la base du dièdre ou sous forme de bandeau 24'. Du fait de l'évasement du dièdre vers le bas, ces nervures de renfort 24 constituent des points d'appui idéaux pour assurer l'éjection de la monture centrale à partir du moule d'injection, ces pièces étant généralement en matériau polymère et réalisées par un procédé d'injection à chaud.

Selon l'invention, il est également possible de prévoir au moins une nervure, de préférence deux, s'étendant sensiblement transversalement à la direction d'extension de la monture centrale 2.

Les nervures 24 peuvent ainsi comporter au moins une marque d'un point d'appui pour l'éjection de la monture 2 d'un moule de fabrication. Cette marque est en général située sur le bord libre inférieur de la nervure 24. Au moins une marque peut être située dans la zone de jonction des nervures entrecroisées visibles en figure 22.

Sur la figure 24 est illustrée la jonction entre l'embout d'extrémité 9 et un capot d'extrémité 3, ce dernier étant représenté en coupe selon un plan longitudinal médian. Comme indiqué précédemment, l'embout d'extrémité 9 a une forme sensiblement parallélépipédique présentant une ouverture sur sa face qui est orientée en direction de la monture centrale 2. Elle comporte ainsi une face supérieure 91 et une face inférieure 92 qui sont reliées par des faces latérales 93, et une face terminale refermée qui est située du côté opposé à la monture centrale 2. Comme indiqué en référence à la figure 5, l'intérieur de l'embout d'extrémité comporte deux logements internes longitudinaux 92a, 92b formant glissières pour la vertèbre de rigidification 6 et pour la lame d'essuyage 8, respectivement, ainsi qu'un logement 92c de réception d'une partie de l'organe 7.

Sur la face supérieure 91 de l'embout d'extrémité 9 est positionnée une butée en saillie 94, présentant une forme en rampe qui s'élève de cette face supérieure en s'éloignant vers l'extérieur du balai. La face de butée, qui est orientée transversalement, est dirigée en direction de l'extérieur du balai, c'est-à-dire dans une direction qui est sensiblement parallèle à l'axe d'allongement de l'embout d'extrémité 9. Cette butée 94 a pour objet de coopérer avec l'aile transversale 3c portée par le capot d'extrémité 3 qui est associé à l'embout d'extrémité 9. Cette butée 94 a pour objet de limiter le cintrage de l'organe de maintien 7 quand la courbure du pare-brise s'accroit et, en réduisant l'angle entre la monture centrale 2 et la capot d'extrémité 3, de contrôler le rayon de courbure de l'organe de maintien 7. Elle oblige ainsi celui-ci, en restant plus rectiligne, à conserver un appui significatif sur le pare-brise au centre du balai, ce qui procure un essuyage plus régulier au cours de la rotation du balai d'essuie-glace.

Telle que représentée sur la figure, l'aile transversale 3c du capot 3 qui coopère avec la butée en saillie 94 est constituée par la paroi terminale du capot d'extrémité 3. Dans des versions alternatives, elle est constituée par une nervure s'étendant transversalement entre les deux parois latérales 3a, 3b du capot d'extrémité 3, en amont de la face d'extrémité du capot 3. Cette configuration permet d'avoir un alignement pour les faces terminales à la fois du capot et de l'embout d'extrémité, ce qui améliore la performance aérodynamique du balai.

Les figures 25 et 26 montrent une variante pour la disposition des butées respectives de l'embout d'extrémité 9 et du capot d'extrémité 3. Une butée en saillie 94' est, ici, positionnée, du côté interne, sur chaque face latérale 93 de l'embout d'extrémité, avec une forme en rampe et une orientation similaire à la butée en saillie 94 décrite précédemment : la rampe s'élève à partir de la face latérale 93 dans la direction extérieure avec une face de butée orientée transversalement par rapport à la direction longitudinale du balai. Le capot d'extrémité 3 comprend, dans ce cas, au niveau de ses ailes latérales 30 qui s'étendant verticalement à l'extrémité inférieure des parois longitudinales 3a et 3b, des secondes butées en saillie 35 aptes à coopérer avec les butées en saillie 94' de l'embout d'extrémité 9. Les butées 35 sont en saillie sur des faces internes sensiblement parallèles des ailes latérales 30. A cette fin elles présentent la forme d'une rampe s'étendant à partir de la paroi verticale correspondante mais cette fois dans la direction intérieure. Leurs faces de butée sont, elles aussi, orientées transversalement par rapport à la direction longitudinale du balai.

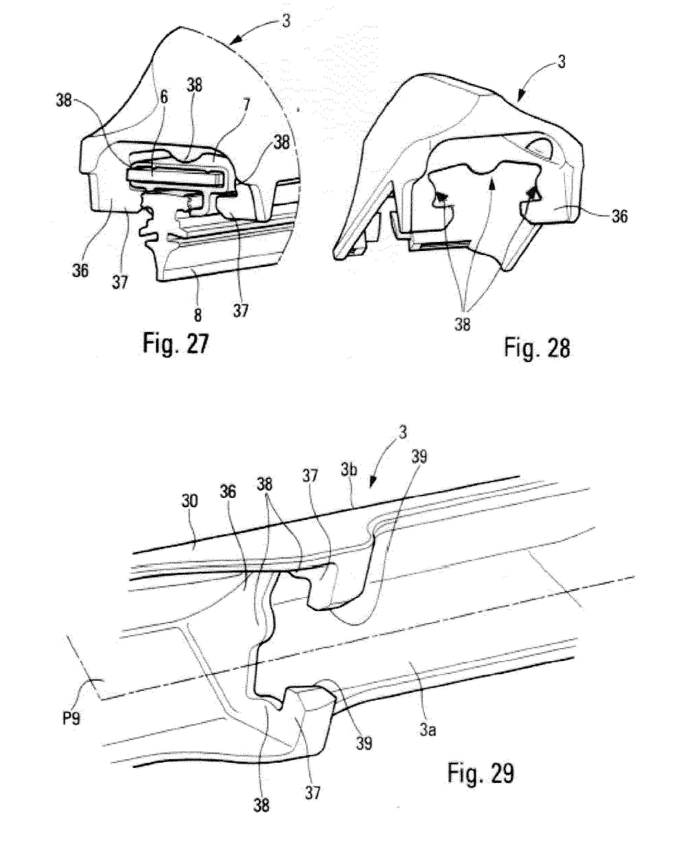

En référence aux figures 27 à 29, on voit la partie terminale d'un capot d'extrémité 3, à courte distance de son extrémité extérieure. Entre les parois longitudinales 3a et 3b formant un dièdre s'étend transversalement une paroi transversale de guidage 36 qui s'appuie sur toute la hauteur des parois longitudinales. La paroi 36 assure une rigidification du capot. Elle s'étend ici entre les ailes latérales 30 des parois 3a, 3b.

Cette paroi transversale 36 est découpée selon une forme sensiblement rectangulaire pour servir de moyens de guidage au bloc d'essuyage, c'est-à-dire essentiellement à l'organe de maintien 7 qui contient la vertèbre de rigidification 6 et qui porte la lame d'essuyage 8. La forme rectangulaire est ouverte, par ailleurs, vers le bas pour laisser le passage à la lame d'essuyage 8. De ce fait, la paroi transversale 36 se présente, vers le bas, sous la forme de deux crochets latéraux de guidage 37 s'étendant à partir de ses parties verticales selon deux parties horizontales positionnées en vis-à-vis l'une de l'autre et qui sont séparées par un espace correspondant sensiblement à l'épaisseur de l'organe de maintien 7 à ce niveau. Vers le haut, la paroi transversale 36 se présente comme une paroi reliant les parties verticales des deux crochets 37. Ces deux crochets 37 forment des moyens de support de l'organe de maintien 7 et la découpe rectangulaire dans la paroi transversale 36 sert de moyen de guidage à cet organe pour son coulissement dans le capot 3, lorsque le capot 3 s'articule par rapport à la monture centrale 2.

La figure 28 montre, en particulier, la forme de la découpe rectangulaire pratiquée dans la paroi transversale de guidage 36. Les trois côtés non ouverts de ce rectangle comportent, sensiblement en leur milieu, des protubérances en forme d'ergots 38 qui font saillie vers l'intérieur du rectangle. Ces protubérances forment des points d'appui quasi ponctuels pour l'organe de maintien 7 lorsqu'il est introduit dans cette découpe rectangulaire. Ces appuis ponctuels servent à compenser les tolérances de fabrication et permettent, du fait de leur caractère ponctuel, un meilleur guidage et un glissement plus facile. La partie verticale de chaque crochet 37 comprend ici, sensiblement en son milieu, un ergot 38 dont l'extrémité libre est configurée pour coopérer avec l'organe 7. La partie supérieure de la paroi 36, reliant les extrémités supérieures des parties verticales des crochets 37, comporte également, sensiblement en son milieu, un ergot 38 d'appui ponctuel sur l'organe. Les ergots 38 ont ici une forme générale arrondie.

Sur la figure 29, on voit les crochets de guidage 37 de support de l'organe de maintien 7, dont l'épaisseur longitudinale est supérieure à celle de la paroi transversale 36. Cette surépaisseur est positionnée du côté de la monture centrale 2 et a la forme d'une rampe 39 s'épaississant depuis le bord inférieur de la paroi longitudinale 3a ou 3b du capot d'extrémité 3 pour venir rejoindre la paroi transversale 36 au niveau du bord supérieur du crochet. Les rampes 39 comprennent des faces inclinées de guidage sensiblement coplanaires. Les rampes permettent de guider l'extrémité de l'organe de maintien 7 lorsqu'il est introduit dans la paroi transversale et de faciliter son passage au travers de cette paroi lors de sa mise en place.

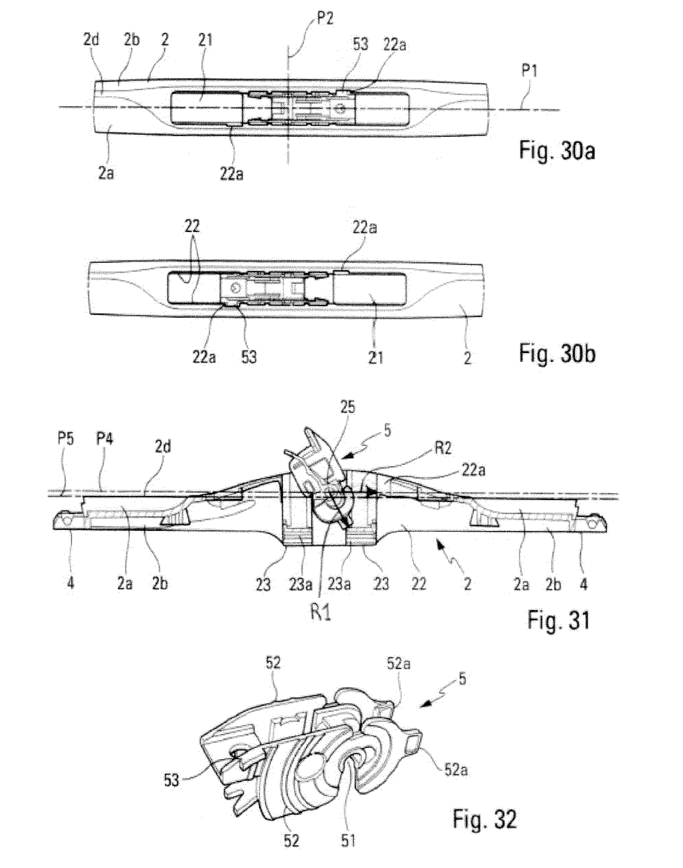

Les figures 30a et 30b montrent la monture centrale 2 en vue de dessus, avec sa fenêtre 21 dans laquelle est positionné l'adaptateur 5, destiné à être monté sur le bras 10 s'étendant, respectivement, vers la droite ou vers la gauche de chacune des figures. On voit pour cela que la taille et la forme de la fenêtre 21 sont adaptées à un positionnement dans un sens ou dans l'autre de l'adaptateur 5. Autrement dit, la fenêtre 21 est configurée pour autoriser le montage de l'adaptateur 5 et son encliquetage sur l'axe 25 dans une première position dans laquelle une première extrémité longitudinale de l'adaptateur est orientée vers une première extrémité longitudinale de la fenêtre, ainsi que dans une seconde position dans laquelle la première extrémité longitudinale de l'adaptateur est orientée vers une seconde extrémité longitudinale opposée de la fenêtre.

L'ouverture de la fenêtre 21, située à son extrémité supérieure, est délimitée par un bord périphérique de forme générale rectangulaire.

La longueur de la fenêtre 21 laisse une place suffisante pour que le bras 10, qui déborde en longueur de l'adaptateur 5, puisse évoluer en rotation sans interférer avec le côté de la fenêtre qui est opposé à la direction de l'extension du bras.

Préférentiellement, la fenêtre 21 présente une double symétrie, tant longitudinale (par rapport à un plan transversal médian P2), l'adaptateur 5 étant en général lui aussi sujet à une symétrie longitudinale, que transversale (par rapport à un plan longitudinal médian P1) pour faciliter le montage du balai 1 sur un bras 10 qui tourne dans un sens ou dans l'autre. Cette configuration à double symétrie permet d'utiliser la même monture centrale 2 pour les deux balais, que les deux balais (gauche et droite) d'essuyage du pare-brise d'un véhicule se déplacent de façon coordonnée ou bien qu'ils soient contrarotatifs.

La figure 31 montre, en coupe selon le plan longitudinal médian P1, un adaptateur 5 installé dans une monture centrale 2. La fenêtre 21 de la monture centrale 2 est traversée latéralement par l'axe transversal d'articulation 25 qui relie les deux faces verticales parallèles 22 du centre de la monture centrale 2 et qui sert de support à l'adaptateur 5.

L'axe d'articulation 25 est solidaire de la monture centrale 2. Ledit axe d'articulation 25 est réalisé venu de matière avec la monture centrale 2. Les deux parois latérales 2a et 2b de la monture centrale 2 sont reliées par ledit axe d'articulation 25. En d'autres termes, l'axe d'articulation 25 peut être moulé conjointement avec la monture 2, à partir de la même matière et au cours de la même étape d'injection.

L'adaptateur 5 comporte en son centre, comme on peut le voir sur la figure 32, un logement cylindrique 51 pour recevoir cet axe transversal par encliquetage élastique. L'adaptateur 5 a sensiblement une forme parallélépipédique allongée selon la direction longitudinale avec deux ailes latérales 52 reliées entre elles par une portion médiane qui définit le logement cylindrique 51. Il comporte également, sur chaque aile latérale 52, une extension longitudinale 52a dont l'objet est de servir de butée pour limiter la rotation de l'adaptateur 5 dans certains cas d'utilisation. Cependant, pour éviter des ruptures d'un des éléments de l'adaptateur lors de manipulations intempestives en rotation, l'invention propose de remonter la position verticale de l'axe 25 sur les faces verticales parallèles 22 du centre de la monture centrale 2, de sorte qu'il autorise une rotation angulaire de l'adaptateur dans laquelle les extensions longitudinales 52a ne viennent pas interférer avec les moyens de fixation du bloc d'essuyage, à savoir les crochets 23.

Pour cela, le rayon R1 de l'adaptateur 5 au niveau des extensions longitudinales 52a, qui se situe dans la gamme des 15 mm, et plus généralement entre 10 et 20 mm, est plus court d'environ 1 mm que le rayon R2 sur lequel se trouve le point le plus central des crochets 23 de fixation de l'organe de maintien 7 (cf. figure 31). Le rayon R1 est le rayon maximal d'une première circonférence centrée sur l'axe 25 et passant sensiblement par les extensions 52a de l'adaptateur 5, et le rayon R2 est un rayon maximal d'une seconde circonférence centrée sur l'axe 25 et passant sensiblement par les extrémités supérieures des crochets 23.

Si les deux extensions longitudinales 52a n'interfèrent pas avec les crochets 23 et permettent une rotation sans obstacle à l'adaptateur 5, il est néanmoins nécessaire de limiter cette rotation pour éviter une déviation angulaire trop grande au balai, qui pourrait conduire à la rupture d'un de ses éléments. Pour cela, un ergot 53 s'étend latéralement à partir de l'arête supérieure d'une des ailes latérales 52 de l'adaptateur 5, du côté opposé à son autre aile latérale, ce qui lui permet de venir buter contre un bord périphérique de la fenêtre 21 par exemple pour limiter le débattement angulaire de l'adaptateur 5 autour de l'axe 25. Les faces internes 22 comportent des encoches 22a de réception et de déplacement de cet ergot 53.

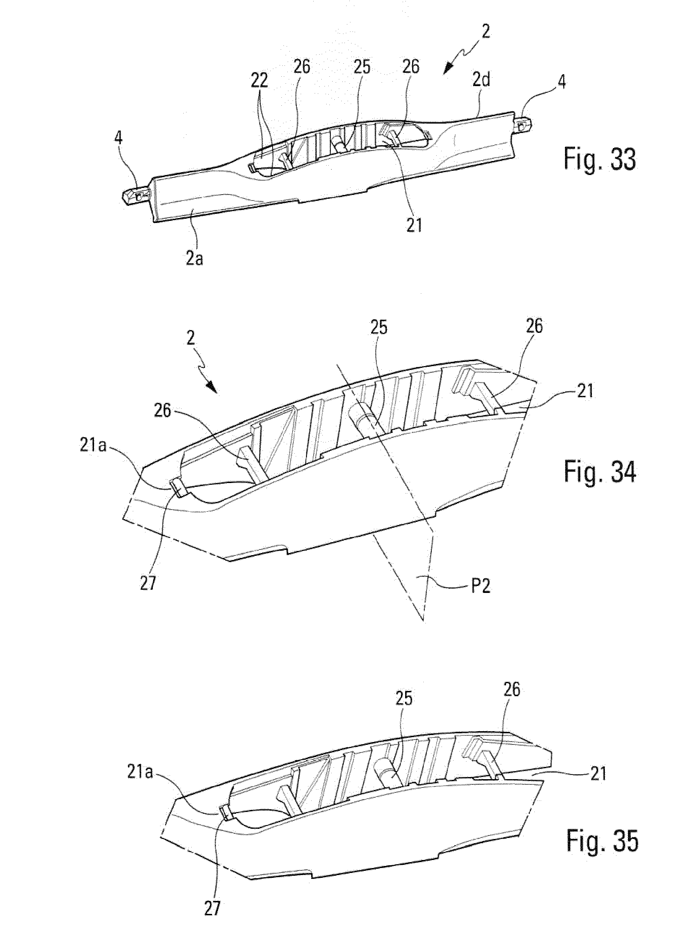

En se référant maintenant aux figures 33 à 35, on voit l'intérieur de la fenêtre 21 de la monture centrale 2, qui s'étend longitudinalement entre les parois latérales 2a, 2b de cette monture. De part et d'autre de cette partie centrale s'étendent les parties longitudinales avant 2a et arrière 2b, en référence au sens de circulation de l'air. Comme indiqué précédemment, l'axe transversal d'articulation 25 relie les deux parois latérales parallèles 22, de façon à supporter l'adaptateur 5 qui se fixe dessus par emboîtement, engagement ou encliquetage élastique

Du fait de l'allongement relativement grand de la fenêtre 21, les portions de parois latérales 2a, 2b situées au niveau de la fenêtre peuvent présenter une certaine fragilité lors de leur manipulation et l'invention préconise de rajouter des moyens 26 de liaison et de rigidification entre les faces latérales internes 22 de la fenêtre 21, ici sous la forme de traverses 26 qui ont chacune une forme de barreau allongé. Telles que représentées, ces traverses 26 s'étendent parallèlement à l'axe d'articulation 25 en étant positionnées sensiblement à la même hauteur que cet axe, et sensiblement au milieu de la distance existant entre l'axe 25 et l'extrémité longitudinale de la fenêtre 21. Ces traverses 26 sont formées par des ponts de matière reliant les deux faces latérales 22. Elles sont ici du type amovible, c'est-à-dire qu'elles peuvent être retirées. Elles peuvent être cassables ou découpables ou démontables, elles peuvent notamment être déclipsées. Elles présentent ici des sections à casser, à savoir une zone de fragilité ou portion de faiblesse à chacune de leurs extrémités, de manière à pouvoir être rompues au niveau des faces 22, sans laisser d'excroissance qui interférerait avec la rotation de l'adaptateur 5. En effet la présence de deux traverses 26 sur une même monture centrale 2, qui correspond à une configuration en sortie de fabrication, n'est pas adaptée à la mise en service d'une telle monture centrale car l'une d'elles limiterait, de façon indue, la rotation de l'adaptateur 5. Il convient, lors du montage d'un balai d'essuie-glace de choisir dans quel sens cette monture va être installée sur le bras du balai. En fonction de ce choix, une des traverses 26 est cassée, ce qui donne la nécessaire liberté de rotation au bras et à son adaptateur 5 dans la monture centrale. Comme on le voit sur la figure 35, la seconde traverse est conservée, car n'interférant pas avec cette rotation. L'invention apporte ainsi une simplification dans la production des montures centrales 2 et dans leur logistique puisque celle-ci est d'un modèle unique, qui s'adapte à tous les sens de rotation d'un balai d'essuie-glace, moyennant la rupture préalable d'une des deux traverses 26. La présence des deux puis d'une seule traverse 26 donne la nécessaire rigidité aux parois latérales parallèles 22, tout d'abord lors du transport pour son acheminement vers le lieu de montage, puis lors de son utilisation sur un pare-brise. Les deux traverses 26 sont ici disposées de manière symétrique par rapport au plan transversal P2 passant sensiblement par le milieu de la fenêtre 21.

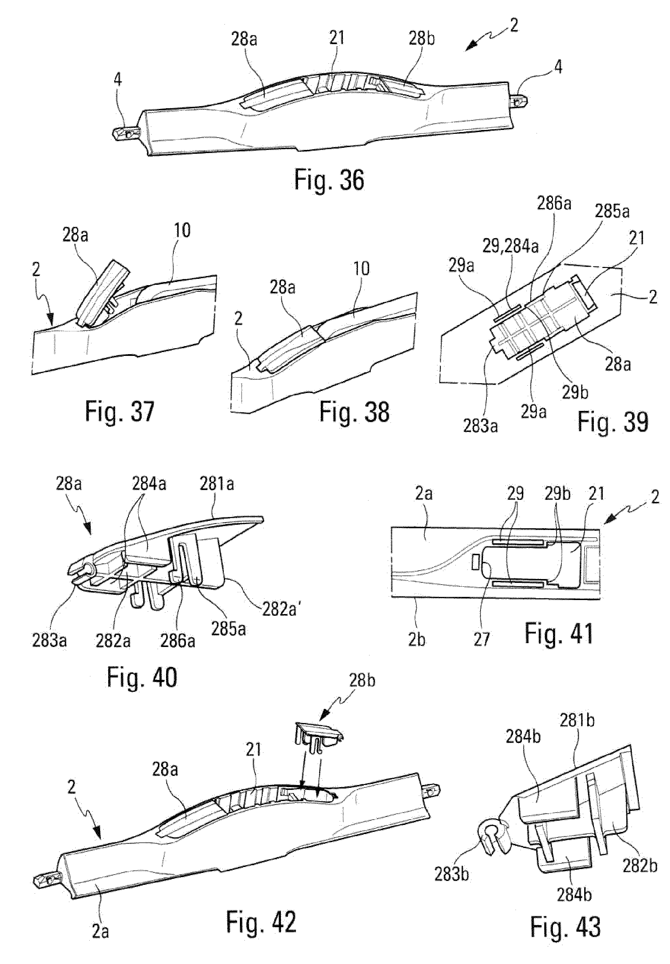

Par ailleurs, la fenêtre 21 présente à chacune de ses extrémités longitudinales une découpe 21 a, essentiellement transversale, qui prolonge longitudinalement la découpe de la fenêtre 21. Dans cette découpe est positionné un axe 27 orienté transversalement qui peut faire office d'axe de rotation ou axe de support à un capot de fermeture, comme cela sera explicité plus loin en référence aux figures 36 à 43.

Sur la figure 36 on voit une monture centrale 2 dans laquelle la fenêtre 21 est obturée partiellement par deux capots de fermeture 28a et 28b. En effet, alors que la fenêtre 21 doit être suffisamment longue pour pouvoir y insérer un adaptateur 5 puis le bras sur lequel ce dernier est fixé, son ouverture vers le haut se révèle néfaste après la mise en place de ces éléments, autant pour des raisons esthétiques que pour des raisons aérodynamiques, le creux de la fenêtre pouvant créer des turbulences dans l'air qui circule sur le pare-brise. L'invention préconise donc l'installation de deux capots de fermeture 28a, 28b qui viennent coiffer la fenêtre 21 et qui referment la face supérieure de la partie centrale de la monture centrale 2, pour former une monture centrale capotée. Compte tenu de la présence du bras et de l'adaptateur 5 qui ne présentent pas de symétrie selon un plan transversal, les deux ouvertures laissées libres aux extrémités de la fenêtre 21 ne sont pas identiques, ni symétriques. On distingue donc un capot de fermeture avant 28a qui se positionne vers l'extérieur par rapport au bras du balai et un capot de fermeture arrière 28b, qui se positionne du côté intérieur. Ainsi, un premier capotage 28a est configuré pour obturer une partie d'extrémité longitudinale de la fenêtre 21 et le second capotage 28b est configuré pour obturer une partie d'extrémité longitudinale opposée de la fenêtre.

La mise en place de ces capots peut être réalisée de deux façons différentes. Tels que représentés sur les figures, le capot avant 28a est monté mobile en rotation autour de l'axe 27 de la découpe avant 21 a, tandis que le capot arrière 28b est monté fixe sur l'axe 27 qui traverse la découpe arrière 28b.

Les figures 37 et 38 montrent ainsi la capacité de rotation du capot avant 28a autour de son axe 27. Sur la figure 37 le capot avant est soulevé et laisse apparaître l'espace longitudinal qui est libéré pour permettre l'insertion du bras 10 porteur du balai dans la fenêtre 21 et son passage autour de l'adaptateur 5. La figure 38 montre le capot avant refermé et la continuité des surfaces entre la face supérieure de la monture centrale 2, le capot avant 28a et le bras 10 porteur du balai. Enfin, la figure 39 montre, en vue de dessous, le capot avant 28a en position dans la fenêtre 21.

La figure 40 montre de façon plus détaillée la forme du capot avant 28a. Il comporte une face supérieure 281 a dont la forme (ici non plane) est conformée pour prolonger la forme de la face supérieure de la monture centrale 2 et offrir une continuité aérodynamique entre ces deux éléments. La face inférieure 282a est formée par des raidisseurs qui sont croisés de façon à donner de la rigidité à la pièce et qui s'étendent verticalement jusqu'à rencontrer la face supérieure 281 a. A l'avant, c'est-à-dire vers l'extérieur du balai, la face supérieure 281a se termine par un cylindre transversal 283a qui est ouvert sur un secteur d'amplitude limitée. Ce cylindre a pour diamètre intérieur une valeur légèrement supérieure à celui de l'axe 27, de sorte que l'axe 27 puisse servir d'axe de rotation pour le capot avant; le secteur d'ouverture de ce cylindre est tel que l'axe 27 puisse passer dans ce secteur par encliquetage élastique puis y reste maintenu après l'encliquetage. Enfin sur les côtés du capot avant on voit deux pattes 284a orientées verticalement qui s'étendent à partir de la face supérieure 281 a. A l'arrière de ces deux pattes 284a s'étendent également verticalement deux secondes pattes 285a. Au niveau de chaque côté du capotage, entre les pattes 284a, 285a, s'étend en outre un crochet 286a s'étendant également verticalement. Les crochets 286a sont élastiquement déformables et sont destinés à coopérer par encliquetage élastique avec un moyen complémentaire de la monture 2.

Sur la figure 39, on voit les deux premières pattes 284a qui débouchent dans la fenêtre 21 et qui sont emboîtées dans des guides ou évidements 29 de la fenêtre 21. Ces guides sont formés, d'une part par les faces latérales 22 de la partie centrale de la monture centrale 2, et d'autre part par des cloisons 29a parallèles à ces faces, décalées vers l'intérieur de la fenêtre 21, ces cloisons 29a parallèles étant rattachées par des petites cloisons transversales 29b aux faces latérales 22 pour refermer l'évidement formant guide. Les premières pattes 284a servent à positionner le capot 28a dans la fenêtre 21. Les crochets 286a coopèrent avec les extrémités inférieures des cloisons 29b pour assurer le verrouillage de capot dans sa position de montage.

Par ailleurs, l'extrémité longitudinale de l'un des raidisseurs du capot 28a, opposée au cylindre 283a, forme un moyen 282a' d'appui et de retenue de l'adaptateur 5 et/ou du bras 10.

Les figures 41 à 43 montrent le capot arrière 28b et sa mise en place dans la fenêtre 21. Les éléments du capot arrière ayant la même fonction que des éléments similaires du capot avant sont désignés par les mêmes références numériques, la lettre a étant remplacée par une lettre b ; ils ne sont pas décrits à nouveau.

La figure 42 montre le sens dans lequel s'effectue la mise en place de ce capot. Alors que le capot avant 28a était rattaché à un axe 27 et mobile en rotation autour de lui, le capot arrière 28b est implanté par une translation verticale pour y être positionné par encliquetage de façon fixe. De ce fait, comme on peut le voir sur la figure 43, le cylindre 283b du capot arrière présente un secteur ouvert dont l'ouverture est orientée en direction du bas. La rotation autour de cet axe 27 est annihilée par la présence des premières pattes 284b dont le côté opposé au cylindre 283b coopère sur toute sa hauteur avec la petite paroi transversale et bloque toute rotation. De ce fait, la présence de crochets n'est plus nécessaire. De même l'extrémité de la fenêtre 21, qui est illustrée sur la figure 41, est simplifiée par rapport à celle de la figure 39, et ne comporte qu'un guide 29 pour le logement des seules premières plaques.

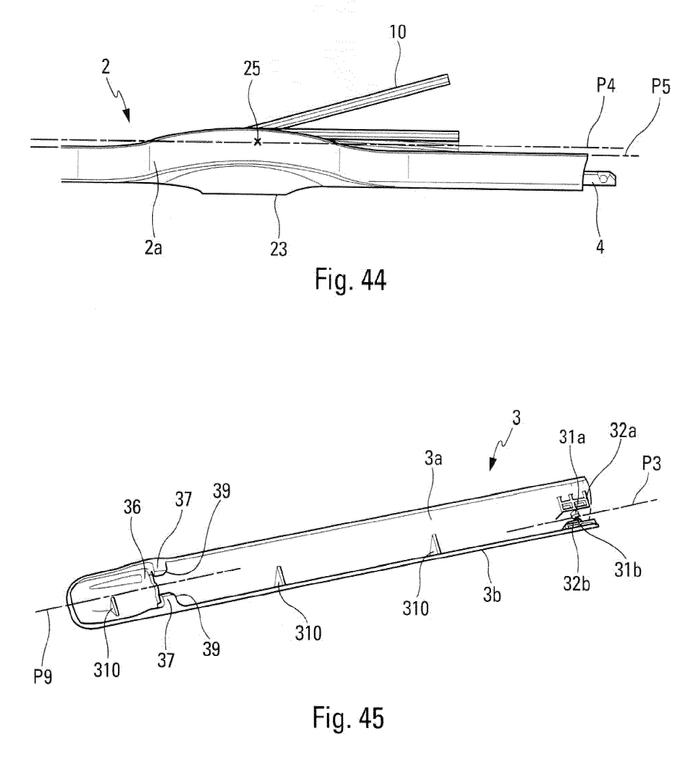

En se référant maintenant à la figure 44, on voit une monture centrale 2 reliée à un bras d'entraînement 10 du balai d'essuie-glace. Ce bras a, de façon connue, une extrémité recourbée en arc de cercle ou en U dans lequel vient se positionner l'adaptateur 5 qui sert à permettre le montage d'un même modèle de balai sur plusieurs types de bras et le rendre ainsi apte à être monté sur divers véhicules. Le bras 10 et l'adaptateur 5 tournent, comme indiqué précédemment, autour d'un axe d'articulation 25 qui s'étend entre les deux faces latérales parallèles 22 de la monture centrale 2 et sur lequel vient se clipser l'adaptateur. Le bras 10 doit pouvoir tourner autour de l'axe d'articulation dans le sens de l'éloignement d'un angle important pour autoriser le montage du balai sur le bras, mais il est aussi avantageux de lui donner un certain degré de liberté en rotation dans le sens du rapprochement vers le balai pour que ce dernier s'adapte parfaitement à la courbure du pare-brise. A cette fin, l'invention préconise de remonter verticalement l'axe d'articulation 25 qui est ici est situé dans un plan longitudinal P4 situé au dessus d'un plan longitudinal P5 parallèle passant sensiblement par les extrémités supérieures des parties d'extrémité longitudinales de la monture, c'est-à-dire par l'arête supérieure 2d (cf. également figure 31). Les plans P4 et P5 sont ici sensiblement horizontaux.

Comme décrit dans ce qui précède, les bords longitudinaux supérieurs des parois latérales 2a, 2b sont écartés l'un de l'autre au niveau de la fenêtre 21 pour définir des bords périphériques de cette fenêtre. Ces bords périphériques ont chacun une forme incurvée convexe et ont des extrémités supérieures (en C) situées au-dessus des plans P4 et P5.

De la sorte, le bras 10 peut se rapprocher du balai et faire avec sa direction longitudinale un angle négatif (en référence au débattement pour le montage du balai qui est pris comme sens de rotation positif). Cet angle se situe préférentiellement dans la gamme des 3 à 4 degrés et, en tout état de cause, est compris entre 0 et 5 degrés.

La figure 45 montre en vue de dessous un capot d'extrémité 3 avec à une de ses extrémités longitudinales des renforts 32a et 32b comme expliqué en référence à la figure 11, et, à l'autre extrémité une paroi transversale de guidage 36 pour le passage de l'organe de maintien 7. Compte tenu de l'élongation de cette pièce, qui peut être relativement grande dans le cas de balais de grande dimension, la longueur de la monture centrale 2 étant de préférence la même pour tous les modèles de balais, l'invention préconise d'installer des nervures transversales de rigidification 310 en plusieurs points du capot d'extrémité 3. Ces nervures 310 ont essentiellement une forme triangulaire pour s'adapter à la forme en dièdre formée par les deux parois longitudinales 3a et 3b du capot. Elles sont positionnées longitudinalement de façon équi-répartie, le plus grande nombre étant positionné entre les renforts 32a et 32b et la paroi de guidage 36, une nervure transversale supplémentaire étant positionnée au-delà de cette paroi transversale de guidage. Outre leur fonction de rigidification du capot d'extrémité 3, ces nervures 310 comportent un point d'appui sur leur côté inférieur configuré pour supporter la pression qui est exercée par l'éjecteur d'une machine d'injection lors de la réalisation du capot. Dans un mode particulier de réalisation, non représenté, la nervure est une nervure double formée par deux nervures entrecroisées, le point d'appui pour l'éjecteur étant alors positionné au point de jonction des deux nervures.

On constate également en figure 45 que le plan longitudinal médian P1 des moyens d'articulation 31 a, 31 b du capot, sensiblement vertical, est sensiblement parallèle et à distance d'un second plan longitudinal médian P9 desdits moyens de guidage 36, 37.

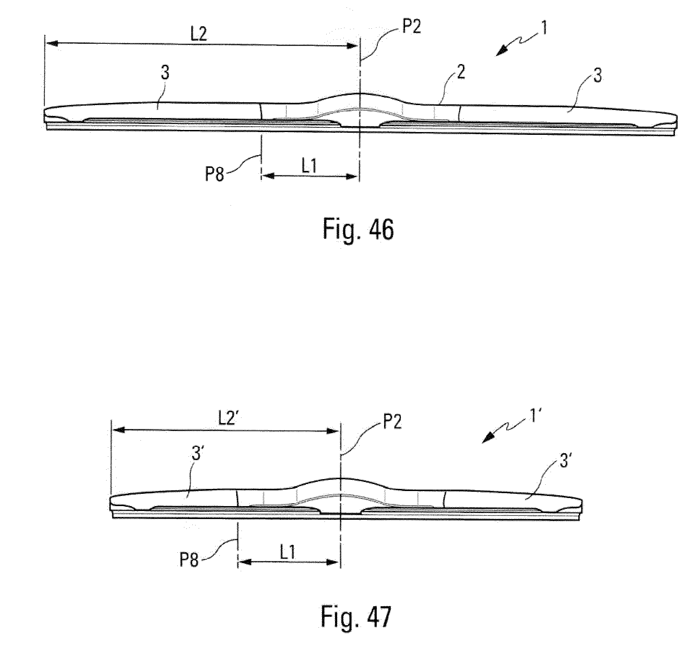

Les figures 46 et 47 montrent deux versions de balais d'essuie-glace à monture centrale 2 et à deux capots d'extrémité 3 qui sont rattachés à ladite monture centrale. Pour des raisons de simplification de la production et de la logistique, l'invention préconise d'homogénéiser les montures centrales 2, qui sont les pièces les plus complexes, et de ne faire varier la longueur que des capots d'extrémité 3 pour ajuster le balai 1 à la longueur qui convient pour une application particulière. Quel que soit le balai à fournir à un véhicule donné, la monture centrale 2 est identique, et donc, interchangeable. Compte tenu des longueurs moyennes constatées sur les essuie-glaces des véhicules en service, la longueur choisie pour la monture centrale se situe typiquement entre 15 et 30 cm.

Par ailleurs, il convient de respecter des dimensions relatives entre la monture centrale 2 et les capots d'extrémité 3, de façon que l'angle formé par ces capots avec la monture centrale reste dans des valeurs relativement faibles. A défaut, l'essuyage effectué par la monture centrale 2 et/ou celui effectué par les capots d'extrémité 3 ne sera pas de bonne qualité car le contact ne s'effectuera pas sur toute la longueur de l'élément concerné ou, s'il se fait, la pression sur le pare-brise ne sera pas homogène. Pour éviter ce désagrément, l'invention préconise de conserver un ratio entre la longueur de la monture centrale et la longueur totale du balai dans certaines limites. Après examen, des résultats de divers essais d'essuyage, l'invention préconise une valeur comprise entre 20 et 70% pour le rapport entre la demi-longueur L1 de la monture centrale 2 (c'est-à-dire de la distance entre le plan transversal P2 passant par l'axe transversal d'articulation 25 et un autre plan transversal P8 passant par l'axe 31 de pivotement des capots d'extrémité) et la demi-longueur L2, L2' du balai (c'est-à-dire la distance entre le premier plan passant par l'axe transversal d'articulation 25 et l'extrémité longitudinale du capot d'extrémité 3). Préférentiellement, ce ratio se situe entre 25 et 65% et par exemple entre 27 et 59%.

L'invention propose en outre un procédé de montage de carénages pour balais plats carénés d'essuie-glaces, en particulier de véhicule, comportant une étape de montage d'un carénage court 1' et une étape de montage d'un carénage long 1. L'étape de montage d'un carénage court 1' comprend l'assemblage d'une première référence de monture centrale 2 avec une première référence de capots d'extrémité 3' pour carénage court, et l'étape de montage d'un carénage long 1 comprend l'assemblage de ladite première référence de monture centrale 2 avec une seconde référence de capots d'extrémité 3 pour carénage long.

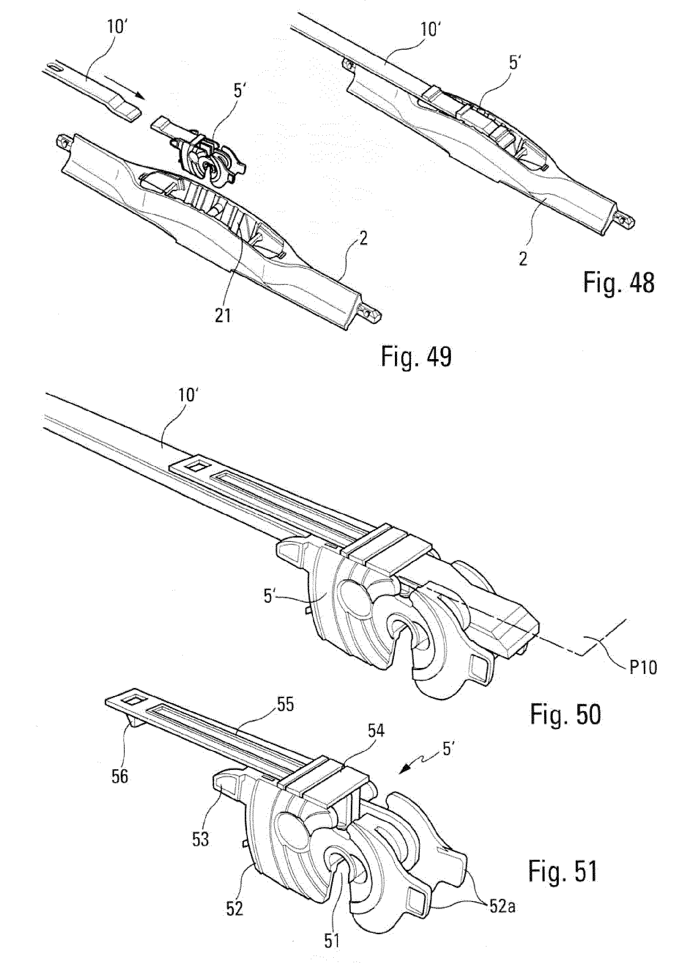

Les figures 48 à 54 décrivent un mode de réalisation de l'invention qui est adapté à son montage sur un bras d'essuie-glace, dit bras-tige, qui ne présente pas de forme terminale en U, mais la forme d'une tige sensiblement rectiligne.

Les figures 48 et 49 montrent, respectivement en position assemblée et en position éclatée, une monture centrale 2 identique à celle du mode de réalisation précédent, dans laquelle est inséré un adaptateur 5' qui est légèrement modifié par rapport au précédent, de façon à l'adapter au montage sur un bras-tige 10'.

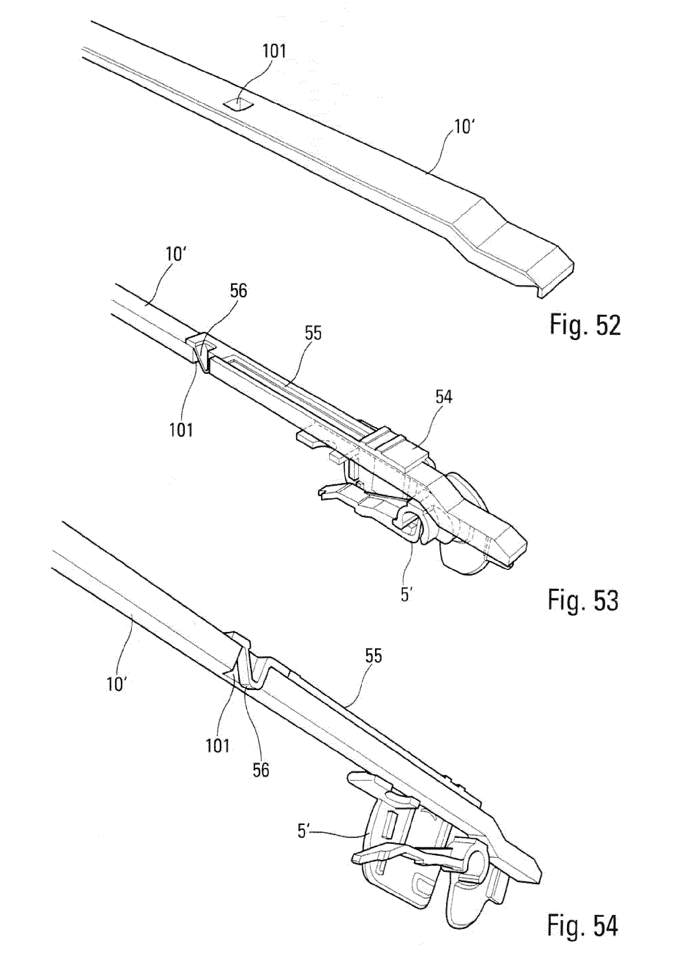

La figure 50 montre la coopération entre l'adaptateur modifié 5' et le bras-tige 10', alors que les figures 51 et 52 montrent respectivement l'adaptateur 5' modifié et le bras-tige 10'.

L'adaptateur modifié 5' a, comme précédemment, sensiblement une forme parallélépipédique allongée selon la direction longitudinale avec deux ailes latérales 52 reliées entre elles par une portion médiane qui définit un logement cylindrique 51 pour le encliquetage élastique de l'axe transversal d'articulation 25 qui traverse la fenêtre 21 de la monture centrale 2. Il comporte également, sur chaque aile latérale 52, une extension longitudinale 52a dont l'objet est de servir de butée pour limiter la rotation de l'adaptateur dans certains cas d'utilisation, et un ergot 53 qui vient buter contre une des faces latérales parallèles 22 du centre de la monture centrale 2 quand l'adaptateur est dans une position de rotation maximale.

L'adaptateur modifié 5' comporte par ailleurs une plaque transversale 54 qui relie les ailes latérales 52 à leur niveau supérieur, formant ainsi un toit pour l'adaptateur et définissant un logement longitudinal dans lequel vient s'insérer l'extrémité distale du bras-tige 10'. Ce logement longitudinal débouche ici à ses deux extrémités longitudinales. La plaque transversale supérieure 54 se prolonge vers l'intérieur, en référence à la rotation du bras, par une patte longitudinale 55, de forme plane et allongée, qui comporte à proximité de son extrémité opposée à la plaque 54, un doigt de retenue 56 qui s'étend verticalement vers le bas, de façon à pouvoir coopérer avec une encoche 101 pratiquée dans le bras 10'. La partie inférieure de la plaque transversale 54 et de la patte longitudinale 55 sont telles qu'elles ménagent un espace dans lequel peut se glisser et venir se loger le bras-tige 10'. Compte tenu de son allongement, la patte longitudinale présente une certaine flexibilité et elle est attachée à la plaque 54 par une liaison élastique qui l'entraîne naturellement vers le bas, ce qui tend à maintenir son contact contre le bras-tige sur toute sa longueur. La patte 55 s'étend sensiblement dans un plan P10 passant par une extrémité supérieure de l'adaptateur.

Le logement longitudinal de l'adaptateur 5' qui reçoit une extrémité libre du bras tige 10' est disposé en partie supérieure de l'adaptateur, notamment au-dessus du logement cylindrique 51. Ce logement longitudinal est délimité au moins par la plaque 54, la patte longitudinale 55 s'étendant à partir de cette plaque 54. Une telle disposition de la patte longitudinale 55 permet d'empêcher une interférence, c'est-à-dire un contact physique, entre la monture centrale 2 et le bras tige 10'. Le bras tige 10' vient s'insérer dans la partie supérieure de l'adaptateur 5' sans risquer de toucher la monture centrale 2, notamment une partie terminale de sa forme en déflecteur, ou une partie terminale d'un déflecteur que cette monture centrale 2 porte.

Quant au bras-tige 10', visible sur la figure 52, il présente, sans que cela soit impératif, un abaissement à sa partie terminale pour former une deuxième partie plane qui est située à une hauteur plus faible que la première partie. Cette forme a pour objet de le rendre plus proche géométriquement de l'adaptateur utilisé. Il comporte une encoche 101 qui est située à une distance de son extrémité telle que le doigt de retenue 56 porté par la patte longitudinale 55 est longitudinalement à son niveau quand le bras-tige est inséré dans l'adaptateur.

Les figures 53 et 54 montrent, respectivement en vue de dessus et de dessous, et en coupe longitudinale, le bras-tige 10' dans son logement en dessous de la patte longitudinale 55 et de la plaque transversale 54. Le doigt de retenue 56 est entré dans l'encoche 101 du bras-tige, ce qui assure la solidarisation du bras-tige 10' et de l'adaptateur 5', cette configuration étant réversible du fait de la flexibilité longitudinale de la patte 55.

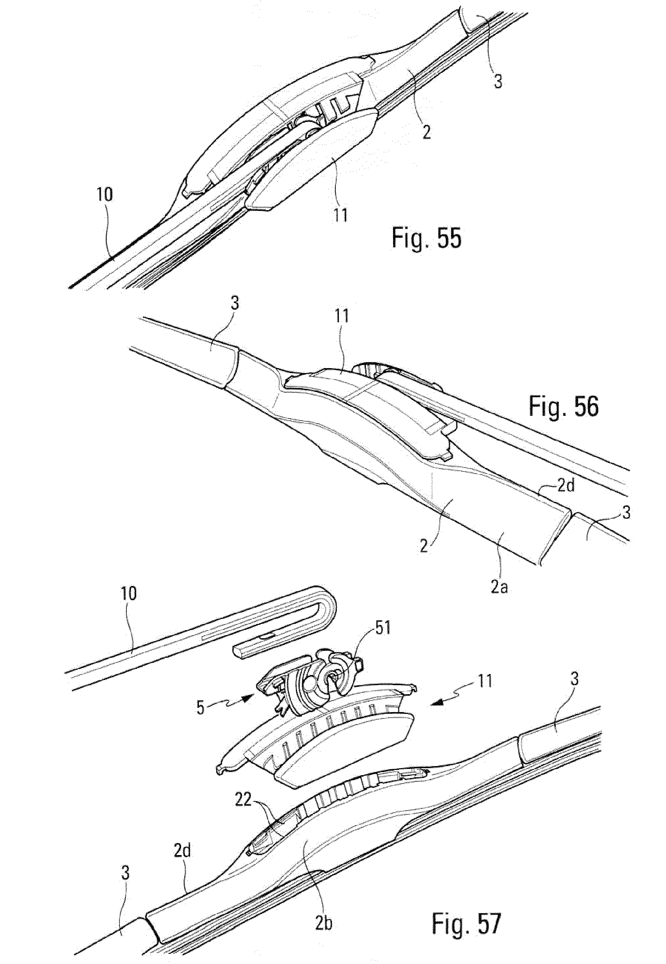

En se référant maintenant aux figures 55 à 60 on va décrire un autre mode de réalisation, dans la configuration du montage sur un bras classique, à partie terminale en U. Ce mode peut tout aussi bien être mis en oeuvre sur un bras-tige, pour autant que l'adaptateur mis en place soit, comme dans le mode précédent de réalisation, adapté à ce type de bras. Dans ce mode, le balai est décalé latéralement par rapport au bras 10 et maintenu en position par un organe de connexion configuré à cet effet. En revanche la monture centrale 2 et l'adaptateur 5 ou 5' sont identiques à ceux des modes décrits précédemment.

Les figures 55 et 56 montrent, respectivement en vue de face et en vue de derrière, un balai d'essuie-glace monté sur un bras en U, en position assemblé, tandis que la figure 57 montre ce balai en position désassemblé.

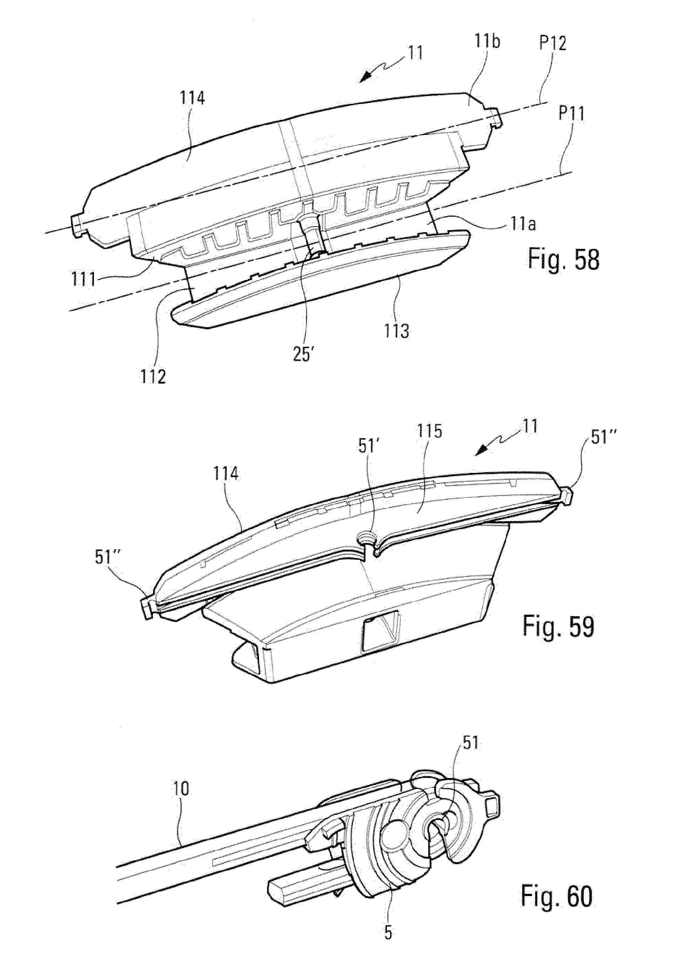

Le bras 10 a une forme classique se terminant par un U dans lequel vient s'insérer l'adaptateur 5 précédemment décrit, tel que cela apparaît sur la figure 60. L'adaptateur 5 comprend notamment un logement cylindrique 51 dans lequel peut venir se clipser un axe d'articulation comme celui s'étendant entre les deux faces latérales parallèles 22 d'une monture centrale 2. Entre l'adaptateur 5 et la monture centrale 2 s'étende une pièce intermédiaire, ou organe de connexion 11, qui reçoit l'adaptateur 5 par encliquetage sur un second axe d'articulation 25' et qui vient, elle-même, se clipser sur l'axe transversal 25 de la monture centrale. Dans cette configuration l'organe de connexion 11 est fixe par rapport au balai et la rotation du bras, et de l'adaptateur 5, s'effectue autour du second axe d'articulation 25'.

L'organe de connexion 11 est décrit plus en détail en référence aux figures 58 et 59. Cet organe présente la forme de deux corps s'étendant longitudinalement et qui sont placés de façon symétrique l'un de l'autre par rapport à une direction longitudinale. Ils sont rattachés l'un à l'autre par l'intermédiaire d'une paroi centrale plane 111 orientée longitudinalement, l'un étant positionné en haut de cette paroi centrale, l'autre étant positionné en bas. Le premier corps 11a apparaît ouvert sur le dessus alors que le second corps 11 b apparaît fermé en vue de dessus du fait qu'il s'ouvre en direction du bas.

Le second corps 11 b forme des moyens de liaison de l'organe 11 à la monture, c'est-à-dire qu'il coopère avec la monture en vue de solidariser l'organe au balai. Dans l'exemple représenté, le second corps comprend des moyens de fixation configurés pour coopérer par emboîtement ou encliquetage élastique avec au moins un axe de la monture 2, comme cela sera décrit dans ce qui suit.

Un premier plan transversal médian P11 au premier corps 11 a, passant par l'axe 25', est parallèle et à distance d'un second plan médian P12, parallèle au plan P11, et passant par le second corps 11 b.

Le premier corps a transversalement une forme en U, étant formé par trois surfaces planes perpendiculaires les unes aux autres, qui s'étendent selon la direction longitudinale. De la paroi centrale 111 s'étend une paroi plancher 112 dont la largeur est approximativement égale, par valeur inférieur, à celle de la fenêtre 21 de la monture centrale 2. Et de cette paroi plancher s'étend vers le haut une troisième paroi 113 qui reproduit sensiblement la forme de la paroi centrale 111, en étant le miroir par rapport au plan médian de la paroi plancher. On voit par ailleurs sur la figure le second axe d'articulation 25' qui s'étend transversalement entre les première et troisième parois 111 et 113, et qui assure la fonction de support de l'adaptateur 5 qu'assurait l'axe d'articulation 25 dans le premier ou les précédents modes de réalisation. Enfin, les trois parois du premier corps 11a s'étendent longitudinalement et verticalement de façon à reproduire sensiblement la forme de la fenêtre 21 de la monture centrale 2, de sorte que l'adaptateur 5 puisse s'y rattacher comme il le faisait dans la fenêtre de la monture centrale.

Le second corps 11 b a, quant à lui, pour fonction de solidariser l'organe de connexion 11 avec la monture centrale 2, tout en assurant une fermeture de la fenêtre 21 de cette monture centrale pour améliorer l'aérodynamique de l'ensemble. Pour cela, il comporte une paroi plafond formant un capotage 114 qui s'étend à partir de l'arête supérieure de la paroi centrale 111, en direction opposée au premier corps 11 a. Ce capotage 114 prolonge la surface supérieure de la monture centrale 2 et assure une continuité tant esthétique qu'aérodynamique. Ce capotage 114 porte une nervure 115 qui s'étend longitudinalement en son milieu, sur toute sa longueur et qui s'étend en direction du bas jusqu'à venir à une hauteur correspondant à celle de l'axe transversal d'articulation 25. Au milieu de sa longueur, cette nervure 115 est découpée par un logement cylindrique 51' qui a vocation à recevoir par encliquetage l'axe d'articulation 25 de la monture centrale2 et à maintenir en place l'organe de connexion 11 dans la fenêtre 21 de la monture centrale 2.

A chacune de ses extrémités longitudinales, le capotage 114 comprend un autre logement cylindrique 51" qui a vocation à recevoir par emboîtement ou encliquetage élastique un axe 27 de la monture centrale 2.

Dans une variante non représentée, l'organe de connexion 11 pourrait être formé d'une seule pièce avec la monture centrale 2.

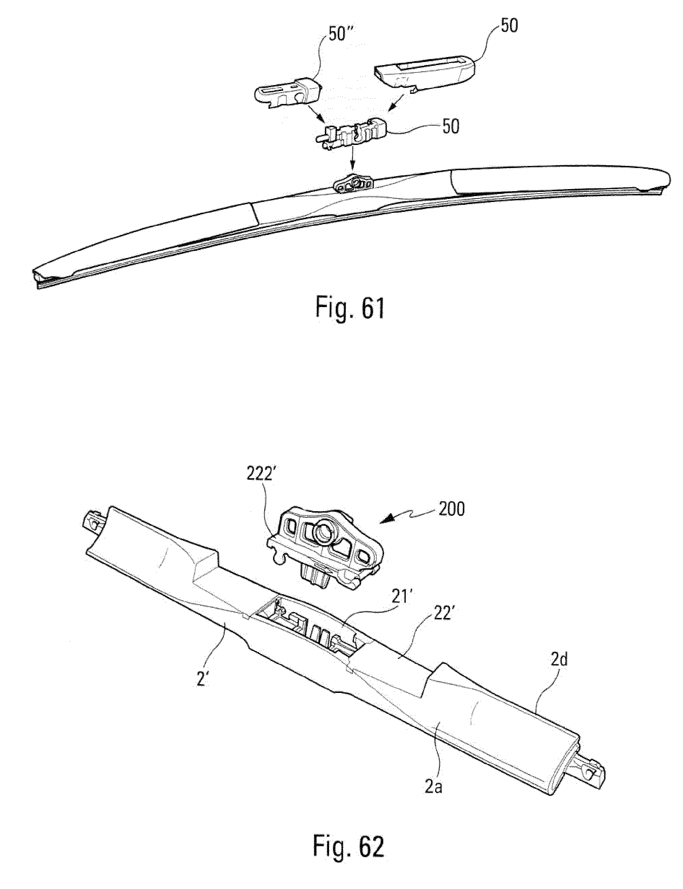

En se référant aux figures 61 à 65, on va maintenant décrire un autre mode de réalisation de l'invention. Ce mode a pour objet d'adapter un balai plat caréné sur un adaptateur déjà existant, qui est adapté à un balai plat. L'invention consiste à modifier la monture centrale par rapport à celles décrites précédemment et à insérer un second organe de connexion entre cette monture centrale modifiée et l'adaptateur existant, comme on peut le voir sur la figure 61.

En référence à la figure 62, on voit une monture centrale 2', semblable à celle des modes précédents, à ceci près qu'elle ne comporte pas d'axe transversal d'articulation. Les parois latérales parallèles 2a, 2b sont ici arasées pour laisser de l'espace aux adaptateurs 50, 50', 50" existants ; la partie supérieure de la partie centrale de la monture centrale 2' forme ainsi un plan horizontal 22' dans lequel est découpée la fenêtre 21'. Le contour extérieur, en partie basse, du second organe de connexion 200 reproduit la forme de la fenêtre 21', de sorte qu'après implantation de ce second organe de connexion, la fenêtre soit complètement obturée. De plus, cet organe 200 comprend en partie basse un capotage 222' définissant un plan horizontal qui se positionne dans le prolongement du plan horizontal 22'.

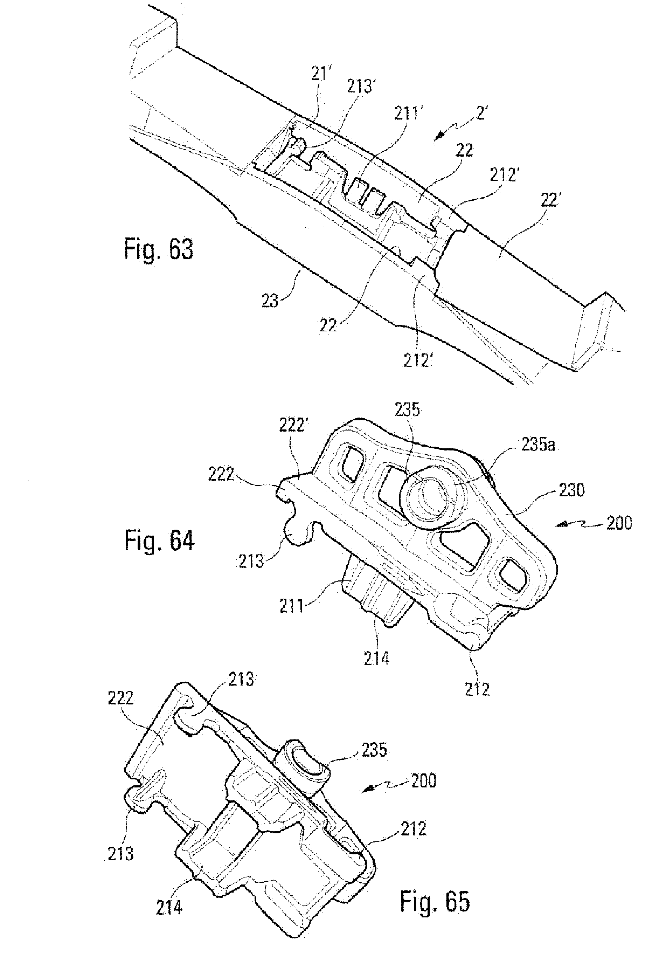

La figure 63 montre la partie centrale de la monture centrale 2', avec son plan horizontal 22' dans lequel est creusée la fenêtre 21'. Cette fenêtre 21', de forme rectangulaire, sans que cette forme soit impérative, ne présente pas de forme en contre dépouille selon la direction verticale. Elle s'enfonce dans la monture centrale 2' en formant une cavité, comme dans le cas des montures centrales des modes de réalisation précédents, jusqu'à atteindre la face supérieure de la plaque longitudinale qui s'étend au dessus des crochets 23 de support de l'organe de maintien 7. A l'intérieur de cette cavité, les faces latérales parallèles 22 comportent des nervures verticales 211' qui servent, entre elles, de guidage à des nervures correspondantes 211 positionnées sur le second organe de connexion 200.

Aux extrémités longitudinales de la fenêtre 21', on trouve des moyens d'accrochage du second organe de connexion 200. Pour cela, on trouve d'un côté deux butées femelles d'emboîtement 212' qui font saillie vers l'intérieur de la fenêtre, en partant de chacune des faces latérales 22, pour former une retenue dans le sens vertical à des moyens mâles 212 positionnés sur le second organe de connexion 200. Ces moyens mâles 212 ont la forme d'extensions longitudinales qui sont positionnées latéralement de façon à se retrouver en face des butées femelles d'emboîtement 212' et qui peuvent venir se loger en dessous d'elles. Ces butées femelles 212' et ces moyens mâles 212 ont des formes cylindriques, à génératrices orientées latéralement, de façon qu'elles autorisent une rotation du second organe de connexion 200 dans un plan vertical pour son positionnement sur la fenêtre 21'.

A l'autre extrémité de la fenêtre 21' on trouve deux moyens femelles d'encliquetage 213', qui s'étendent, eux aussi en saillie vers l'intérieur de la fenêtre, en partant de chacune des faces latérales 22. Ces moyens femelles d'encliquetage 213' ont, en négatif, une forme cylindrique à base circulaire, qui est ouverte vers le haut et dont les bords supérieurs peuvent s'écarter l'un de l'autre de façon élastique. Parallèlement, le second organe de connexion 200 comprend à l'extrémité opposée de ses moyens d'emboîtement, deux moyens mâles d'encliquetage 213 dont la forme est le miroir des moyens femelles 213' d'encliquetage de la fenêtre 21'. L'introduction du second organe de connexion 200 dans la fenêtre 21' s'effectue ainsi de la façon suivante : l'opérateur vient positionner le second organe de connexion 200 dans la fenêtre 21' en le positionnant en biais et en faisant passer les moyens d'emboîtement mâles 212 sous les moyens femelles d'emboîtement 212', puis il fait exécuter au second organe de connexion 200 une rotation qui l'amène sensiblement horizontalement, ce qui amène les moyens mâles d'encliquetage 213 en face des moyens femelles d'encliquetage 213' et simultanément les nervures 211 du second organe de connexion 200 entre celles 211' de la fenêtre 21'. Puis une pression verticale enclenche les moyens d'encliquetage mâles 213 dans les moyens d'encliquetage femelles 213', ce qui assure la solidarisation des deux pièces.

En référence aux figures 64 et 65, on voit le second organe de connexion 200 qui comprend essentiellement une plaque centrale 222 dont la face supérieure 222' forme la continuité recherchée pour le capotage avec le plan horizontal 22' de la monture centrale. De cette plaque centrale s'étendent vers le bas, au centre, des moyens de guidage latéraux 214 qui portent les nervures de guidage 211 et aux extrémités longitudinales, d'une part les moyens mâles d'emboîtement 212 et d'autre part, les moyens mâles d'encliquetage 213. De la plaque centrale s'étend vers le haut une structure 230 de support d'un adaptateur. Cette structure a, sensiblement, la forme d'un parallélépipède s'étendant longitudinalement au centre de la plaque sur toute la longueur de celle-ci. Elle porte à sa partie supérieure deux tourillons transversaux alignés 235 qui forment un axe ayant les mêmes caractéristiques que l'axe transversal d'articulation 25 des fenêtres 21 des montures centrales des modes précédents, et qui peut donc s'intégrer dans le logement cylindrique 51 des adaptateurs existants 50, 50', 50". De façon préférentielle ces tourillons 235 comportent, à, leur partie supérieure, une face chanfreinée 235a pour faciliter leur introduction dans ledit logement cylindrique.

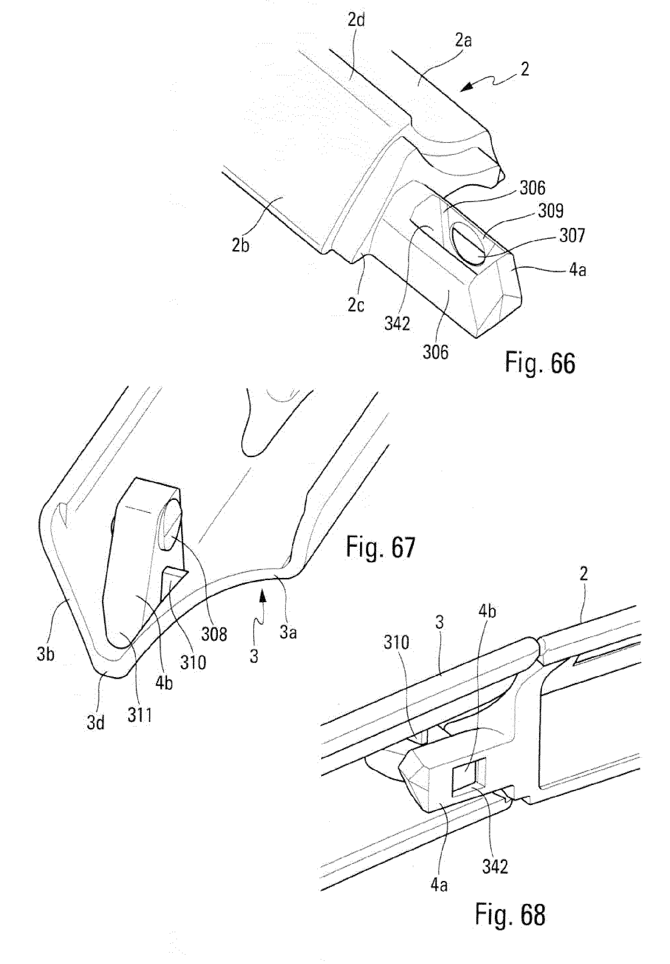

On se réfère désormais aux figures 66 à 68 qui représentent une variante de réalisation des moyens de liaison entre une monture centrale 2 et un capot d'extrémité 3.

Sur la figure 66, on voit les parois longitudinales, 2a à l'avant et 2b à l'arrière, qui forme le dièdre du déflecteur aérodynamique de la monture centrale 2 en se rejoignant sur une arête sommitale 2d, ce dièdre se terminant longitudinalement par une paroi transversale 2c qui referme le dièdre. De cette paroi transversale 2c s'étend un doigt 4a, de forme sensiblement parallélépipédique, qui est traversé verticalement par un évidement 342 destiné à recevoir un doigt 4b d'un capot d'extrémité 3.

L'évidement 342 a une forme générale parallélépipédique. Il s'étend entre deux parois latérales 306 sensiblement parallèles du doigt 4a. Ces parois 306 comportent des faces latérales internes en regard comportant chacune un trou borgne 307 sensiblement cylindrique de réception d'un pion 308 du doigt 4b. Une partie supérieure 309 de chaque paroi 306, s'étendant entre le trou borgne 307 et le bord longitudinal supérieur du doigt 4a peut être chanfreinée intérieurement pour faciliter l'insertion du doigt 4b et de ses pions 308 dans l'évidement 342.

Le doigt 4a a un plan de symétrie sensiblement longitudinal et vertical.

La figure 67 montre le doigt 4b d'un capot d'extrémité 3, ce doigt ayant ici une forme générale sensiblement trapézoïdale. La grande base 311 du doigt 4b est reliée à la zone de jonction entre les parois 3a, 3b. La petite base du doigt définit l'extrémité libre du doigt. Il s'étend donc vers le bas depuis l'intérieur de l'arête sommitale 3d du capot 3. Il a une forme aplatie et s'étend sensiblement dans un plan longitudinal sensiblement vertical. Il comprend deux faces latérales externes sur lesquelles les pions 308 sont en saillie. Les pions 308 sont situés au voisinage de l'extrémité libre du doigt 4b. Chaque pion 308 a une forme générale cylindrique et comprend une demi-portion supérieure non biseautée et une demi-portion inférieure biseautée ou chanfreinée de façon à faciliter son insertion dans l'évidement 342 du doigt 4a.

Le doigt 4b a un plan de symétrie sensiblement longitudinal et vertical.

Les faces latérales du pion 308 sont reliées aux faces internes en regard des parois 3a, 3b par une nervure de renfort 310, qui s'étend sensiblement transversalement. Une première portion de nervure 310 s'étend entre une face latérale du doigt 4b et la paroi 3a et une seconde portion de nervure (non visible) s'étend entre l'autre face latérale du doigt 4b et la paroi 3b.

La figure 68 montre la coopération du doigt 4a de la figure 66 avec le doigt 4b de la figure 67. Le doigt 4b est engagé dans l'évidement 342 du doigt 4a jusqu'à emboîtement par encliquetage élastique des pions 308 dans les trous borgnes 307 du doigt 4a. L'engagement est facilité par les portions biseautées des pions 308 et les parties chanfreinées 309 du doigt 4a, qui peuvent coopérer ensemble par glissement.

En position de montage représentée en figure 68, les doigts 4a, 4b sont sensiblement perpendiculaires. Ils sont aptes à tourner l'un par rapport à l'autre par coopération des surfaces cylindriques externes des pions 308 avec les surfaces cylindriques internes des trous 307.

Les portions non biseautées des pions 308 coopèrent avec les trous borgnes 307 pour empêcher une désolidarisation involontaire des doigts et donc du capot d'extrémité 3 de la monture.

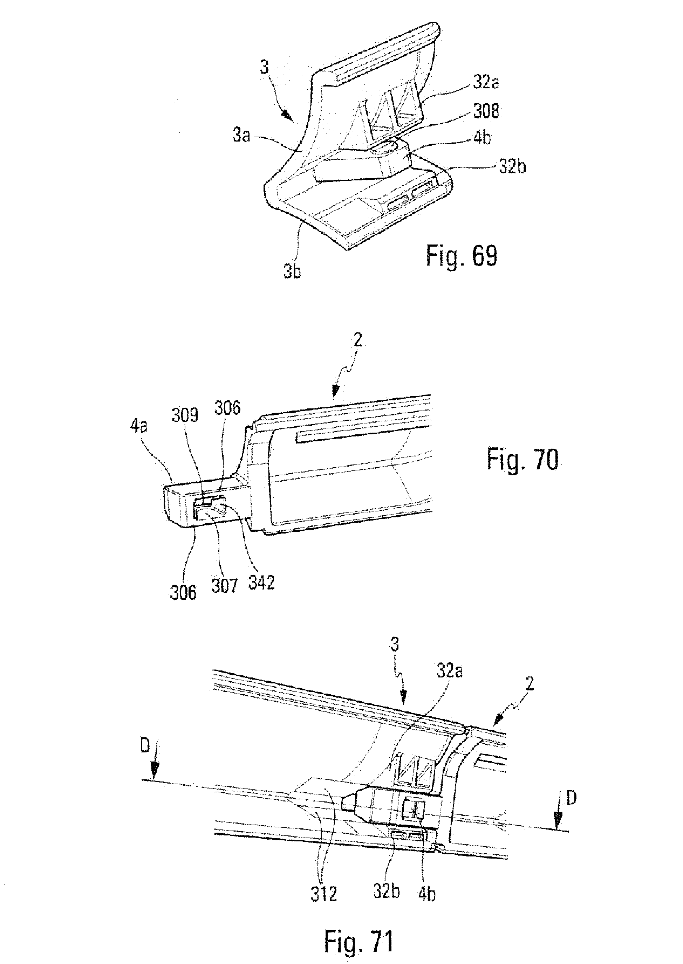

Avantageusement, le carénage est configuré pour que la force nécessaire pour désolidariser le doigt 4a de la monture centrale 2 du doigt 4b du capot d'extrémité 3, en les désemboîtant l'un de l'autre, soit supérieure à la résistance à la rupture d'au moins une partie du carénage, comme cela sera décrit plus en détail dans ce qui suit en référence à la variante de réalisation des figures 69 à 78.

En référence à la figure 69, on voit une partie d'extrémité d'un capot d'extrémité 3 qui diffère de celui décrit en référence à la figure 67 essentiellement en ce que le doigt 4b s'étend ici entre deux renforts 32a, 32b du type de ceux représentés en figures 11 et 12. Les renforts 32a, 32b comprennent des parois entrecroisées dont certaines sont sensiblement longitudinales et parallèles au doigt 4b. Les renforts 32a, 32b sont écartés l'un de l'autre en direction transversale d'une distance suffisante pour pouvoir y insérer entre eux le doigt 4a, comme cela est visible en figure 71. Les renforts peuvent participer au guidage du doigt 4a en pivotement.

Par ailleurs, comme cela est mieux visible aux figures 71 à 74, les parois 3a, 3b du capot d'extrémité comportent des parties amincies 312, c'est-à-dire des parties qui présentent une plus faible épaisseur que le reste des parois. Chaque paroi 3a, 3b comprend ici une partie amincie 312 qui a une forme générale longitudinale et est située à la zone de jonction entre la paroi 3a, 3b et l'arête sommitale 3d. Les parties amincies 312 se rejoignent et sont situées au voisinage de l'extrémité du capot d'extrémité 3 portant le doigt 4b.

Les parties amincies 312 sont ici formées par un évidement ou un enlèvement de matière sur les faces latérales internes en regard des parois 3a, 3b.

Les parties amincies 312 permettent de fragiliser les zones du capot dans lesquelles elles sont situées. Elles définissent ainsi des zones de faiblesse dans lesquelles une rupture du capot est destinée à être initiée lorsqu'une tentative de désolidarisation du capot de la monture centrale a lieu. C'est en ce sens que le carénage, c'est-à-dire le au moins un capot et/ou la monture centrale, est configuré pour que la force nécessaire pour désolidariser lesdits moyens de liaison desdits moyens complémentaires, en les désemboîtant les uns des autres, soit supérieure à la résistance à la rupture d'au moins la partie amincie 312 du capot constitutif du carénage.

Le carénage est ainsi équipé d'un moyen agencé pour que le capot et/ou la monture cassent avant désolidarisation du doigt 4b du capot par rapport au doigt 4a de la monture centrale.

La partie amincie du carénage est la portion du carénage de laquelle est issu le doigt 4b du capot, et/ou le doigt 4a de la monture centrale.

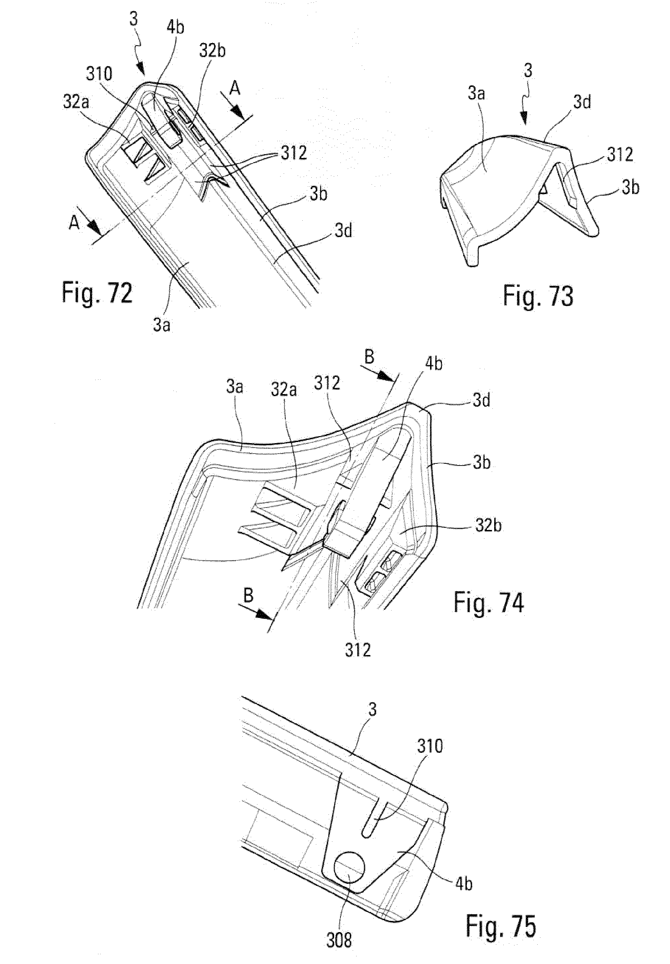

Dans l'exemple illustré aux figures 72 à 75, la partie amincie 312 est ménagée sur le capot 3, dans la portion du dièdre d'où nait le doigt 4b du capot. En particulier, l'arête 3d formée à la rencontre de la paroi avant 3a avec la paroi arrière 3b délimitant le capot 3 amincie par rapport au reste du capot.

En référence à la figure 70, on voit une partie d'extrémité de la monture centrale 2 qui diffère de celle décrite en référence à la figure 66 notamment en ce que les trous borgnes 307 ont ici chacun une forme générale trapézoïdale. La petite base de chaque trou borgne 307 définit l'extrémité supérieure du trou et a une forme générale incurvée concave. Cette petite base est séparée du bord longitudinal supérieur de la paroi correspondante par une partie chanfreinée 309 du type précité. La grande base du trou 307 débouche ici sur le bord longitudinal inférieur de la paroi 306 correspondante.

La figure 71 montre la coopération du doigt 4a de la figure 69 avec le doigt 4b de la figure 70.

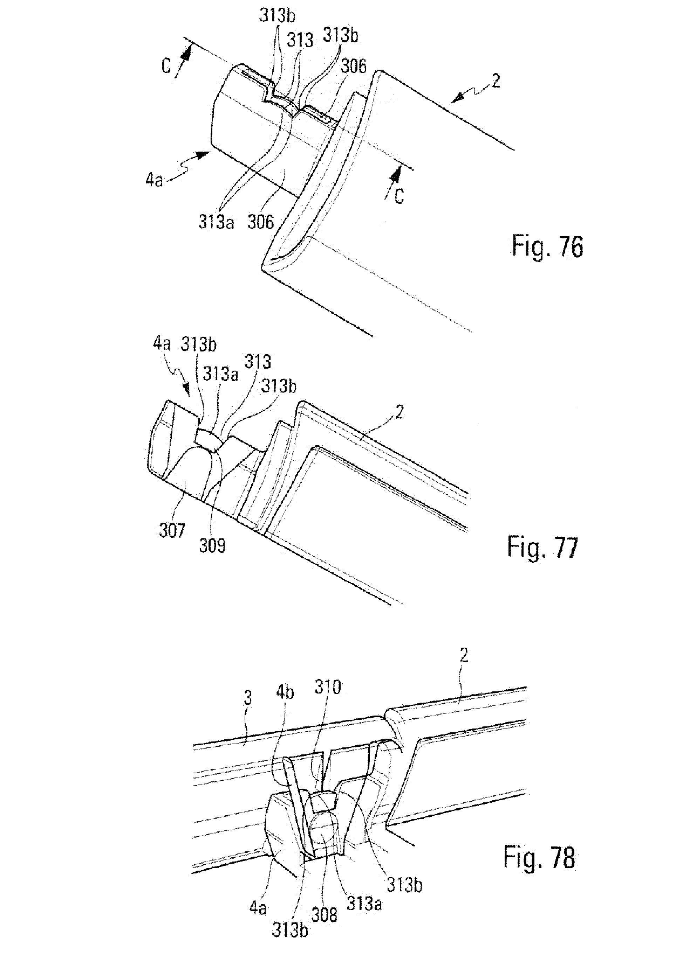

Une autre différence relative au doigt 4a du capot d'extrémité 3 est visible aux figures 76 à 78.

Les parois latérales 306 du doigt 4a comportent chacune une encoche 313 au niveau de leurs bords longitudinaux supérieurs. Chaque encoche 313 est délimitée par trois surfaces: une surface médiane de guidage 313a qui est sensiblement incurvée convexe et deux surfaces latérales de butée 313b qui sont sensiblement planes.

La surface de guidage 313a s'étend autour de l'axe d'articulation défini par la surface cylindrique du trou borgne 307. Elle a ici une étendue angulaire similaire à celle de cette surface cylindrique, qui est ici comprise entre 20 et 50° environ.

La surface de guidage 313a s'étend autour de la surface cylindrique du trou borgne et est donc située radialement à l'extérieur de celle-ci, par rapport audit axe.

Les surfaces de butée 313b ont une orientation sensiblement radiale par rapport à cet axe et forment entre elles un angle correspondant à l'étendue angulaire précitée. Elles sont chacune reliées au bord longitudinal supérieur de la paroi 306 correspondante par une portion incurvée convexe.

On peut noter en figure 77 notamment que les portions supérieures chanfreinées 309 précitées des parois 306 sont situées sur les portions de faces internes en regard des parois 306, s'étendant entre les trous borgnes 307 et les encoches 313.

Les surfaces de guidage 313a et de butée 313b des parois 306 sont destinées à coopérer respectivement avec les bords inférieurs libres des portions de la nervure de renfort 310, comme cela est visible en figure 78. L'extrémité inférieure de la nervure 310 a en section une forme arrondie convexe (cf. figures 75 et 78) qui est configurée pour glisser sur la surface de guidage 313a afin de contribuer au guidage en pivotement du capot d'extrémité 3 vis-à-vis de la monture centrale 2. De plus, dans la mesure où les autres éléments du balai le permettent, l'extrémité inférieure de la nervure 310 est apte à venir en butée sur les surfaces de butée 313b pour définir des positions de fin de course de pivotement du capot par rapport à la monture centrale.

Bien que la description qui précède ait été faite en relation avec la monture centrale 2 et un capot d'extrémité 3, elle est naturellement applicable à la liaison entre la monture centrale et l'autre capot d'extrémité.

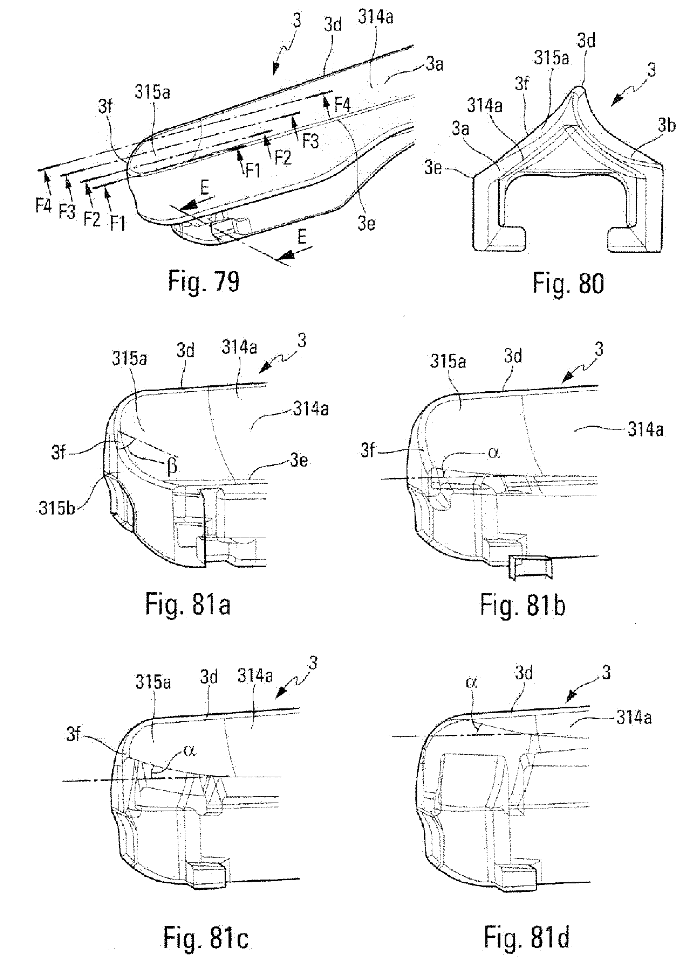

On se réfère désormais aux figures 79 à 81d qui représentent un autre aspect de l'invention selon lequel le balai plat caréné selon l'invention est équipé d'un déflecteur principal et d'un déflecteur secondaire. Plus précisément, chaque carénage comprend un déflecteur principal et un carénage secondaire sur chacune de ses extrémités libres.

Le déflecteur principal est du type de celui décrit dans ce qui précède, en référence à la figure 1 notamment, et s'étend sensiblement sur toute la dimension longitudinale de chaque capot d'extrémité 3.

Pour réaliser ce déflecteur, la paroi 3a avant du capot 3 peut par exemple définir une surface avant 314a ayant en section transversale une forme sensiblement incurvée concave, comme cela est visible dans les dessins.

Cette surface 314a s'étend entre l'arête sommitale 3d du capot et le bord longitudinal inférieur 3e de la paroi avant 3a.

Selon l'invention, chaque capot d'extrémité 3 comprend un déflecteur secondaire à son extrémité libre, qui s'étend ici sensiblement entre une extrémité longitudinale libre du déflecteur principal et le bord avant 3e. Dans l'exemple représenté, le déflecteur secondaire définit une surface incurvée concave 315a à l'extrémité libre du capot 3. Cette surface est sensiblement confondue avec la surface 314a du déflecteur principal, au niveau de l'extrémité libre du capot. La surface 315a s'étend sensiblement entre une arête d'extrémité 3f du capot, qui a une orientation sensiblement transversale, une partie d'extrémité longitudinale de l'arête sommitale 3d reliée à l'extrémité supérieure de l'arête d'extrémité 3f, et une partie d'extrémité longitudinale du bord avant 3e reliée à l'extrémité inférieure de l'arête d'extrémité 3f. La surface 315a comprend un creux au voisinage de l'arête 3f. Cette arête 3f comprend une portion médiane rectiligne et deux portions d'extrémité incurvées de liaison respectivement à l'arête 3d et au bord longitudinal 3e.

La figure 80 permet de voir que l'arête d'extrémité 3f est située plus haut que le fond du creux des surfaces 314a, 315a, ce qui permet de défléchir vers le haut le flux d'air qui s'écoule en fonctionnement sur la paroi 3a du capot, le long du balai.

Les figures 81 a à 81 d permettent de visualiser l'évolution de l'angle α formé entre l'intersection de la surface 315a avec des plans longitudinaux sensiblement verticaux (qui sont les plans de coupe dans ces figures), et un plan longitudinal sensiblement horizontal. L'angle α est sensiblement nul à proximité du bord avant 3e et est sensiblement maximal sensiblement à mi-distance entre le bord avant 3e et l'arête sommitale 3d. Il varie par exemple entre 0 et 30° environ.

On voit également dans ces figures que l'arête 3f est à l'intersection de la face 315a et d'une face transversale 315b d'extrémité du capot 3, ces faces 315a, 315b formant entre elles un angle β inférieur à 90°.

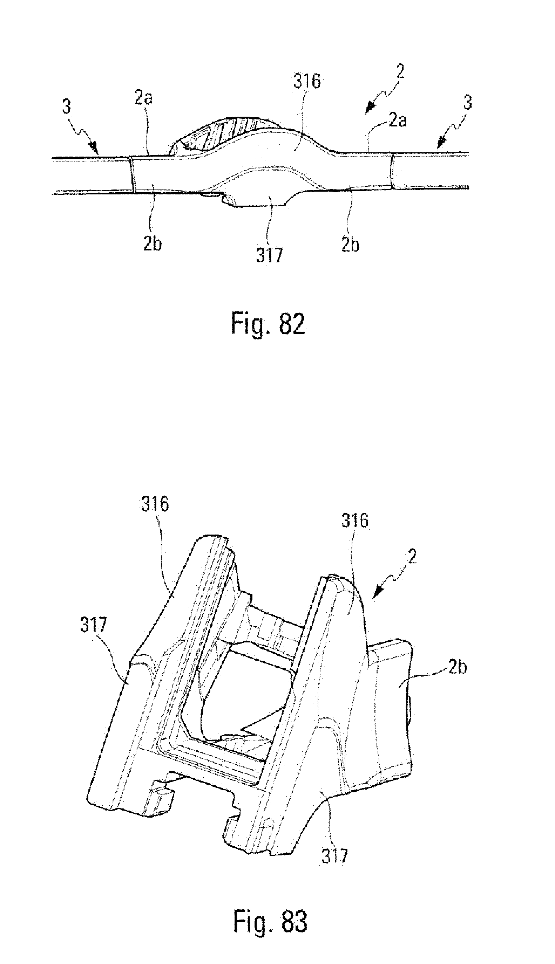

Les figures 82 et 83 montrent un autre aspect de l'invention concernant les états de surface de faces externes du carénage selon l'invention.

L'exemple représenté dans les dessins s'applique à la monture centrale 2 du carénage mais pourrait s'appliquer aux capots d'extrémité.

La monture centrale 2 comprend sensiblement en son milieu deux faces latérales inférieures 317 et deux faces latérales supérieures 316.

Les faces latérales supérieures 316 s'étendent entre les parois latérales 2a et 2b de la monture définissant le dièdre précité et assurent ainsi une continuité entre les faces externes des parois 2a, 2b et en particulier celle avant 2a assurant la déflexion de l'air en fonctionnement.

Comme on le voit dans les dessins, les faces 316 ont une forme générale arrondie, chaque face 316 s'étendant au-dessus et autour d'une face 317.

Les faces 317 sont sensiblement parallèles alors que les faces 316 convergent vers le haut.

Selon l'invention, les faces 316, d'une part, et les faces 317, d'autre part, ont des états de surface différents et en particulier des rugosités différentes. On comprend par des états de surface différents, que la composition de la matière utilisée reste la même, seule la surface est concernée et présente des aspérités différentes, par exemple plus rugueuse au toucher d'un état de surface à l'autre. De préférence, les faces 316 ont une rugosité supérieure à celle des faces 317, ces dernières étant donc plus lisses. Par exemple, les faces inférieures 317 ont un état de surface du type VDI15 et les faces supérieures 316 ont un état de surface du type VDI30.

Le lissé supérieur des faces 317 peut être recherché pour y faire apparaître une marque par apposition ou gravure, ou pour y coller un moyen quelconque comme par exemple une pastille de vieillissement.

Pour obtenir ces différences d'états de surface, il est par exemple envisageable de modifier l'état de surface de faces internes de moulage d'un moule, dans le cas où la monture centrale est réalisée par injection moulage. Le grainage de certaines faces internes du moule, telles que par exemples celles définissant les faces 316 ainsi que les faces externes des parois 2a, 2b de la monture, permettra par exemple d'obtenir une monture avec des faces 316 plus rugueuses.

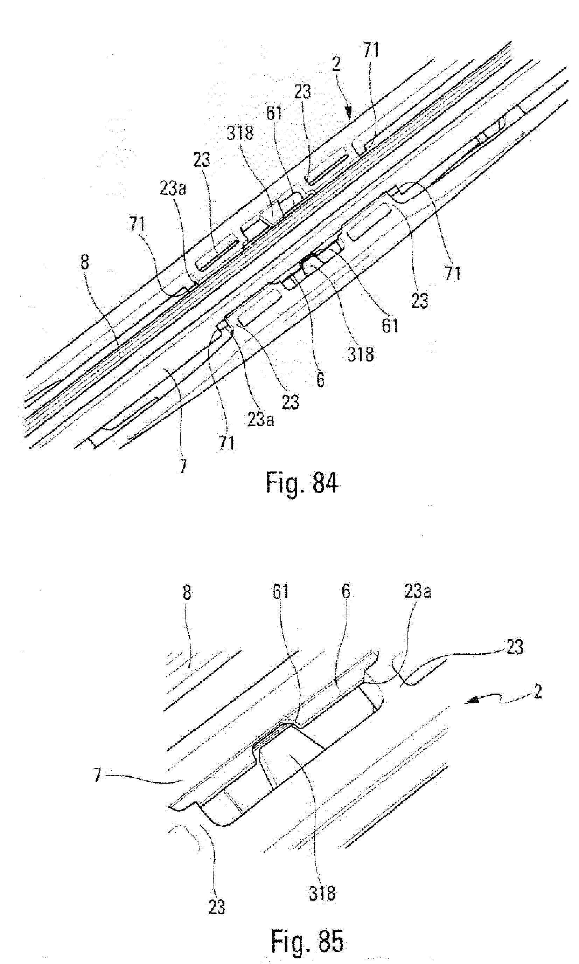

Les figures 84 et 85 illustrent un autre aspect de l'invention dans lequel le carénage et plus particulièrement la monture centrale 2 comprend des moyens de verrouillage configurés pour coopérer avec la vertèbre de rigidification 6 afin de l'immobiliser en direction longitudinale vis-à-vis de la monture.

Dans l'exemple de réalisation représenté, la vertèbre 6, l'organe 7 et la lame 8 sont tels que définis ci-dessus en référence à la figure 4 notamment, et la monture centrale 2 est telle que définie ci-dessus en relation avec la figure 7 notamment.

La monture centrale 2 comprend en outre à son extrémité inférieure des moyens de verrouillage destinés à être engagés et à coopérer avec les échancrures 61 précitées de la vertèbre. Les moyens de verrouillage comprennent ici deux éléments 318 en saillie sur les faces latérales internes en regard des parois latérales de la monture. Ces éléments 318 s'étendent sensiblement l'un vers l'autre et sont sensiblement identiques. Ils sont sensiblement plats. Ils sont coplanaires dans un plan longitudinal sensiblement horizontal qui passe sensiblement par les encoches 23a des crochets 23 de la monture dans lesquelles est insérée par coulissement la vertèbre 6. Ils ont chacun une forme générale trapézoïdale dont la grande base est reliée à la paroi latérale de la monture et dont la grande base définit l'extrémité libre de l'élément et est destinée à être engagée dans une des échancrures 61.

Chaque échancrure 61 a une forme générale en C ou en U dont les bords latéraux peuvent coopérer par butée avec l'extrémité libre de l'élément 318 correspondant pour limiter les déplacements longitudinaux de la vertèbre vis-à-vis de la monture 2.

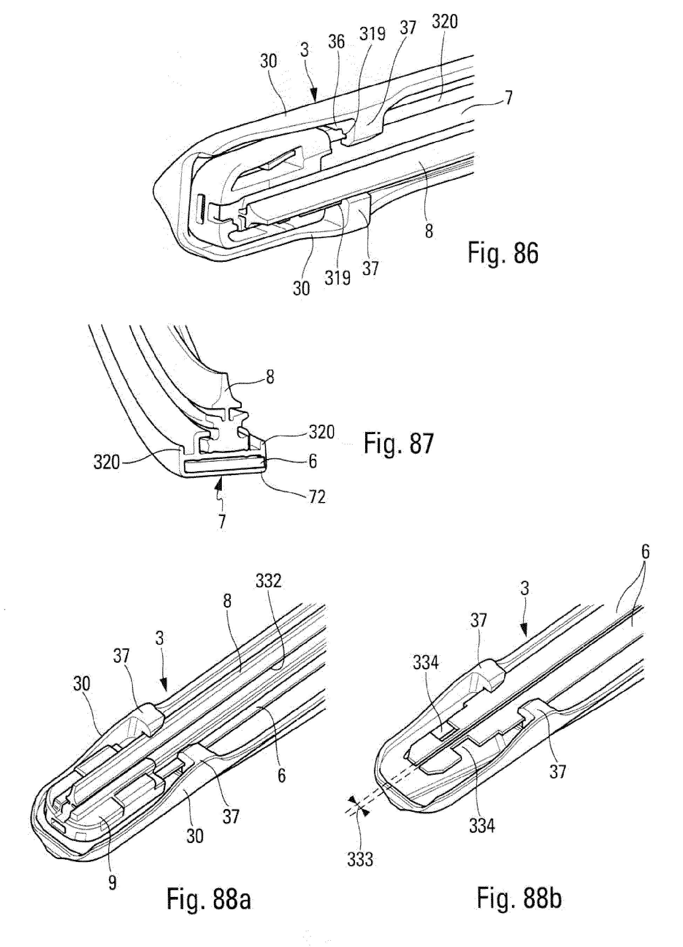

On se réfère désormais aux figures 86 et 87 qui illustrent un autre aspect de l'invention dans lequel le carénage comprend des moyens de guidage en coulissement configurés pour coopérer avec l'organe 7.

Cet aspect de l'invention peut être considéré comme une variante de réalisation du mode de réalisation décrit dans ce qui précède en relation avec les figures 27 à 29 notamment.

La description qui précède relative aux figures 27 à 29 s'applique donc aux figures 86 et 87 dans la mesure où elle ne contredit pas ce qui suit.

Quelle que soit la variante de réalisation considérée, l'organe de maintien 7 est un élément support qui s'étend longitudinalement le long du balai plat caréné sur au moins une demi-longueur de celui-ci. Dans un tel cas, le balai plat caréné comprend au moins deux organes de maintien 7. Alternativement, l'organe de maintien 7 peut s'étendre sur toute la longueur du balai et ainsi formé un support de vertèbre et de lame unique, unitaire ou monobloc.

Le capot d'extrémité 3 comprend deux crochets latéraux de guidage 37 s'étendant à partir de ses parties verticales selon deux parties horizontales positionnées en vis-à-vis l'une de l'autre et qui sont séparées par un espace correspondant sensiblement à l'épaisseur de l'organe de maintien 7 à ce niveau. Ces deux crochets 37 forment des moyens de support de l'organe de maintien 7 et la découpe rectangulaire dans la paroi transversale 36 sert de moyen de guidage à cet organe pour son coulissement dans le capot 3, lorsque le capot 3 s'articule par rapport à la monture centrale 2. Les crochets 37 sont situés sur des ailes latérales 30 du capot, décrites dans ce qui précède.

Les parties horizontales des crochets 37 comportent ici des rainures longitudinales 319 débouchant vers le haut et configurées pour recevoir des nervures longitudinales 320 de l'organe 7.

La description qui précède relative à la figure 8a s'applique à la figure 87.

Les parois longitudinales latérales du tube supérieur 72 de l'organe 7 se prolongent ici vers le bas pour former les nervures 320 précitées qui s'étendent donc vers le bas depuis le tube. Elles sont sensiblement parallèles et s'étendent sur toute la dimension longitudinale de l'organe 7. Elles sont sensiblement parallèles aux parties supérieures verticales des crochets 73 de l'organe 7.

Comme cela est visible en figure 86, chaque nervure 320 de l'organe 7 est logée dans une rainure 319 d'un crochet 37 du capot et peut coulisser en direction longitudinale dans cette rainure. Les nervures 320 peuvent en outre coopérer avec les parois latérales des rainures 319 pour empêcher des déplacements transversaux de l'organe 7 vis-à-vis du carénage.

Les figures 88a et 88b représentent une variante de réalisation des moyens du carénage de guidage en coulissement du balai plat.

Le balai plat est ici dépourvu d'organe 7 de maintien de la lame 8 et de la vertèbre 6. Le balai comprend ici deux vertèbres 6 qui sont coplanaires et s'étendent parallèlement et à côté l'une de l'autre (figure 88b).

Les vertèbres 6 sont séparées l'une de l'autre par un faible jeu transversal 333. La lame 8 comprend deux rainures longitudinales 332 et coplanaires sur ses côtés, qui sont destinées à recevoir des parties d'extrémité longitudinales intérieures des vertèbres. Bien que cela ne soit pas visible, les rainures 332 délimitent entre elles une bande longitudinale de matière de la lame 8 qui est destinée, en position de montage, à être logée au niveau du jeu 333 précité et à être enserré entre les vertèbres 6.

Les vertèbres sont maintenues en position et guidées en coulissement grâce aux crochets 37. Chaque vertèbre 6 a sa partie d'extrémité longitudinale opposée au jeu 333 précité, qui est en appui et peut coulisser sur les parties verticale et horizontale du crochet 37 correspondant.

Les crochets 37, et en particulier leurs parties verticales, maintiennent en position les vertèbres 6 ainsi que la lame 8, en empêchant les vertèbres de s'écarter l'une de l'autre. Les parties horizontales des crochets s'étendent sous les vertèbres et leurs parties verticales s'étendent à côté des vertèbres. La lame 8 peut être configurée pour solliciter transversalement les vertèbres 6 de façon à ce qu'elles prennent appui sur les crochets 37. Les crochets 37 peuvent également comprendre des moyens, tels que des ergots 38, d'appui ponctuel sur les vertèbres.

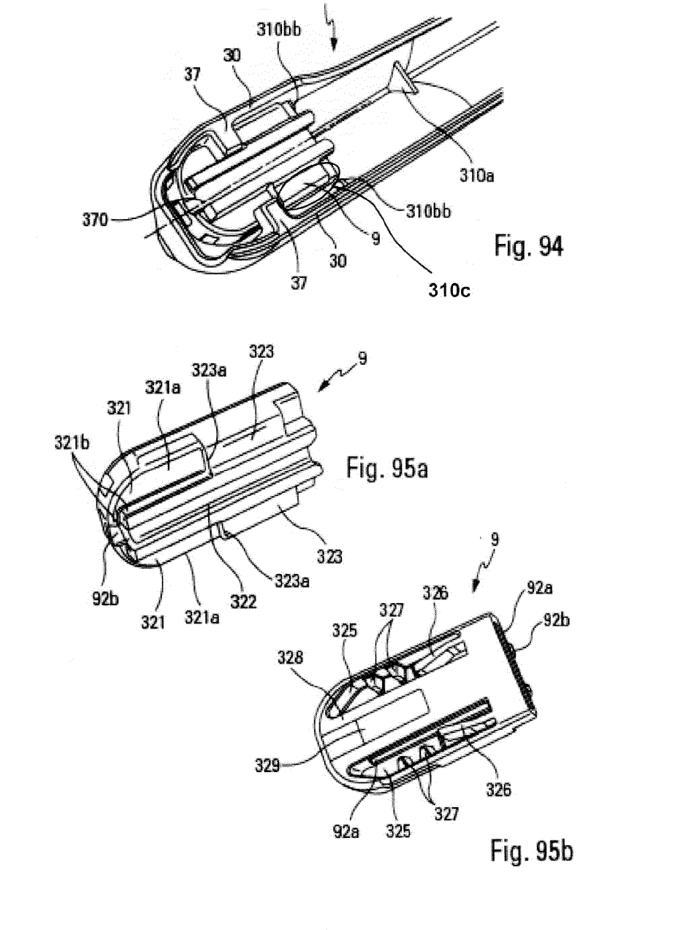

Le carénage 3 est similaire à ceux décrits dans ce qui précède. L'embout 9 sera décrit plus en détail en référence aux figures 95a et 95b et peut différer de l'embout de ces figures essentiellement par le fait qu'il est configuré pour recevoir deux vertèbres au lieu d'une.

Cet embout 9 comprend des moyens de verrouillage des vertèbres tels que des pattes élastiquement déformables destinées à coopérer par encliquetage élastique avec des encoches 334 des extrémités des vertèbres 6.

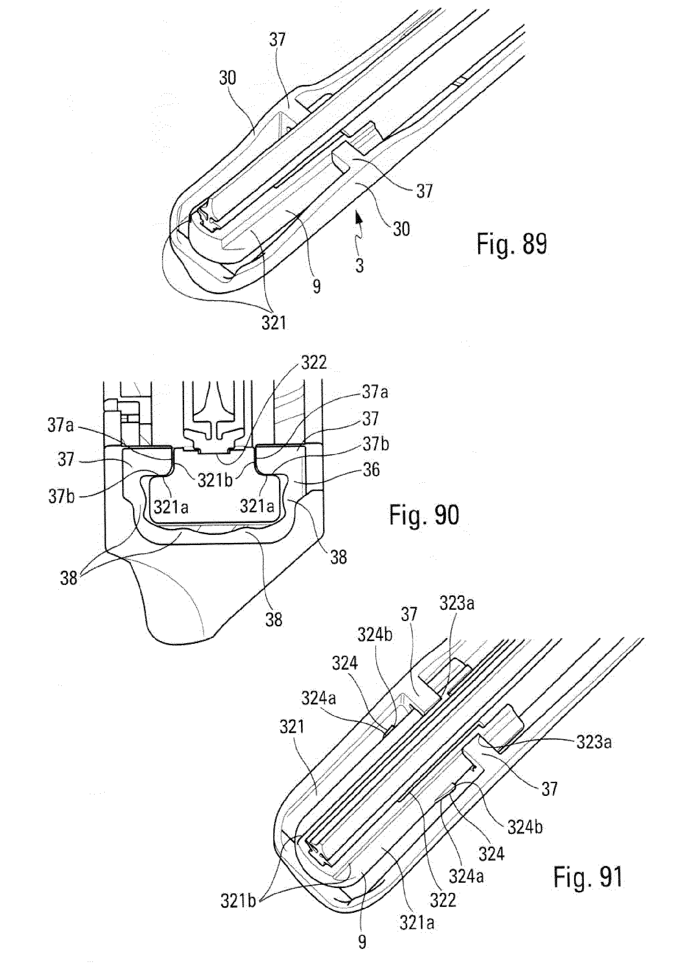

On se réfère désormais aux figures 89 à 93 qui illustrent un autre aspect de l'invention dans lequel le carénage comprend des moyens de guidage en coulissement configurés pour coopérer avec chaque embout d'extrémité 9.

Dans cette variante de réalisation, chaque capot d'extrémité 3 comprend des moyens de guidage qui sont similaires à ceux décrits dans ce qui précède, notamment en relation avec les figures 27 à 29, mais qui sont ici configurés pour coopérer avec l'embout d'extrémité 9 correspondant.

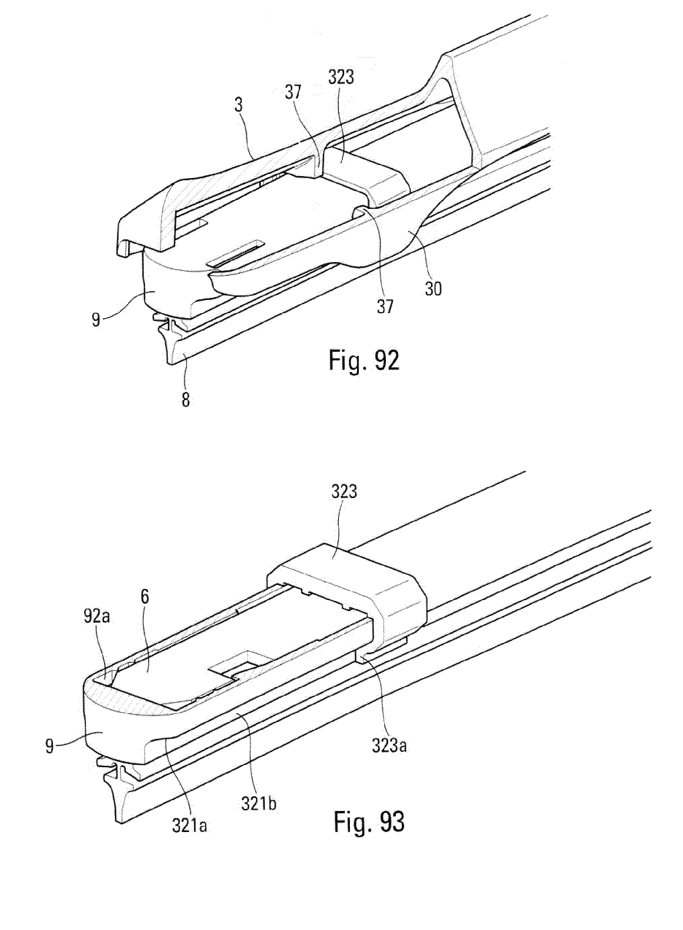

La description qui précède relative aux figures 27 à 29 s'applique donc aux figures 89 et 93 dans la mesure où elle ne contredit pas ce qui suit.

Les moyens de guidage formés par les crochets 37 sont ici situés plus près de l'extrémité libre du capot d'extrémité 3 de façon à pouvoir coopérer avec l'embout 9.

Les parties horizontales des crochets 37 comportent chacune un premier bord vertical de guidage 37a et un second bord horizontal 37b de guidage orienté vers le haut (figure 90).

Ces bords 37a, 37b sont destinés à coopérer avec des pistes longitudinales latérales 321 de l'embout.

La description qui précède relative à la figure 5 notamment s'applique à l'embout des figures 89 à 93 dans la mesure où elle ne contredit pas ce qui suit.

L'embout d'extrémité 9 comprend un moyen de guidage et de coulissement longitudinal qui coopère avec le carénage, et notamment avec les moyens de guidage du capot 3 détaillé ci-dessus. Ceux-ci peuvent être les crochets 37.

On notera que les moyens 321, 321 a, 321 b de guidage et de coulissement longitudinal peuvent être formés sur la face externe qui délimite l'embout d'extrémité 9. A titre d'exemple, la figure 91 montre deux épaulements qui s'étendent longitudinalement le long de l'embout d'extrémité 9 et dans lesquels les crochets 37 sont apte à coulisser.

Alternativement, ces moyens de guidage et de coulissement peuvent être ménagés sur une paroi interne délimitant l'embout d'extrémité 9. Cette paroi est interne dès lors qu'elle est à l'intérieur d'un périmètre délimité par la paroi externe de l'embout d'extrémité 9.

L'embout comprend sur sa face inférieure une gorge longitudinale 322 de coulissement d'une extrémité du talon de la lame 8, cette gorge débouchant dans le logement 92b de l'embout.

Les pistes 321 de l'embout s'étendent de part et d'autre de la gorge et définissent chacune une première surface longitudinale 321a sensiblement horizontale et une seconde surface longitudinale 321 b sensiblement verticale. Chaque surface 321a est reliée par son bord longitudinal intérieur au bord longitudinal supérieur de la surface 321 b correspondante.

Chaque piste 321 est reliée à une extrémité libre, située du côté des ouvertures des logements 92b, 92c, à une surface de butée 323a sensiblement radiale. Les surfaces de butée sont ici situées sur une partie d'extrémité 323 surdimensionnée de l'embout 9, qui est destinée à coopérer par butée avec les crochets 37 du capot d'extrémité.

Comme cela est visible en figure 91, l'embout 9 comprend en outre sur ses côtés des moyens 324 d'encliquetage élastique configurés pour coopérer avec le capot d'extrémité 3, et plus particulièrement avec les crochets 37 du capot.

Les moyens 324 d'encliquetage élastique sont ici au nombre de deux et sont en saillie respectivement sur deux faces latérales externes de l'embout 9. Ils comprennent chacun une rampe 324a présentant une paroi inclinée configurée pour coopérer par glissement avec le crochet 37, et en particulier sa partie verticale, et une face de butée 324b configurée pour coopérer avec le crochet après que l'encliquetage ait eu lieu.

Les moyens d'encliquetage 324 sont ici sensiblement coplanaires et situés sensiblement au milieu de l'embout 9. L'embout comprend ici un plan longitudinal médian sensiblement vertical de symétrie.

On comprend ici que la coopération entre l'embout d'extrémité 9 et le carénage 2, 3 met en oeuvre un capot d'extrémité 3 qui s'étend longitudinalement depuis l'embout d'extrémité 9, en recouvrant celui-ci, jusqu'à la monture centrale 2.

On se réfère désormais aux figures 94 à 98 qui illustrent un autre aspect de l'invention dans lequel chaque embout d'extrémité 9 est ici logé dans une cage définie par des moyens du carénage et plus particulièrement du capot d'extrémité correspondant.

L'invention peut par exemple être reconnaissable par le fait le carénage, et notamment le capot 3, présente une forme allongée et s'étend par exemple entre une extrémité longitudinale du balai plat caréné 1 et une monture centrale 2. A une seule de ses extrémités longitudinales, le capot comprend un logement de montage et de coulissement longitudinal de l'embout d'extrémité 9 dudit balai. Un tel logement est une zone de réception délimitée pour partie par des parois latérales longitudinales 3a et 3b du capot 3. Une fois installé dans le logement, l'embout d'extrémité 9 est recouvert par une partie du capot 3, c'est deux éléments assemblés formant alors un ensemble.

Selon un raffinement de cette portion de l'invention, le carénage dans lequel il comprend deux capots d'extrémité 3 et une monture centrale 2 qui est située entre les deux capots d'extrémité et qui comprend des moyens 23 de fixation à une vertèbre 6 de rigidification du balai ou à un organe 7 de maintien de cette vertèbre. Dans un tel cas, chaque capot d'extrémité 3 comporte un logement à son extrémité longitudinale libre tel que décrit ci-dessus.

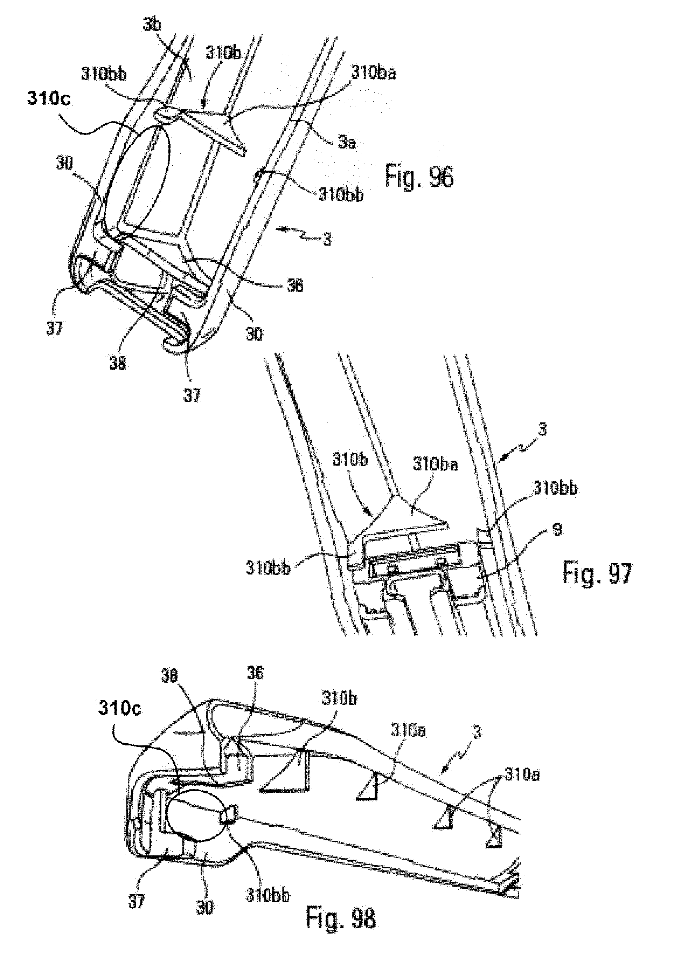

La description qui précède relative aux figures 27 à 29 ainsi qu'aux figures 89 à 93 s'applique aux figures 94 et 97 dans la mesure où elle ne contredit pas ce qui suit.

Les moyens de guidage comportant les crochets 37 formant des premiers moyens de la cage 310c de retenue de l'embout d'extrémité 9. Les crochets 37 sont ici encore rapprochés de l'extrémité libre du capot d'extrémité 3. Les crochets 37 s'étendent ici au droit d'une première paroi ou nervure transversale 36 proche de celle décrite en référence aux figures 27 à 29. Cette paroi ou nervure 36 a une hauteur ou dimension en direction verticale notée H1 qui présente un maximum au niveau de l'ergot 38.

La cage 310c de retenue de l'embout d'extrémité 9 est par exemple délimitée par le capot 3. Longitudinalement, cette cage 310c est terminée par des premier et second moyens de blocage longitudinal de l'embout d'extrémité 9.

Chacun de ces moyens de blocage peut être formé par une nervure de renfort ménagée dans le dièdre délimité par les parois avant et arrière du capot. Une telle nervure de renfort s'étend transversalement à ces parois 3a et 3b, et est issue de matière avec ces parois lors de l'opération de moulage du capot 3.

Selon un exemple de réalisation, une première nervure transversale 310b comprend une partie médiane 310ba qui s'étend entre les parois latérales longitudinales 3a, 3b du capot 3. Avantageusement, la première nervure 310b se poursuit par au moins une partie latérale 310bb. Sur les figures 96 à 98, il est prévu deux parties latérales 310bb, issues respectivement des faces internes des parois latérales longitudinales 3a, 3b qui délimitent le capot 3. Selon un aspect de l'invention, au moins une portion desdites parties latérales 310bb comporte une face de butée configurée pour coopérer avec ledit embout 9. Il s'agit là d'un exemple de réalisation des seconds moyens de butée contre lesquels l'embout d'extrémité 9 vient s'appuyer.

Les premier et second moyens de blocage 37, 310b, 310bb peuvent prendre une forme de crochet, tel que ceux décrit ci-dessus en rapport avec la référence 37. Avantageusement, ils comprennent au moins une paire de crochets latéraux 37 sensiblement en L et configurés pour s'étendre de chaque côté dudit embout, par exemple en se faisant face et en étant orientés l'un vers l'autre. Ces crochets 37 forment également un exemple de réalisation des premiers moyens de butée contre lesquels l'embout vient taper pour limiter son déplacement longitudinal par rapport au capot 3.

Selon un exemple de réalisation, chaque crochet 37 comporte une partie sensiblement verticale, à l'extrémité de laquelle on trouve une partie sensiblement horizontale. C'est ainsi que le crochet forme un L.

Ces parties horizontales s'étendent l'une vers l'autre. Il est avantageux que la fonction de butée soit réalisée exclusivement par la ou les parties horizontales, mais l'invention prévoit également le cas où l'embout vient en appui simultanément sur la ou les parties verticales et horizontales. On notera que chaque crochet 37 peut être joint l'un à l'autre par un pontet, autrement appelé seconde nervure transversale 36 de liaison des parois latérales longitudinales 3a, 3b. De manière avantageuse, cette seconde nervure 36 présente un bord inférieur sur lequel sont formés des moyens 38 d'appui ponctuel sur ledit embout. Le caractère ponctuel signifie que l'appui n'est pas réalisé sur une grande distance transversale du capot 3, mais au contraire sur une portion discrète entre l'embout d'extrémité 9 et les moyens d'appui 38 ponctuel.

Comme cela est visible en figure 98, le capot 3 comprend ici une rangée longitudinale de plusieurs nervures de renfort 310a, 310b qui sont similaires à celles décrites dans ce qui précède, en référence à la figure 45 notamment.

Le capot 3 comprend ici des nervures de hauteurs différentes, les nervures 310a ayant une hauteur H2 plus faible que celle H1 de la nervure 310b, qui a elle-même une hauteur proche de celle de la nervure ou paroi 36 précitée.

Comme cela est visible en figure 96, la nervure 310b de plus grande hauteur, qui est la nervure la plus proche de la paroi 36, comprend une portion médiane 310ba qui relie les faces latérales internes des parois 3a, 3b du capot, et des portions latérales 310bb qui sont au moins en partie situées sur les faces internes précitées des parois 3a, 3b.

La hauteur de ces nervures est mesurée le long d'une droite perpendiculaire à une arête ou bord libre de la nervure concernée, en passant par le sommet 3c formé par la jonction des parois latérales longitudinales 3a, 3b.

Comme on le voit en figure 97, l'une des portions latérales 310bb de la nervure 310b, en l'occurrence celle reliée à la paroi 3b du capot, s'étend sensiblement en regard de l'embout d'extrémité 9 et forme un moyen additionnel définissant ladite cage 310c.

L'embout 9 peut venir en butée sur la face transversale de la portion 310bb orientée du côté de l'extrémité libre du capot, ainsi que sur les parties horizontales des crochets 37 (cf. figure 94).

La description qui précède relative à la figure 5 et aux figures 89 à 93 notamment s'applique à l'embout des figures 94 à 98 dans la mesure où elle ne contredit pas ce qui suit.

L'embout d'extrémité 9 comporte le logement 92a configuré pour recevoir une extrémité de la vertèbre 6, le logement 92b configuré pour recevoir une extrémité de la lame 8, et une gorge inférieure débouchant dans le logement 92b.

Comme on le voit sur la figure 95a, le logement 92a ne débouche pas du côté de la face inférieure de l'embout (sur laquelle débouche la fente 322). Le logement 92a est ainsi fermé du côté de la face inférieure de l'embout 9.

Le logement 92a est ouvert du côté de la face supérieure de l'embout. L'embout 9 comprend sur cette face supérieure deux lumières 325 allongées et parallèles qui communiquent avec le logement 92a.

Une patte en saillie 326 de verrouillage de la vertèbre 6 est située dans chaque lumière 325. Chaque patte est élastiquement déformable et est configurée pour coopérer par encliquetage élastique avec une encoche d'extrémité de la vertèbre 6, visible en figure 6.

L'embout 9 comprend en outre, dans chaque lumière 325, des éléments en saillie 327 de centrage et de guidage de la vertèbre 6.

Les lumières 325 s'étendent ici de part et d'autre d'une bande de matière 328 qui définit ladite face supérieure de l'embout 9 et qui comprend au moins un élément en saillie 329 de guidage de l'embout. Cet élément 329 est configuré pour coopérer par coulissement avec l'ergot 38 de la paroi 36.

La surface de butée 323a de l'embout 9, décrite dans ce qui précède, est configurée pour coopérer avec les crochets 37, comme cela est visible en figure 94, et c'est l'extrémité libre de l'embout au niveau de laquelle débouchent les logements 92a, 92b, qui est destinée à coopérer avec la portion latérale 310bb précitée de la nervure 310b.

Il est envisageable de réaliser l'embout 9 des figures 94 à 95b, ou de tout autre embout décrit dans la présente demande, dans un matériau élastique de façon à ce qu'il soit élastiquement déformable. Cette aptitude peut être recherchée pour que l'embout puisse être monté sur la vertèbre 6 notamment par déformation élastique.

En référence à la figure 94, il est ainsi envisageable de prévoir une gorge longitudinale 370, représentée par des traits pointillés, dans la paroi transversale de l'embout qui sépare les logements 92a, 92b. La gorge 370 déboucherait dans ces logements et autoriserait un écartement des parties d'extrémité longitudinales de l'embout, s'étendant de part et d'autre de la gorge, par déformation élastique.

Dans ce cas, après montage de l'embout 9, celui-ci serait verrouillé en position de montage par l'intermédiaire du capot d'extrémité 3 et en particulier de ses crochets 37 qui viendraient empêcher une déformation et un écartement involontaires de l'embout en utilisation.

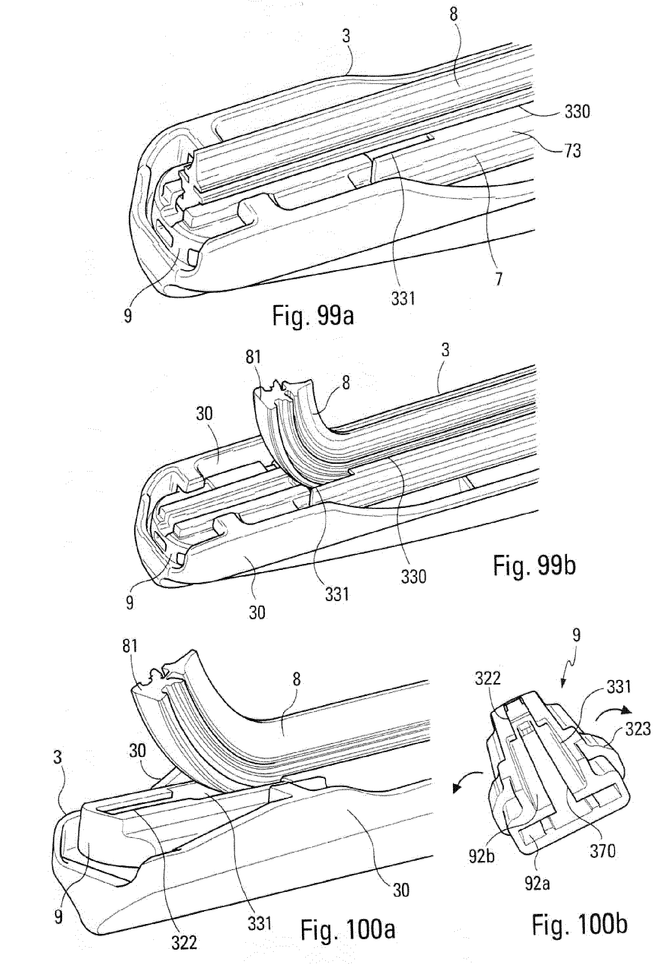

On se réfère désormais aux figures 99a à 100b qui représentent des variantes de l'invention dans lesquelles le balai est équipé de moyens facilitant le démontage de la lame 8 en vue de son remplacement en cas d'usure par exemple.

La description qui précède relative notamment aux capots d'extrémité 3, aux embouts 9, à l'organe 7 et à la lame 8 s'appliquent à ces variantes.

Dans la variante représentée aux figures 99a et 99b, on considère que les parties sensiblement horizontales en regard des crochets inférieurs 73 de l'organe 7 délimitent entre elles une gorge 330 dans laquelle peut coulisser et est montée une partie de la lame 8.

Selon l'invention, l'organe 7 comprend une lumière 331 qui est reliée à la gorge 330 et qui autorise le passage du talon 81 de la lame 8. Dans l'exemple représenté, la lumière 331 est située à une extrémité longitudinale de l'organe 7 et revient à un surdimensionnement en direction transversale de la gorge 330. L'organe 7 peut comprendre une lumière 331 à chacune de ses extrémités longitudinales bien que cela ne soit pas nécessaire. La lumière 331 a une forme générale rectangulaire. La lumière 331 et la gorge 330 sont sensiblement coplanaires. La lumière 331 a ici une largeur ou dimension transversale supérieure à celle du talon 81.

Dans l'autre variante représentée aux figures 100a et 100b, c'est l'embout 9 qui comprend une lumière 331 qui est reliée à la gorge 321 et qui autorise le passage du talon 81 de la lame 8. Dans l'exemple représenté, la lumière 331 est située à une extrémité longitudinale de l'embout 9 et revient à un surdimensionnement en direction transversale de la gorge 221. La lumière 331 a ici une largeur ou dimension transversale supérieure à celle du talon 81.

Comme on le voit en figure 100b et décrit dans ce qui précède en relation avec la figure 94, la paroi transversale de séparation des logements 92a ,92b de l'embout est fendue. Cette paroi comprend une gorge longitudinale 370 qui est sensiblement alignée en direction verticale avec la gorge 322 précitée et qui est configurée pour autoriser une déformation élastique de l'embout selon les flèches, par écartement des parties d'extrémité longitudinales de l'embout 9, s'étendant de part et d'autre de la gorge 370.

Comme cela est visible aux figures 99b et 100a, un procédé de démontage de la lame d'essuyage 8 d'un balai selon l'invention peut comprendre les étapes consistant à :
a) faire coulisser une extrémité longitudinale du talon 81 de la lame 8 dans le logement 92a de l'embout 9 ou dans celui défini par les crochets 73 de l'organe 7, jusqu'à ce qu'il soit situé au niveau de la lumière 331, au moins une partie de la lame est alors comprimée en direction longitudinale,
b) retirer cette extrémité du talon 81 du logement, à travers la lumière 331, puis
c) sortir complètement la lame dudit logement à travers la lumière.

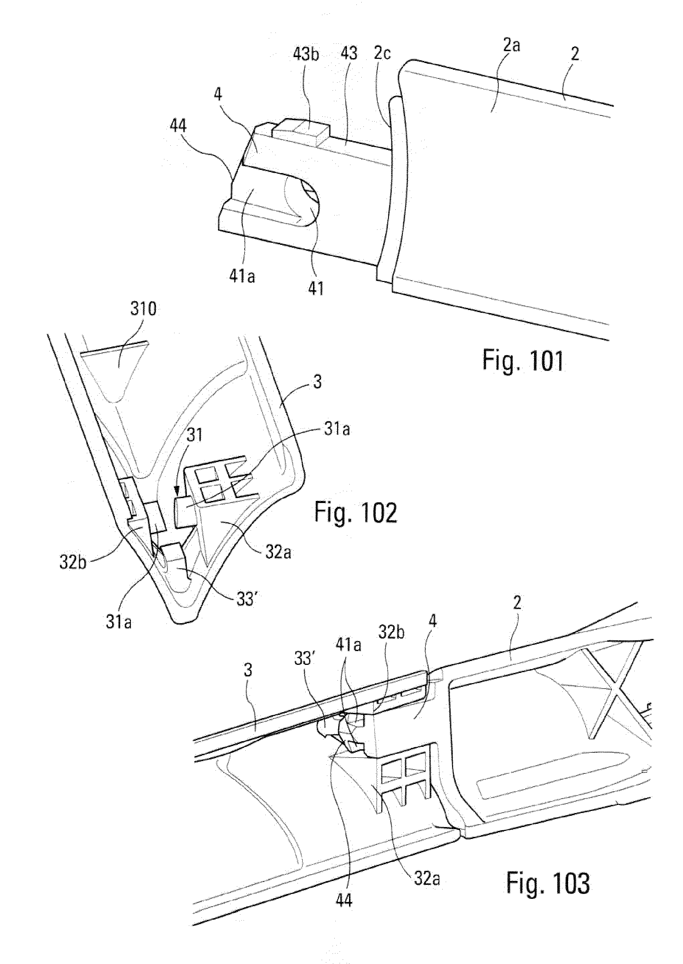

On se réfère désormais aux figures 101 à 103 qui représentent une variante de réalisation de l'invention et en particulier une variante des modes de réalisation décrits ci-dessus en référence aux figures 9 à 19, dont la description s'applique ici dans la mesure où elle ne contredit pas ce qui suit.

Le doigt 4 est destiné à être inséré entre les renforts 32a, 32b dans une direction sensiblement parallèle à l'axe d'allongement du doigt. Le doigt comprend sur ses faces latérales deux fenêtres 41a qui, contrairement à celles de la figure 9, sont ici sensiblement horizontales et s'étendent sensiblement entre la face d'extrémité libre 44 du doigt 4 et l'orifice 41. Ces fenêtres 41a sont destinées à recevoir et à guider les tenons 31 a, 31 b lors du montage du doigt dans la direction précitée. La face 44 est ici chanfreinée pour faciliter ce montage.

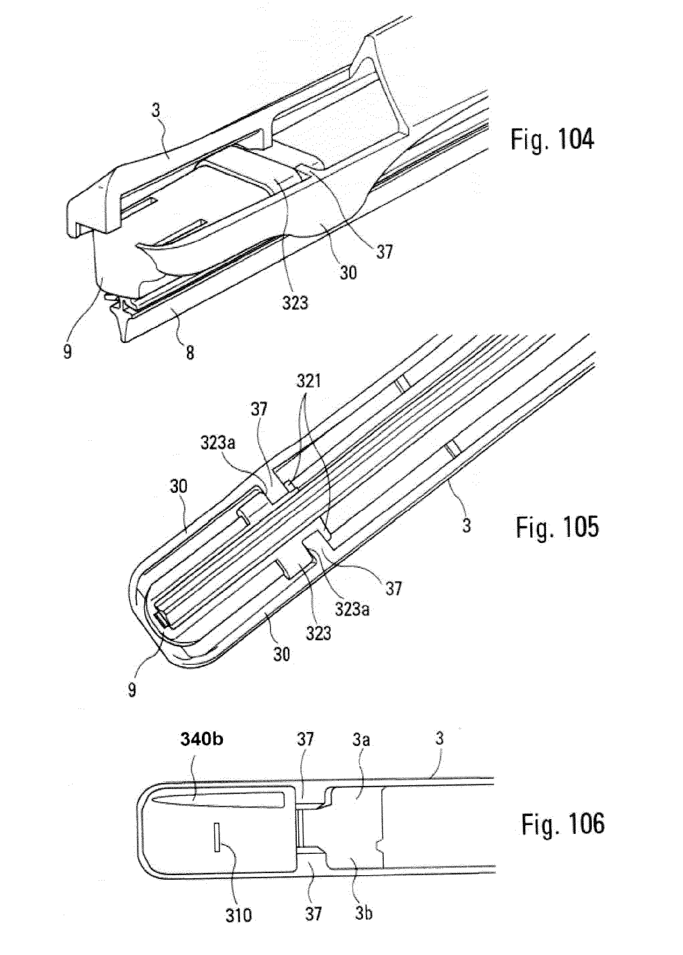

La variante de réalisation de l'invention représentée aux figures 104 et 105 peut être utilisée en combinaison avec la variante des figures 101 à 103, ou indépendamment.

Le carénage et en particulier chaque capot d'extrémité 3 est ici similaire à celui décrit dans ce qui précède, en référence aux figures 89 à 93 notamment, et comprend des moyens de guidage destinés à coopérer avec l'embout 9.

La description qui précède en relation avec les figures 89 à 93 s'applique donc ici dans la mesure où elle ne contredit pas ce qui suit.

L'embout 9 diffère de celui décrit précédemment notamment en ce que sa surépaisseur 323 est ici à distance axiale de ses extrémités longitudinales. Les pistes 321 de l'embout s'étendent ici entre la surépaisseur et l'extrémité libre de l'embout au niveau de laquelle débouchent les logements de réception de la vertèbre et de la lame 8.

Les surfaces de butée 323a de la surépaisseur, destinées à coopérer avec les crochets 37 du capot d'extrémité 3, sont ici orientées du côté de cette extrémité libre de l'embout. Cette coopération permet de limiter la course de l'embout en direction longitudinale, du côté opposé à l'extrémité libre du capot 3. Lorsque cette variante est associée à celle des figures 101 à 103, elle permet d'empêcher les tenons 31 a, 31 b de sortir de l'orifice 41 du doigt 4.

Comme cela est visible en figure 106, les crochets 37 de chaque capot d'extrémité 3 ne sont pas forcément parfaitement symétriques par rapport à un plan longitudinal médian sensiblement vertical. Dans l'exemple représenté, le crochet de la paroi 3a a une dimension longitudinale supérieure à celle du crochet de la paroi 3b.

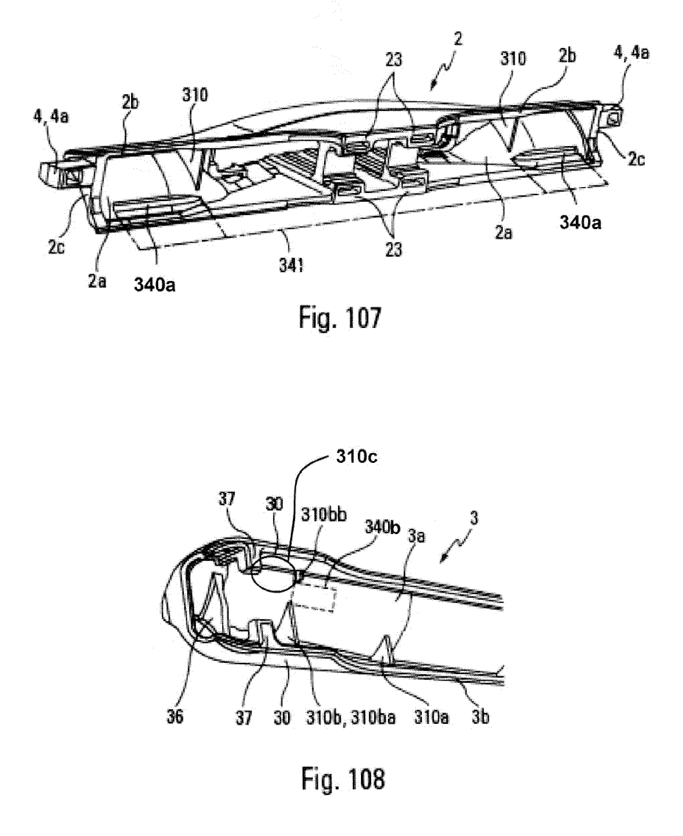

La variante de la figure 106 montre également un autre aspect de l'invention, qui est également illustré par les figures 107 et 108 suivantes.

Selon cet aspect, au moins une des faces inférieures ou internes des parois 2a, 2b, 3a, 3b du carénage comporte une gorge 340a et/ou 340b configurée pour autoriser le montage et/ou le coulissement d'un élément du balai ou d'un élément de support du balai.

Quand la gorge est ménagée dans la monture centrale 2, elle est appelée première gorge 340a. De même, quand la gorge est ménagée dans le ou les capots d'extrémités 3, elle est appelée deuxième gorge 340b, sans néanmoins être dépendante du caractère premier de la première gorge.

Dans le cas des figures 106 et 108, au moins un capot d'extrémité 3 comprend une deuxième gorge 340b de réception et de coulissement d'une partie de l'embout d'extrémité 9 destiné à être associé au capot.

Chaque deuxième gorge 340b a une orientation sensiblement longitudinale. Elle est située sur la face interne de la paroi 3a En figure 106, elle s'étend sensiblement entre un crochet 37 et l'extrémité libre du capot. En figure 107, elle est schématiquement représentée par un rectangle en traits pointillés et s'étend depuis la nervure 310b (décrite dans ce qui précède) en direction de l'extrémité du capot destinée à être reliée à la monture. La deuxième gorge 340b de la figure 108 est située entre les parties 310ba, 310bb précitées de la nervure 310b.

Dans le cas de la figure 107, la monture centrale 2 comprend au moins une première gorge 340a à chacune de ses extrémités longitudinales, sur la face interne de sa paroi 2a. Ces premières gorges 340a sont destinées à recevoir des parties d'un élément 341 utilisé pour redresser le cintrage du balai, appelé élément support 341 du balai, qui est schématiquement représenté par des traits pointillés.

L'élément 341 est par exemple une réglette qui permet de redresser le balai et limiter son cintrage, afin de faciliter son assemblage. Il sert également à protéger la lame d'essuyage. Il peut être conservé dans l'emballage de stockage et de mise en rayon du balai, mais est naturellement retiré avant son montage sur un véhicule.

Chaque première gorge 340a a une orientation sensiblement longitudinale. Elle s'étend sensiblement entre une extrémité longitudinale de la monture 2 et une nervure de renfort 310. Les premières gorges 340a de la monture 2 sont sensiblement alignées. Elles s'étendent ici sensiblement dans un plan longitudinal sensiblement horizontal passant par des bords inférieurs libres des parois 2b de la monture. Ce plan passe sensiblement par les bords inférieurs libres des parois transversales 2c de la monture.

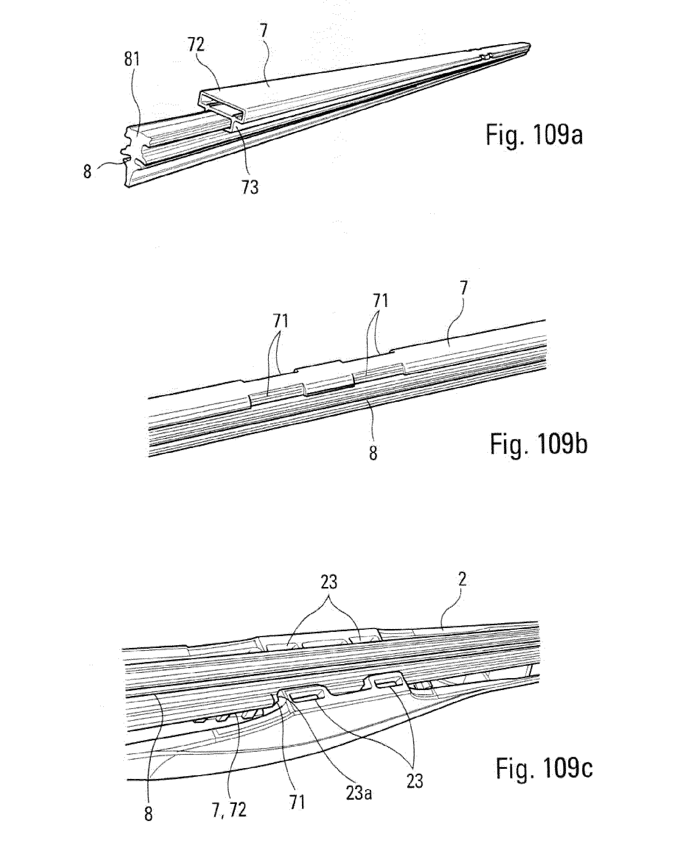

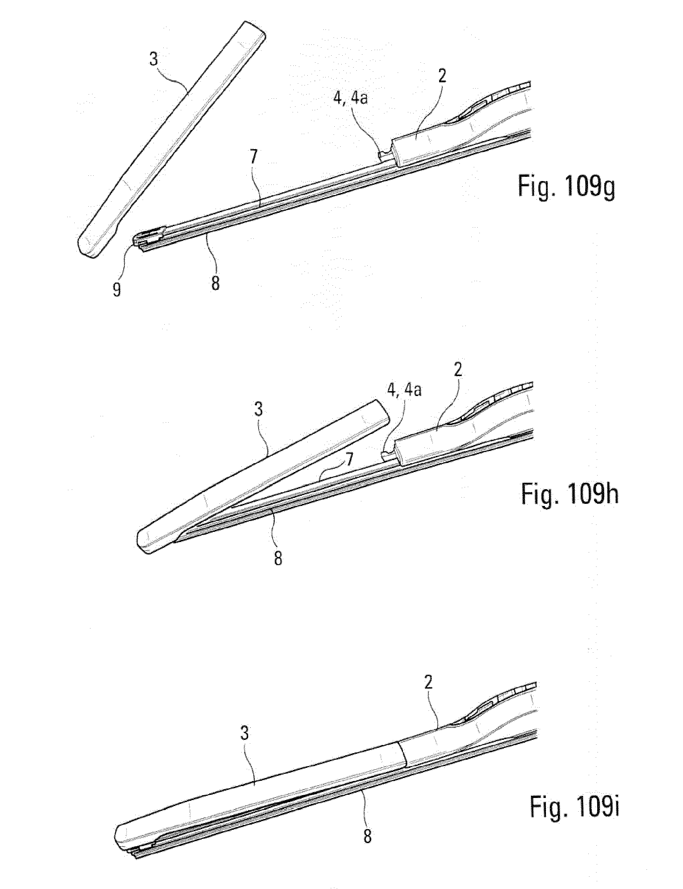

On se réfère maintenant aux figures 109a à 109i qui illustrent des étapes de montage d'un balai plat caréné selon l'invention, dont les différentes pièces ont été décrites ci-dessus.

Selon une première étape, notée d), la lame 8 est montée sur l'organe 7 en insérant et en faisant coulisser sont talon 81 entre les crochets 73 de l'organe (figures 109a).

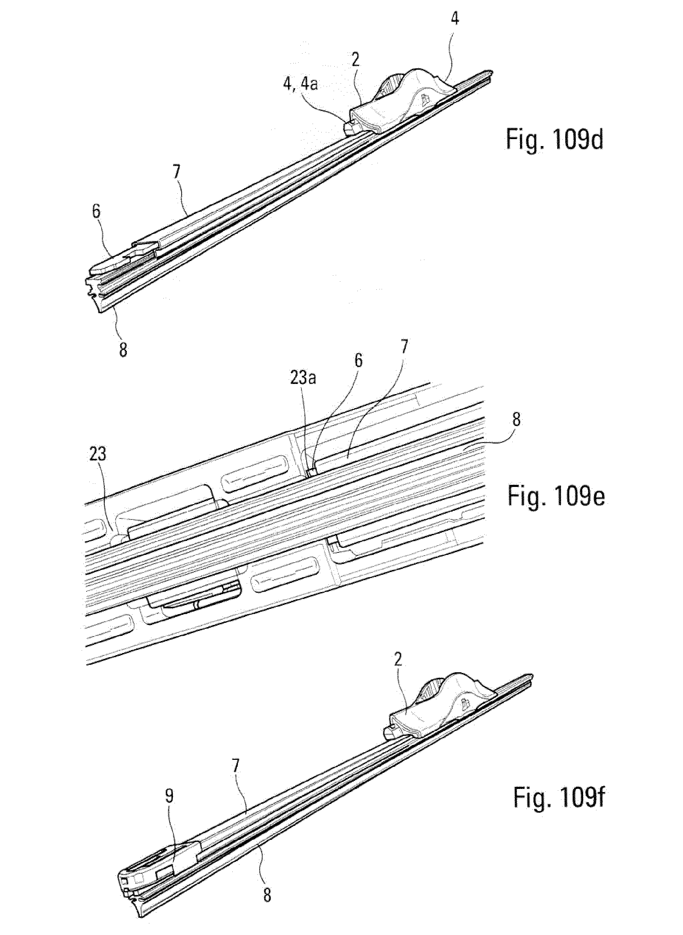

Selon une seconde étape, notée c), la monture centrale 2 est montée sur l'organe 7 de façon à ce que ses crochets 23 s'engagent dans les échancrures 71 du tube 72 de l'organe et que ses rainures 23a soient coplanaires au logement interne du tube 72 (sous-étape c1 - figures 109b et 109c), puis la vertèbre 6 est insérée par coulissement longitudinal dans le logement précité du tube 72 ainsi que dans les rainures 23a des crochets de la monture 2, ce qui assure la retenue de la monture vis-à-vis de la vertèbre et inversement (sous-étape c2 - figures 109d et 109e).

Selon une autre étape, notée a), les embouts d'extrémité 9 sont montés sur la vertèbre 6 (figure 109f). Ils peuvent être montés simultanément de manière automatisée.

Selon une autre étape, notée b), les capots d'extrémité 3 sont montés sur les embouts d'extrémité 9 et la monture centrale 2 (figures 109g à 109i). Pour cela, chaque capot d'extrémité est présenté comme on le voit aux figures 109g et 109h de façon à engager l'embout 9 correspondant dans l'extrémité longitudinale libre du capot (sous-étape b1). Le capot 3 est alors incliné par rapport à la vertèbre notamment. L'extrémité longitudinale opposée du capot 3 est alors rabattue vers la monture 2 de façon à ce que les doigts 4a, 4b, ou les moyens de liaison du capot à la monture, coopèrent ensemble et s'assemblent de façon à former l'articulation entre le capot et la monture. Ces sous-étapes sont réalisées pour chaque capot 3.

C'est la coopération des moyens de liaison, tel que l'engagement et l'emboîtement des doigts 4a, 4b l'un dans l'autre, qui assure le verrouillage de l'ensemble. Le balai est de préférence du type indémontable, comme expliqué dans ce qui précède.

Le procédé de montage peut comprendre une étape préliminaire consistant à contraindre la vertèbre pour qu'elle ait une forme sensiblement rectiligne pendant au moins une partie des étapes précitées. Cette étape préliminaire peut être mise en oeuvre au moyen de l'élément de support 341 précitée de la figure 107.

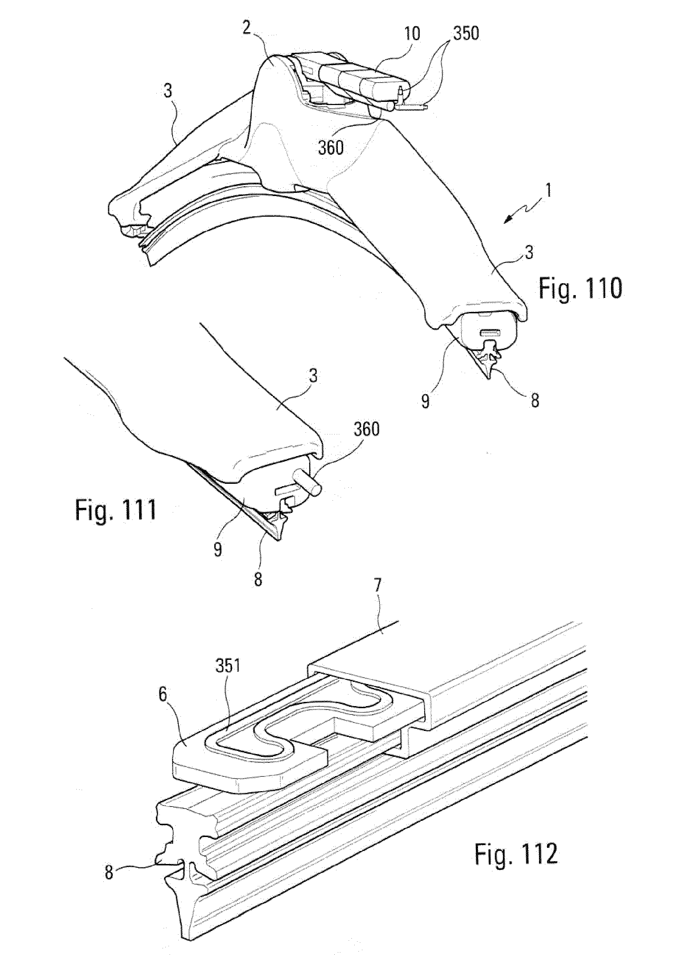

On se réfère désormais aux figures 110 à 114 qui représentent plusieurs variantes de l'invention dans lesquelles le balai plat caréné 1 est équipé de moyens de chauffage et/ou de moyens de distribution fluidique.

Les figures 110 et 111 montrent des moyens 350 d'alimentation électrique des moyens de chauffage du balai, qui comprennent ici des fils électriques qui s'étendent le long du bras 10 d'entraînement du balai et sont reliés aux moyens de chauffage du balai. Ces figures montrent également des moyens 360 d'alimentation fluidique des moyens de distribution fluidique du balai, qui comprennent ici des tuyaux souples et/ou des canules qui, soit, s'étendent le long du bras 10 d'entraînement du balai (figure 110), soit sont intégrés ou montés sur l'un des embouts d'extrémité 9 du balai, ces moyens 360 étant reliés aux moyens de distribution fluidique du balai 1.

La figure 112 représente un exemple de réalisation des moyens de chauffage 351 qui comprennent une piste d'un conducteur électrique en matériau résistif. Les moyens de chauffage 351 sont ici portés par la vertèbre 6 et sont situés sur la face longitudinale supérieure de cette dernière. Ils peuvent être reliés aux fils électriques précités par l'intermédiaire de connecteurs situés sensiblement au milieu du balai.

Alternativement, un mode de réalisation peut consister en ce que des moyens de chauffage 351, comprenant au moins une piste d'un conducteur électrique en matériau résistif, sont situés sur la face longitudinale inférieure de la vertèbre 6. On entend par face longitudinale inférieure, la face en regard avec le dos du talon 81 de la lame d'essuyage 8.

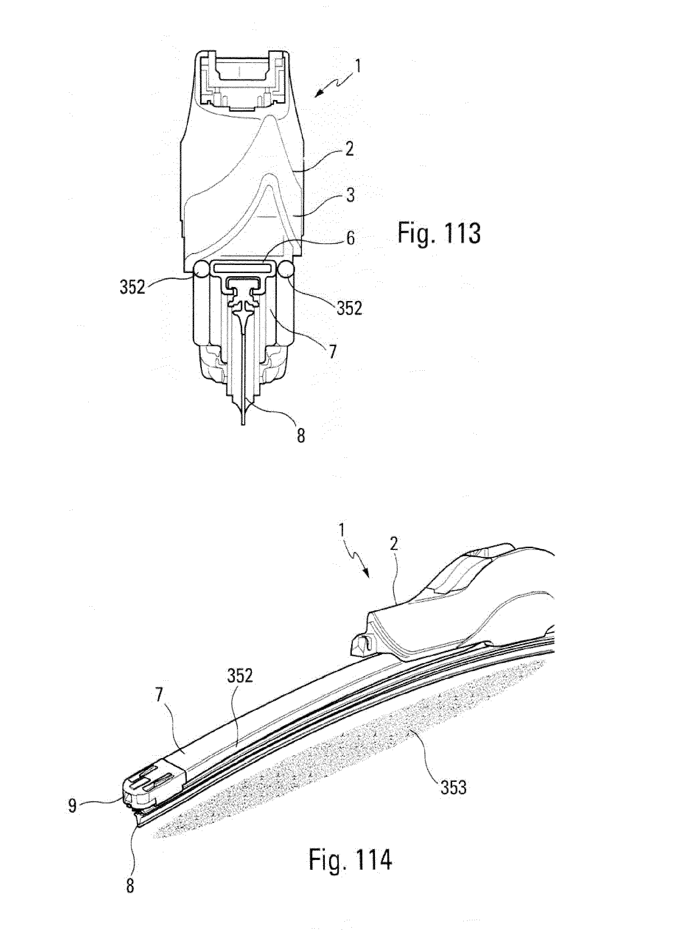

Les figures 113 et 114 représentent un exemple de réalisation des moyens de distribution fluidique 352 qui comprennent ici deux rampes de pulvérisation de fluide, tel que du liquide lave-glace, sur la vitre d'un véhicule (figure 114). Les rampes s'étendent respectivement des deux côtés du balai et comprennent des orifices de pulvérisation sur la vitre. La référence 353 désigne la zone d'impact du liquide sur la vitre.

Les rampes sont ici portées par l'organe 7 et peuvent être fixées sur l'organe, tel que sur les côtés de son tube, ou formées d'une seule pièce avec l'organe.

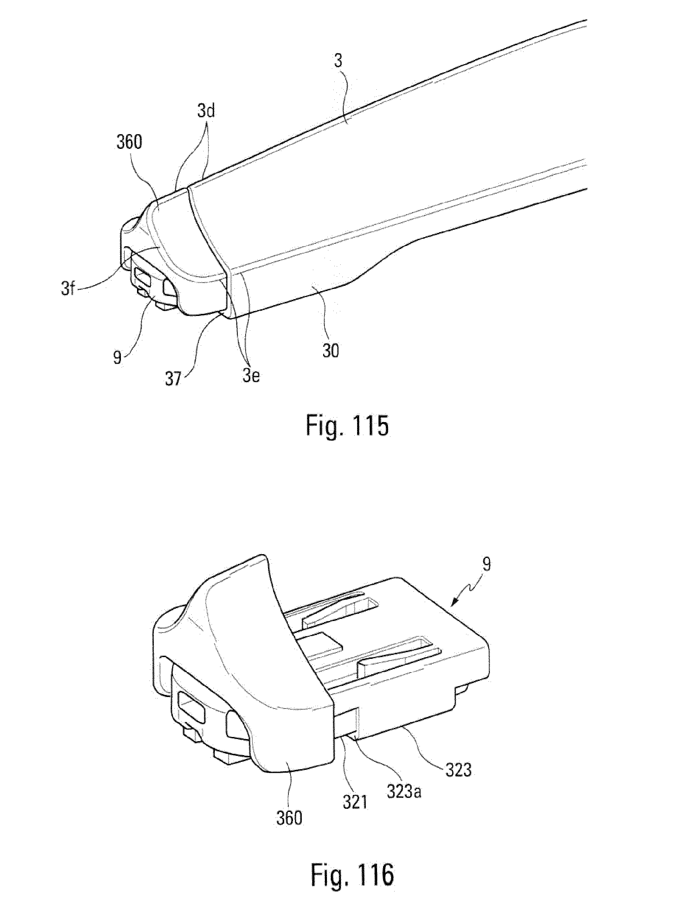

Les figures 115 et 116 représentent une variante de réalisation de l'aspect de l'invention décrit dans ce qui précède en relation avec les figures 79 à 81d.

La description qui précède, faite en référence aux figures 79 à 81d, s'applique donc à cette variante dans la mesure où elle ne contredit pas ce qui suit.

Un second déflecteur est ici porté par chaque embout d'extrémité 9 qui porte un élément de carénage 360. Cet élément de carénage 360 définit une partie d'extrémité libre du carénage du balai et remplace donc la partie d'extrémité libre du capot d'extrémité correspondant. L'élément de carénage 360 est donc identique à la partie d'extrémité libre du capot d'extrémité 3 décrit dans ce qui précède, et comprend une portion d'extrémité de l'arête sommitale 3d, une portion d'extrémité du bord longitudinal inférieur 3e de la paroi 3a du capot, ainsi que l'arête d'extrémité 3f qui relie l'arête 3d au bord 3e et qui définit un second déflecteur.

L'élément de carénage 360 peut être rapporté et fixé sur l'embout 9 ou formé d'une seule pièce avec ce dernier. L'embout 9 est similaire à celui décrit dans ce qui précède en référence aux figures 95a et 95b notamment. L'élément de carénage 360 est ici situé sur l'extrémité longitudinale de l'embout, opposée aux ouvertures des logements de l'embout.

Le capot d'extrémité 3 comprend des crochets de guidage 37, similaires à ceux décrits dans ce qui précède, qui coopèrent avec les pistes 321 de l'embout 9 qui s'étendent ici entre la surépaisseur 323 et l'élément de carénage 360. Les crochets 37 du capot 3 peuvent coopérer par butée d'une part avec les surfaces de butée 323a précitées et d'autre part avec des faces transversales en regard de l'élément de carénage 360.

## Revendications

1. Monture centrale (2) pour un balai plat caréné (1) d'essuie-glace, en particulier de véhicule, la monture ayant une forme allongée et comprenant des moyens (23) de fixation à une vertèbre (6) de rigidification du balai ou à un organe (7) de maintien de cette vertèbre, la monture comprenant en outre une fenêtre (21) configurée pour recevoir un adaptateur (5) de liaison du balai à un bras (10) d'entraînement dudit balai, **caractérisée en ce qu'**elle comporte un déflecteur dont une arête longitudinale supérieure (2d) s'étend sensiblement parallèlement et à distance d'un plan longitudinal médian (P1) sensiblement vertical de la fenêtre et/ou d'un plan longitudinal médian sensiblement vertical des moyens de fixation.

2. Monture (2) selon la revendication 1, **caractérisée en ce qu'**elle comprend deux parois latérales longitudinales (2a, 2b), un bord longitudinal d'une première de ces parois latérales étant relié à un bord longitudinal d'une seconde de ces parois latérales de façon à former ladite arête (2d) du déflecteur.

3. Monture (2) selon la revendication 2, **caractérisée en ce que** lesdites parois latérales (2a, 2b) forment sensiblement un dièdre au moins au niveau des extrémités longitudinales de la monture.

4. Monture (2) selon l'une des revendications précédentes, **caractérisé en ce qu'**elle comprend à chacune de ses extrémités longitudinales des moyens (4, 41) de liaison à un capot d'extrémité (3) du balai.

5. Monture (2) selon la revendication 4, en dépendance de la revendication 2 ou 3, **caractérisée en ce que** les moyens de liaison (4, 41) s'étendent depuis des parois transversales (2c) de liaison desdites parois latérales longitudinales (2a, 2b).

6. Monture (2) selon la revendication 4 ou 5, **caractérisée en ce que** les moyens de liaison sont des moyens d'articulation (4, 41).

7. Monture (2) selon la revendication 6, **caractérisée en ce qu'**elle comprend à chacune de ses extrémités longitudinales un doigt en saillie (4) portant un axe d'articulation ou comportant un orifice (41) configuré pour être traversé par un axe d'articulation (31).

8. Monture (2) selon la revendication 7, **caractérisée en ce que** chaque doigt (4) a un axe d'allongement s'étendant dans un plan longitudinal (P3) qui est sensiblement perpendiculaire audit axe d'articulation (31) correspondant et qui passe sensiblement par ladite arête (2d).

9. Monture (2) selon la revendication 7 ou 8, **caractérisée en ce que** chaque doigt (4) a une forme générale sensiblement parallélépipédique.

10. Ensemble comportant une monture (2) selon l'une des revendications 1 à 9 et un capot d'extrémité (3).

11. Balai plat caréné (1) d'essuie-glace, en particulier de véhicule, comprenant une monture (2) selon l'une des revendications 1 à 9 ou un ensemble selon la revendication 10.
